# EUROPÄISCHE PATENTSCHRIFT

(11) **EP 1 424 830 B1**
(45) Veröffentlichungstag und Bekanntmachung des Hinweises auf die Patenterteilung: **27.12.2006**
(21) Anmeldenummer: 03104020.7
(22) Anmeldetag: 29.10.2003
(51) Int. Cl.: H04L 29/06

(54) **Verfahren zum Bereitstellen von Präsenzinformationen mindestens einer Kommunikationseinheit auf mindestens einem Präsenzserver, zugehörige Kommunikationseinheit, Präsenzserver sowie Kommunikationsnetz**
Method of preparing presence information by at least one communication unit in at least one presence server, corresponding communication unit, presence server, as well as communication network
Procédé permettant de préparer des informations de présence par au moins une unité de communication dans au moins un serveur de présence, correspondants unité de communication, serveur de présence, ainsi que réseau de communication

(30) Priorität: 29.11.2002 DE 10255920
(43) Veröffentlichungstag der Anmeldung: 02.06.2004
(73) Patentinhaber: SIEMENS AKTIENGESELLSCHAFT, 80333 München (DE)
(72) Erfinder: Beckmann, Mark, 38124 Braunschweig (DE); Choi, Hyung-Nam, 22117 Hamburg (DE); Eckert, Michael, 38122 Braunschweig (DE); Hans, Martin, 31139 Hildesheim (DE); Laumen, Josef, 31142 Hildesheim (DE); Van Niekerk, Sabine, 38228 Salzgitter (DE)

(56) Entgegenhaltungen:
- WO-A-02/43351
- WO-A-02/096128
- US-A1- 2002 126 701
- KANTER T G: "Extensible mobile presence" MOBILE AND WIRELESS COMMUNICATIONS NETWORK, 2002. 4TH INTERNATIONAL WORKSHOP ON SEP. 9-11, 2002, PISCATAWAY, NJ, USA,IEEE, 9. September 2002 (2002-09-09), Seiten 661-664, XP010611931 ISBN: 0-7803-7605-6

## Beschreibung

Die Erfindung betrifft ein Verfahren zum Bereitstellen mindestens eines Präsenzinformationsprofils aus einer Vielzahl von Präsenzinformationen mindestens einer Kommunikationseinheit auf mindestens einem Präsenzserver (PS1) eines Kommunikationsnetzes, von dem aus dieses Präsenzinformationsprofil für eine oder mehrere andere Kommunikationseinheiten abruf- und/oder weiterleitbar ist, indem von der jeweiligen, Präsenzinformationen verfügbar machenden Kommunikationseinheit an den Präsenzserver zum dortigen Bereitstellen ihres Präsenzinformationsprofils mindestens ein Steuersignal gesendet wird, das von dieser Kommunikationseinheit selbst aus einer oder mehreren expliziten Anweisungen eines netzeinheitlich festgelegten Anweisungssatzes sowie aus einem oder mehreren Parametern eines zugehörigen, netzeinheitlich festgelegten Präsenzinformations-Parametersatzes generiert wird.

Z.B. bei der US 2002/0126701 A1 lädt ein Nutzer mittels einer Einladungsnachricht an einen zugeordneten, zentralen Server einen anderen Nutzer zum Austausch von Nachrichteninhalten ein. Dazu fordert der zentrale Server mittels einer Präsenzanfrage von demjenigen Präsenzinformations-Server, bei dem sich der eingeladene Nutzer zuvor schon registriert und Präsenzinformationen über seinen Kommunikationsstatus nutzerspezifisch, d.h. allein für sich, abgelegt hat, Präsenzinformationen über den eingeladenen Nutzer an. Der Präsenzinformations-Server überträgt daraufhin die bei ihm nutzerspezifisch abgespeicherte Präsenzinformation des eingeladenen Nutzers an den zentralen Server. Dieser entscheidet aufgrund der bei ihm über den eingeladenen Nutzer abgelegten Präsenzinformation, ob der zu übertragende Nachrichteninhalt vom einladenden Nutzers an den eingeladenen Nutzer übertragen, zwischengespeichert oder verweigert wird. Auf diese Weise wird im Präsenzinformationsserver also nur die Präsenzinformation des bezüglich des Nachrichtenaustauschs empfangsseitig eingeladenen Nutzers nutzerspezifisch für die Verbindung zum einladenden Nutzer abgelegt.

Die WO 02/096128 A2 gibt nur ganz allgemein an, dass sich der jeweilige Teilnehmer einzeln bei seinem zugeordneten Präsenzinformations-Server in einem IP Multimedia basierenden Funknetzwerk unter dortiger Bekanntgabe seiner Präsenzinformation registriert. Der Präsenzinformations-Server macht dabei diese Präsenzinformation des jeweilig angemeldeten Teilnehmers für andere angemeldete Teilnehmer zugänglich.

Der Erfindung liegt die Aufgabe zugrunde, einen Weg aufzuzeigen, wie in einem Kommunikationsnetz für mindestens eine Kommunikationseinheit eine Vielzahl von Präsenzinformationen in flexiblerer und einfacherer Weise zum Abruf durch und/oder zur Weitergabe an eine oder mehrere andere Kommunikationseinheiten bereitgestellt werden kann. Diese Aufgabe wird durch das erfindungsgemäße Verfahren der eingangs genannten Art dadurch gelöst, dass in den Präsenzinformations-Parametersatz des jeweiligen Steuersignals mindestens eine Liste von ein oder mehreren Gruppen von Kommunikationseinheiten aufgenommen wird, für die die im Steuersignal übermittelten Parameter auf dem Präsenzserver mittels der ein oder mehreren im Steuersignal übermittelten Anweisungen gruppenspezifisch erstellt, geändert, und/oder gelöscht werden.

Auf diese Weise ist es ermöglicht, dass jede Kommunikationseinheit im Kommunikationsnetz von sich aus, d.h. selbständig, individuell bzw. spezifisch zum Abruf durch und/oder zum Weiterleiten an eine andere Kommunikationseinheit oder mehrere andere Kommunikationseinheiten eine Vielzahl von Präsenzinformationen auf mindestens einem Präsenzserver gruppenspezifisch bereitstellen, d.h. anlegen, verändern, und/oder löschen kann. Durch die Verwendung eines netzeinheitlich festgelegten Anweisungs- und Präsenzinformations-Parametersatzes wird zudem ein standardisierter Weg zur gruppenspezifischen Aktualisierung von Profilen einer Vielzahl von Präsenzinformationen von ein oder mehreren Gruppen von Kommunikationseinheiten auf einem zugeordneten Präsenzserver zur Verfügung gestellt. Somit ist z.B. selbst bei unterschiedlichen Dienstanbietern bzw. Providern Kompatibilität hinsichtlich der Informationsbereitstellung von Präsenzinformationen durch providerspezifische Kommunikationseinheiten ermöglicht.

Insbesondere ist es nicht erforderlich, dass der jeweilige Dienst-Anbieter für seinen Dienst eine eigene, speziell für ihn entwickelte Softwareprozedur und entsprechende Signalisierung verwendet. Denn es wird ein einheitliches, gruppenspezifisches Erstellungs-, Aktualisierungs-, und Löschungsverfahren für Präsenzinformationen netzwerkeinheitlich bereitgestellt, welches jeweils von unterschiedlichsten Kommunikationsgeräten verwendet werden kann. Weiterhin ist es insbesondere auch nicht erforderlich, dass die Prozedur, welche einen derartigen Präsenzinformations- Dienst bzw. -Service auf einem Kommunikationsgerät zur gruppenspezifischen Erstellung, Aktualisierung, und/oder Löschung dessen Präsenzinformationen auf einem zugeordneten Präsenzserver ermöglicht, von dem jeweiligen Dienst-Anbieter selber zur Verfügung gestellt wird.

Die Erfindung betrifft auch eine Kommunikationseinheit, einen Präsenzserver sowie ein Kommunikationsnetz, welche jeweils derart ausgebildet sind, dass eine Vielzahl von Präsenzinformationen nach dem erfindungsgemäßen Verfahren bereitstellbar ist.

Gemäß einer zweckmäßigen Weiterbildung der Erfindung werden mit dem jeweiligen Steuersignal lediglich zu aktualisierende bzw. zu ändernde Präsenzinformations-Parameter zum Präsenzserver mitübertragen und nicht unverändert gebliebene Parameter. Da in vorteilhafter Weise von der jeweiligen Kommunikationseinheit lediglich diejenigen Präsenzinformations-Parameter an den jeweilig zugeordneten Präsenzserver übertragen werden, die jeweils in deren Präsenzinformationsprofil auf dem Präsenzserver aktuell zu ändern bzw. modifizieren sind, wird eine aufwendige Verwaltung von Präsenzinformationen in der Kommunikationseinheit selbst weitgehend vermieden. Ist die jeweilige Kommunikationseinheit beispielsweise in einer Mobilstation eines Funkkommunikationsnetzes implementiert, so kann deren funktionaler Aufwand gering gehalten werden. Weiterhin werden überflüssige Übertragungen zwischen der jeweiligen Kommunikationseinheit und dem jeweilig zugeordneten Präsenzserver weitgehend vermieden, da unverändert gebliebene Präsenzinformationen nicht durch ein Steuersignal eigens übertragen werden. Dies spart Netzressourcen ein, was insbesondere auf der Luftschnittstelle von Funkkommunikationssystemen von Vorteil ist.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

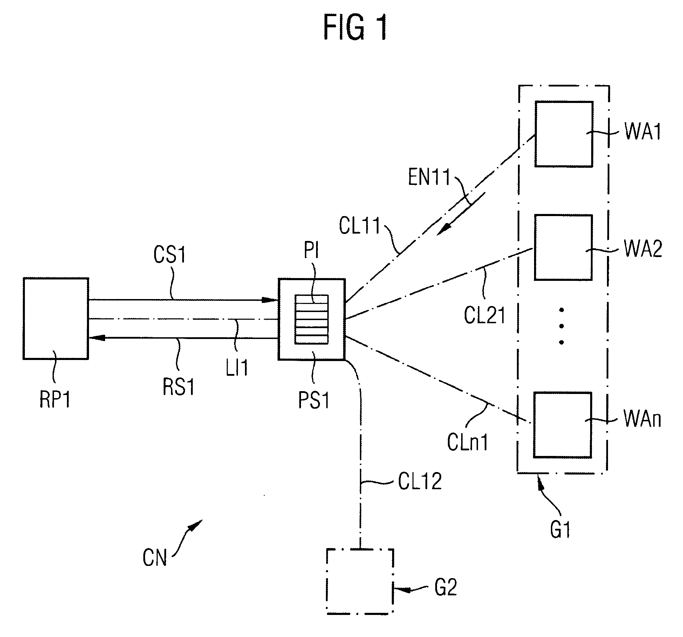

- Figur 1: in schematischer Darstellung ein Kommunikationsnetz mit Netzwerkkomponenten zur Durchführung des erfindungsgemäßen Verfahrens,

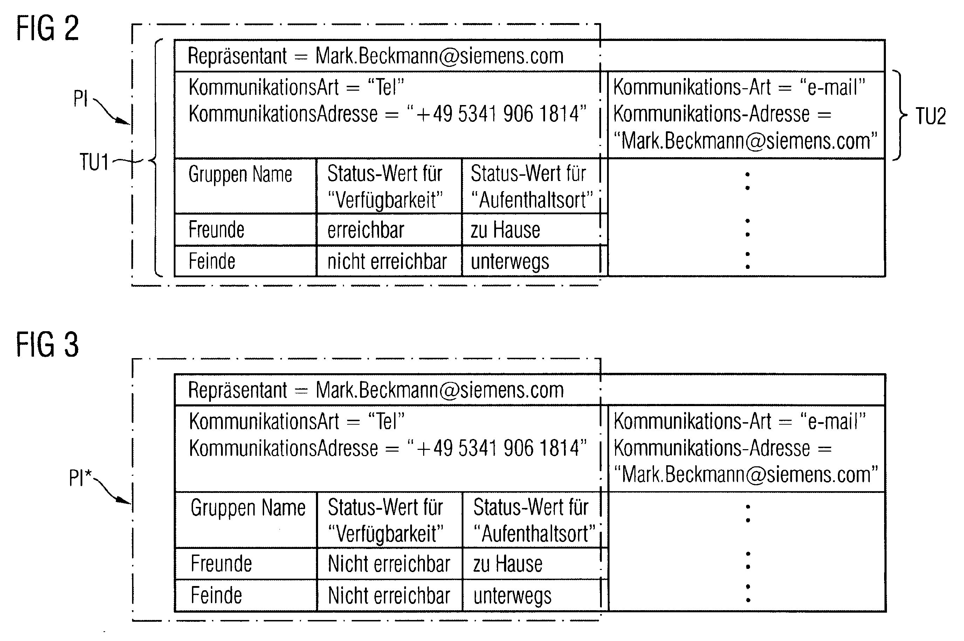

- Figur 2: beispielhaft ein erstes Präsenzinformationsprofil für eine Kommunikationseinheit des Kommunikationsnetzes nach Figur 1 auf deren zugeordnetem Präsenzserver,
- Figur 3: beispielhaft ein gegenüber Figur 2 geändertes Präsenzinformationsprofil für dieselbe Kommunikationseinheit wie in Figur 1 bzw. 2 nach Durchführung des erfindungsgemäßen Verfahrens,

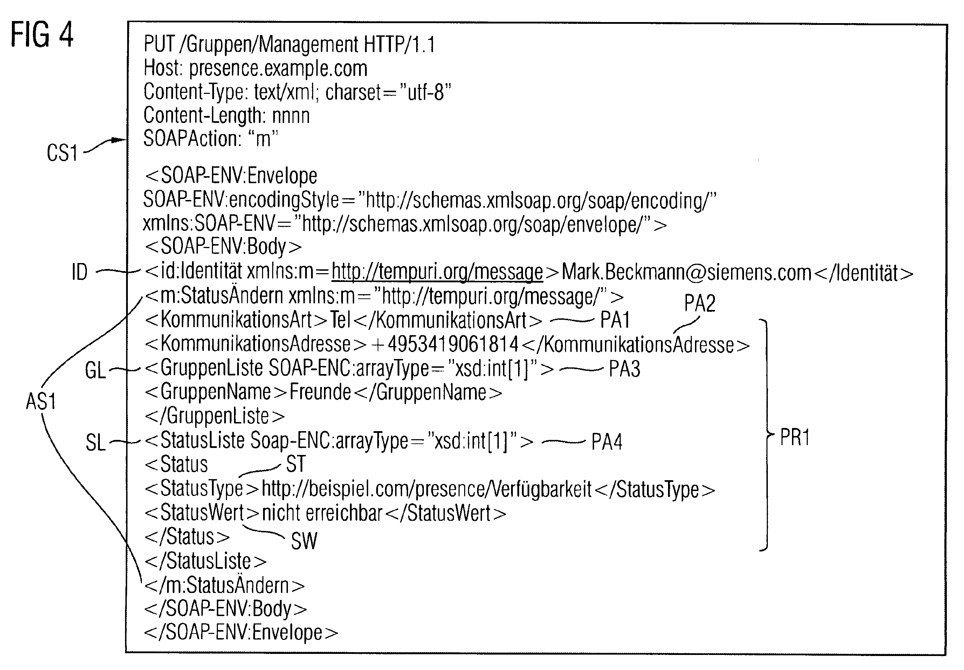

- Figur 4: beispielhaft ein Steuersignal, das von der Kommunikationseinheit von Figur 1 zur Änderung ihres Präsenzinformationsprofils von Figur 2 in das Präsenzinformationsprofil von Figur 3 aus einem netzeinheitlich festgelegten Anweisungssatz und aus lediglich zu ändernden Parametern eines netzeinheitlich festgelegten Präsenzinformations-Parametersatzes mit Hilfe eines SOAP-Protokolls (Simple Object Access Protocol) generiert und mit Hilfe des HTTP Protokolls (Hyper Text Transport Protocol) an den zugeordneten Präsenzserver des Kommunikationsnetzes von Figur 1 gesendet wird,

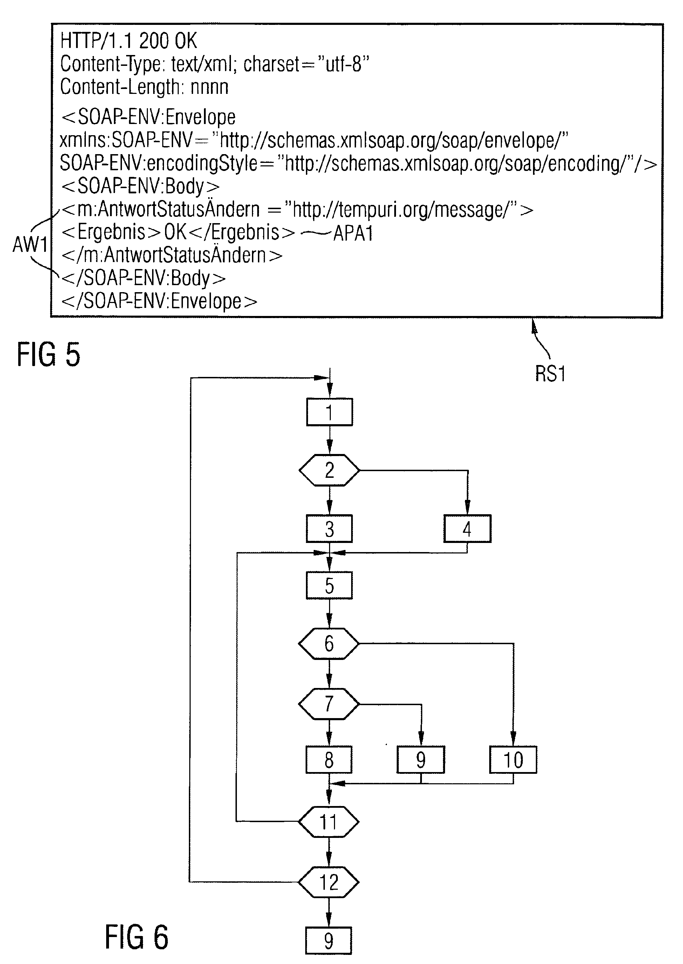

- Figur 5: beispielhaft als Reaktion auf das Steuersignal nach Figur 4 ein Antwortsignal, das vom Präsenzserver des Kommunikationsnetzes nach Figur 1 an die das Steuersignal ursprünglich sendende Kommunikationseinheit zurückübermittelt wird,
- Figur 6: in schematischer Darstellung ein Ablaufdiagramm zur Veranschaulichung einer ersten, vorteilhaften Ausführungsvariante zum Bereitstellen und/oder Aktualisieren einer Vielzahl von Präsenzinformationen mindestens einer Kommunikationseinheit auf mindestens einem zugeordneten Präsenzserver des Kommunikationsnetzes nach Figur 1 unter Verwendung des Steuersignals von Figur 4 und des Antwortsignals von Figur 5,

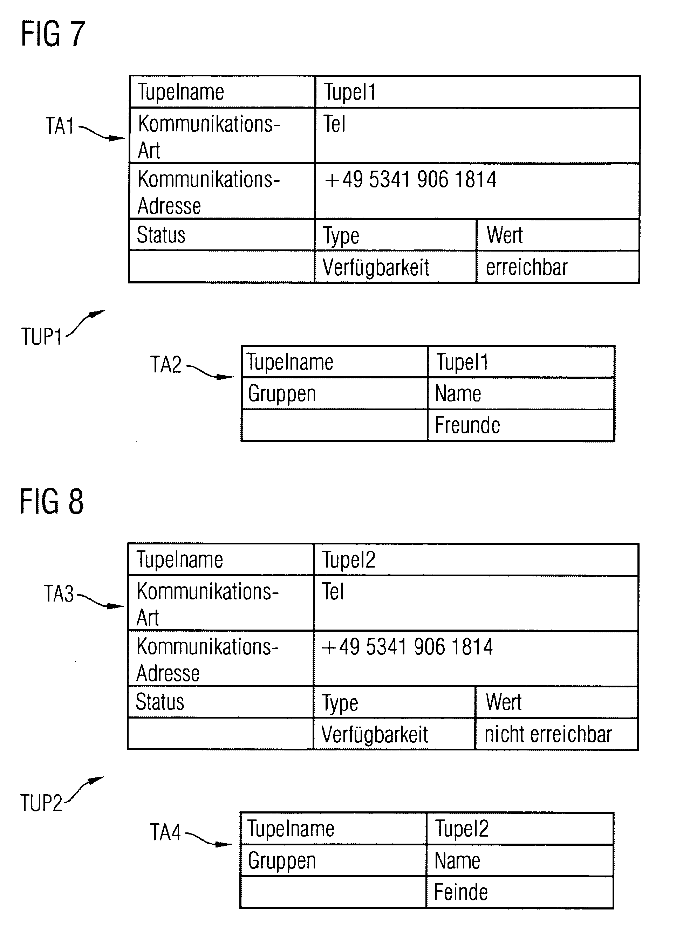

- Figuren 7, 8: zwei verschiedene Tupelstrukturen von Präsenzinformationen, die nach einer zweiten, vorteilhaften Ausführungsvariante des erfindungsgemäßen Verfahrens von mindestens einer Kommunikationseinheit des Kommunikationsnetzes nach Figur 1 selbst erstellt und an mindestens einen zugeordneten Präsenzserver - wie z.B. den Präsenzserver von Figur 1 - übermittelt werden, von wo aus sie für eine oder mehrere andere Kommunikationseinheiten abrufoder weiterleitbar sind,

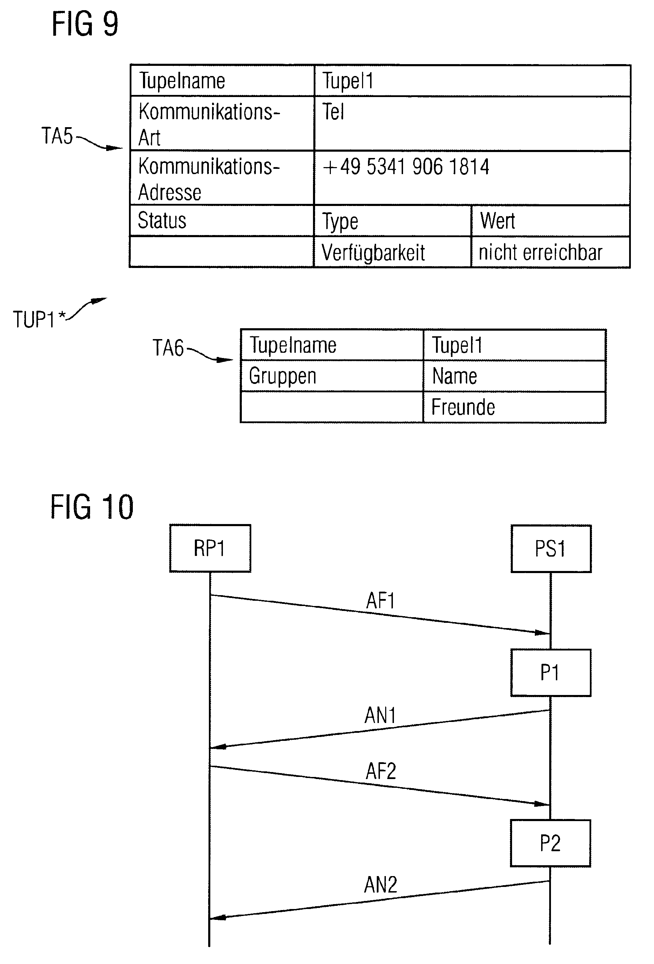

- Figur 9: eine gegenüber Figur 7 geänderte Tupelstruktur, die die Kommunikationseinheit nach Figur 1 zur Aktualisierung ihrer Präsenzinformationen erzeugt und an den Präsenzserver zur dortigen Bereitstellung überträgt,
- Figur 10: in schematischer Darstellung einen Übermittlungs-/Antwortmechanismus zur Übertragung der veränderten Tupelstruktur nach Figur 9 von der Präsenzinformationen bereitstellenden Kommunikationseinheit nach Figur 1 an deren zugeordneten Präsenzserver,

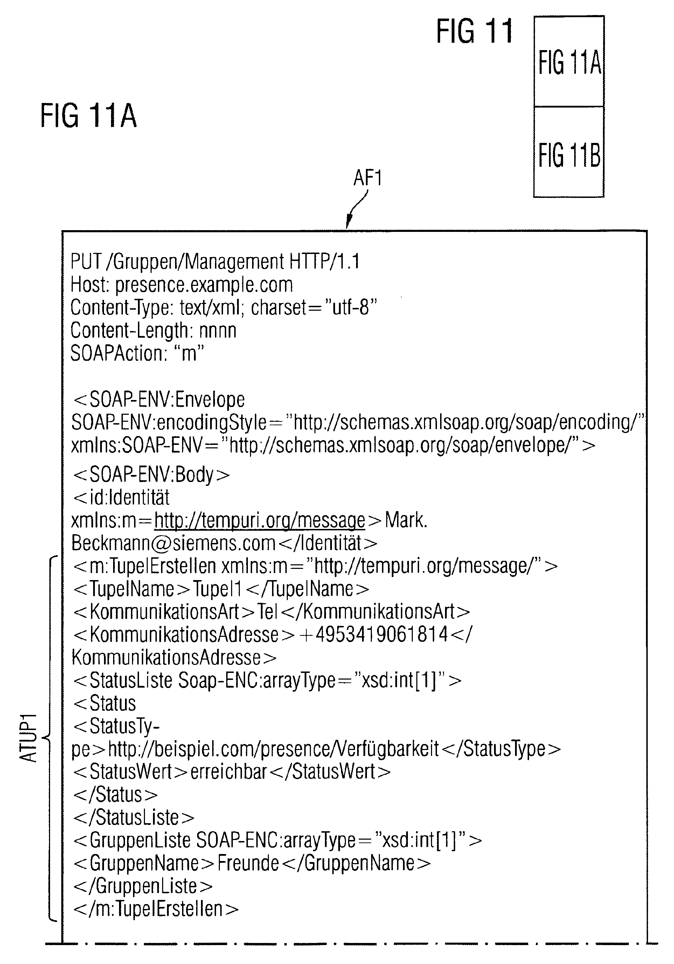

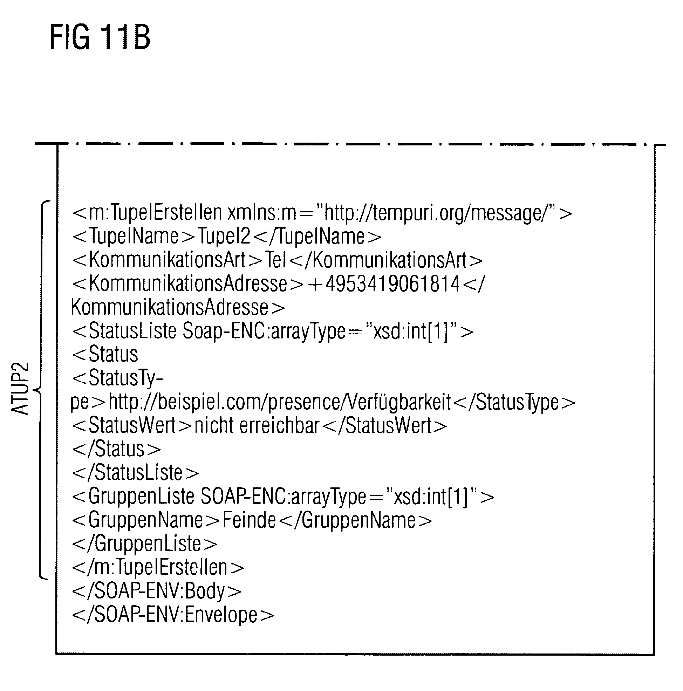

- Figur 11: zusammengesetzt aus Figurenteilen 11A und 11B beispielhaft ein Steuersignal im SOAPFormat (Simple Object Access Protocol), mit dessen Hilfe die von der Kommunikationseinheit erzeugten Tupelstrukturen der Figuren 7, 8 an den zugeordneten Präsenzserver zur dortigen Bereitstellung nach dem Signalisierungsschema von Figur 10 gesendet werden,

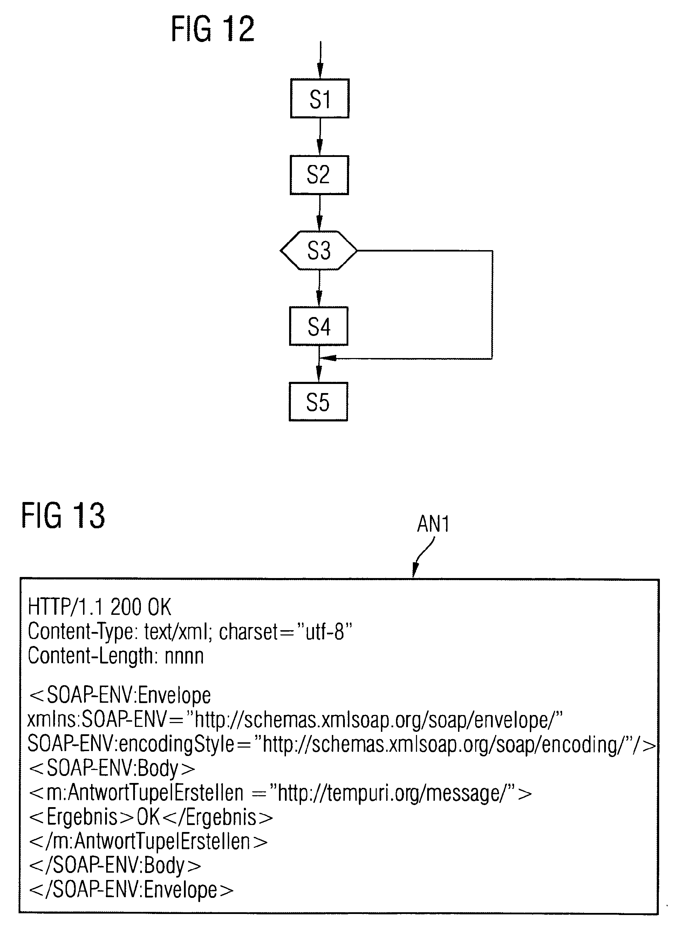

- Figur 12: in schematischer Darstellung den Ablauf einer Prozedur zur Auswertung des Steuersignals nach Figur 11 auf dem Präsenzserver, durch die ein Präsenzinformationsprofil für die Kommunikationseinheit nach Figur 1 in Form der beiden Tupelstrukturen nach den Figuren 7, 8 erzeugt wird,
- Figur 13: beispielhaft als Reaktion auf das Steuersignal nach Figur 11 ein Antwortsignal, das vom Präsenzserver des Kommunikationsnetzes nach Figur 1 an die das Steuersignal ursprünglich sendende Kommunikationseinheit nach dem Signalisierungsschema von Figur 10 zurückübermittelt wird,

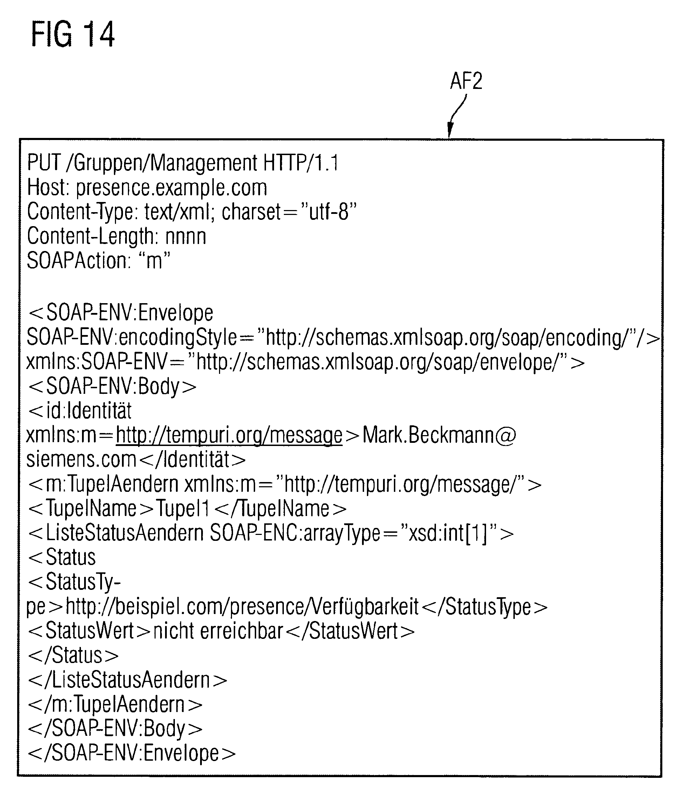

- Figur 14: ein weiteres Steuersignal im SOAP-Format (Simple Object Access Protocol) bei der Durchführung des Übermittlungs-/Antwortmechanismus nach Figur 10, mit dessen Hilfe die durch die Kommunikationseinheit geänderte Tupelstruktur von Figur 9 mit Hilfe des HTTP Protokolls (Hyper Text Transport Protocol)an deren zugeordneten Präsenzserver zur dortigen Weiterverarbeitung gesendet wird,

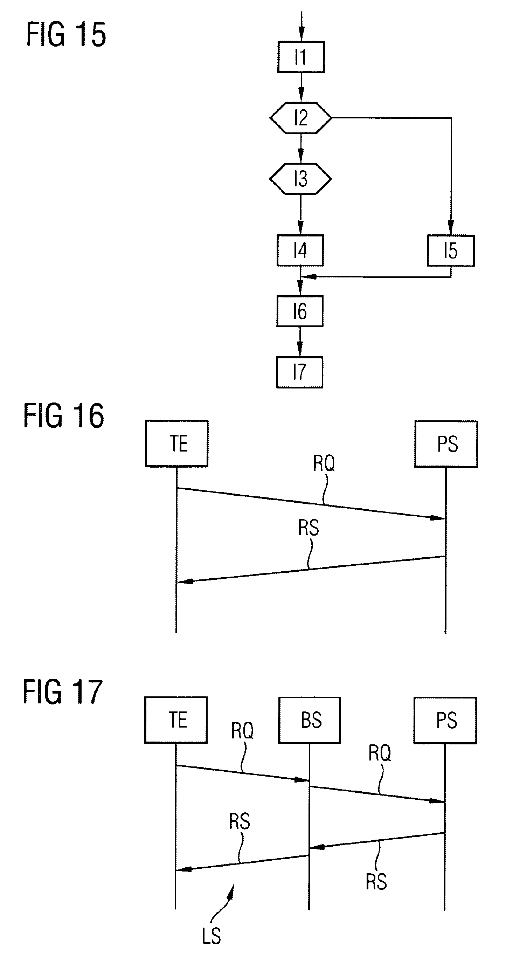

- Figur 15: in schematischer Darstellung den Ablauf einer Prozedur zur Auswertung des Steuersignals nach Figur 14 auf dem Präsenzserver, wodurch dort eine Bereitstellung, insbesondere Aktualisierung, des Präsenzinformationsprofils für die Kommunikationseinheit nach Figur 1 in Form der Tupelstruktur nach Figur 9 durchgeführt wird,
- Figur 16: in schematischer Darstellung ein Signalisierungsschema zwischen einer Kommunikationseinheit und einem Präsenzserver eines Kommunikationsnetzes zur Durchführung einer weiteren Variante des erfindungsgemäßen Verfahrens, nach der mit Hilfe eines Gruppensteuersignals der Kommunikationseinheit ein Gruppenmanagement von Präsenzinformationen auf dem Präsenzserver durchgeführt wird,
- Figur 17: das Signalisierungsschema nach Figur 16 abgewandelt für ein Funkkommunikationsnetz,

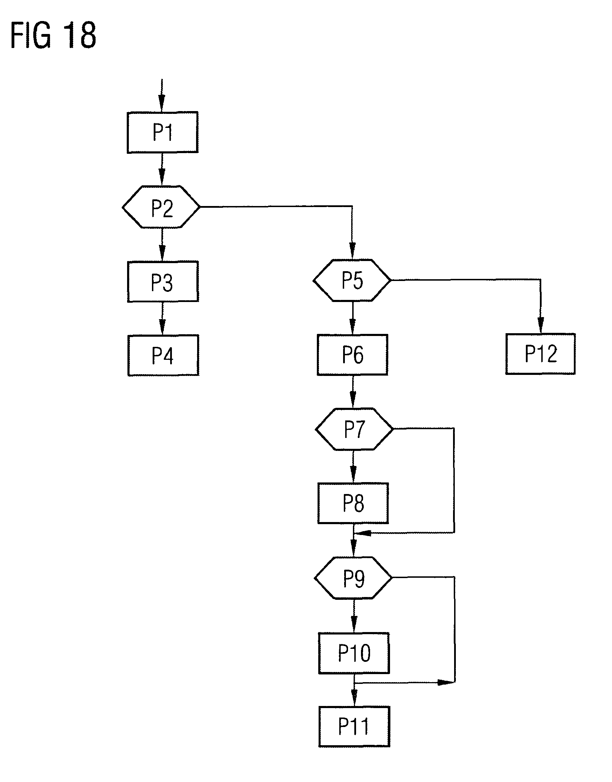

- Figur 18: in schematischer Darstellung den Ablauf einer Prozedur zur Auswertung des Steuersignals nach Figur 16 oder 17 auf dem Präsenzserver, wodurch dort für mindestens eine vorgebbare Gruppe von Präsenzinformationen abrufenden Kommunikationseinheiten eine Bereitstellung, insbesondere Aktualisierung, des Präsenzinformationsprofils für die Präsenzinformationen verfügbar machenden Kommunikationseinheit nach Figur 1 durchgeführt wird,

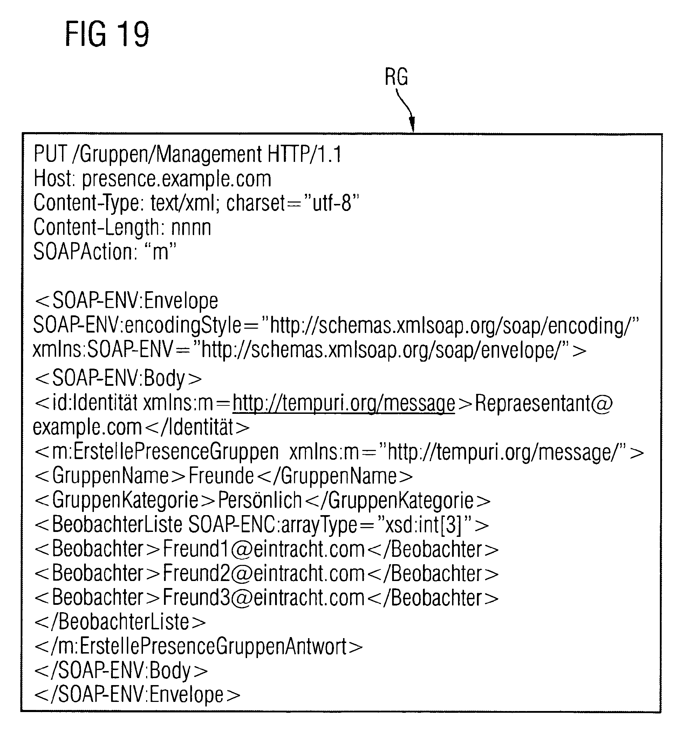

- Figur 19: beispielhaft den Aufbau eines Steuersignals, das von der Kommunikationseinheit von Figur 16 oder 17 zur gruppenweisen Änderung ihres Präsenzinformationsprofils aus einem netzeinheitlich festgelegten Anweisungssatz und zu ändernden Parametern eines netzeinheitlich festgelegten PräsenzinformationsParametersatzes mit Hilfe eines SOAP-Protokolls (Simple Object Access Protocol) generiert und mit Hilfe des HTTP Protokolls (Hyper Text Transport Protocol) an den zugeordneten Präsenzserver des Kommunikationsnetzes von Figur 16 oder 17 gesendet wird,

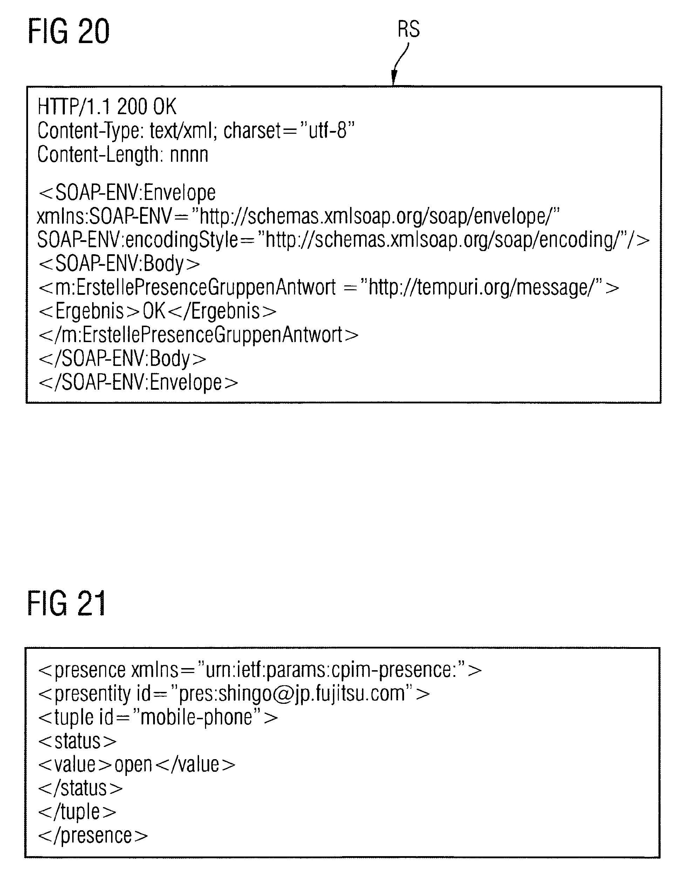

- Figur 20: beispielhaft als Reaktion auf das Steuersignal nach Figur 19 ein Antwortsignal, das vom Präsenzserver des Kommunikationsnetzes nach Figur 16 oder 17 an die das Steuersignal ursprünglich sendende Kommunikationseinheit zurückübermittelt wird,
- Figur 21: schematisch ein Datenformat, das netzeinheitlich für eine weitere Variante des erfindungsgemäßen Verfahrens verwendet wird, um eine beobachtende Kommunikationseinheit über den Präsenzstatus einer Präsenzinformationen bereitstellenden Kommunikationseinheit zu informieren,

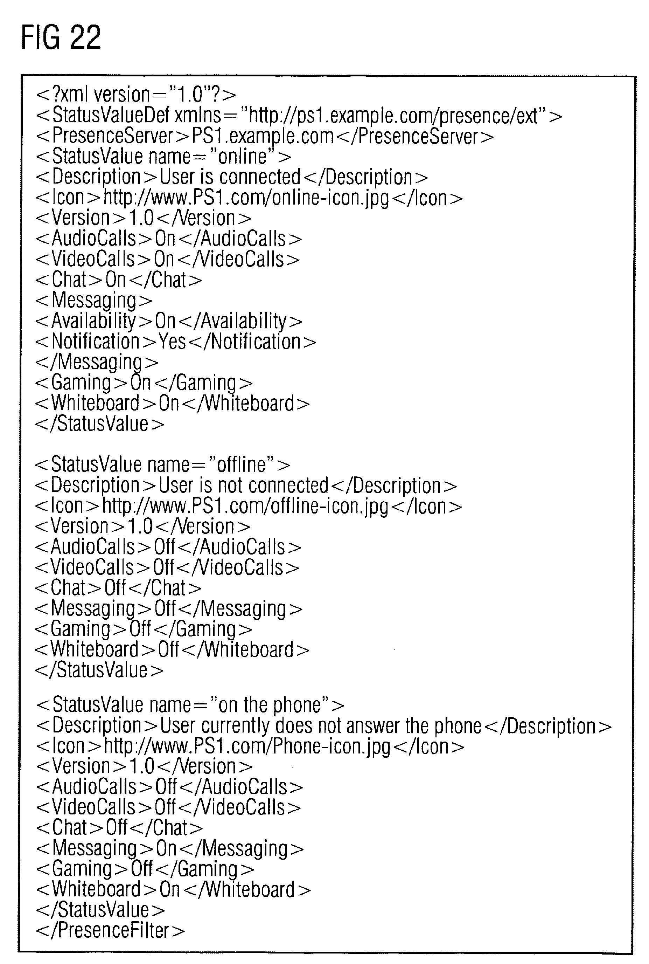

- Figur 22: beispielhaft eine erste Präsenzinformationsprofil-Definition festen Formats zur vorteilhaften Bereitstellung von verschiedenen Präsenzinformations- Parametern mit ihren zugehörigen Statuswerten auf mindestens einem ersten Präsenzserver eines Kommunikationsnetzes, an den eine Präsenzinformationen abrufende Kommunikationseinheit angekoppelt ist,

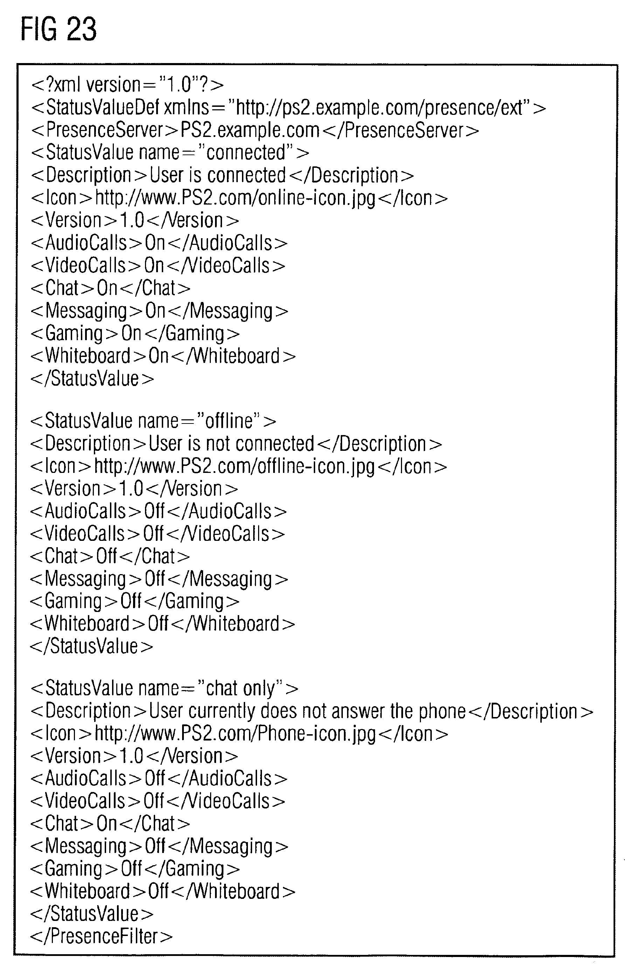

- Figur 23: beispielhaft eine zweite Präsenzinformationsprofil-Definition festen Formats zur vorteilhaften Bereitstellung von verschiedenen Präsenzinformations- Parametern mit ihren zugehörigen Statuswerten auf mindestens einem zweiten Präsenzserver eines Kommunikationsnetzes, an den eine Präsenzinformationen verfügbar machende Kommunikationseinheit angekoppelt ist,

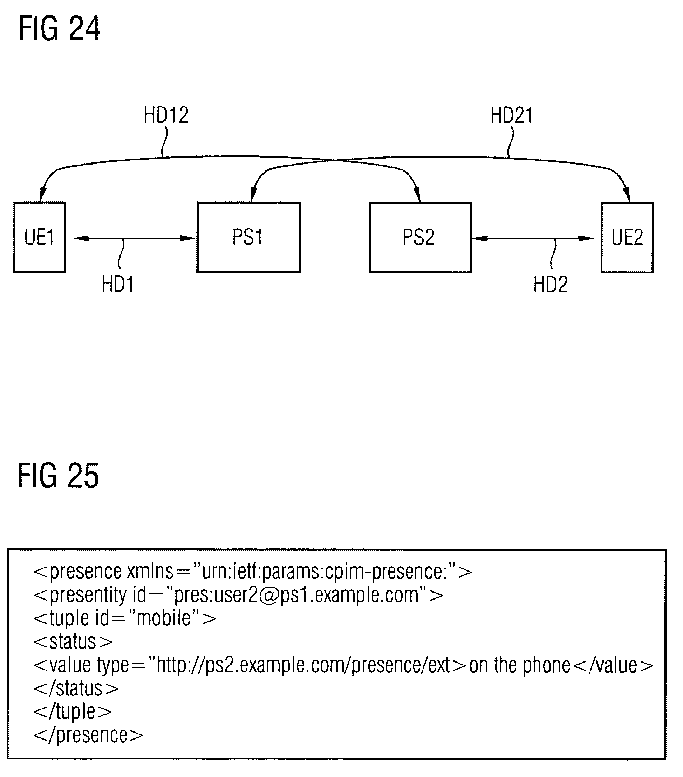

- Figur 24: beispielhaft das Herunterladen der ersten und der zweiten Präsenzinformationsprofil-Definition der Figuren 22 und 23 vom ersten und zweiten Präsenzserver an die Präsenzinformationen abrufende Kommunikationseinheit und die Herstellung der Kompatibilität zwischen diesen beiden Präsenzinformationsprofil-Definitionen nach einer weiteren Variante des erfindungsgemäßen Verfahrens, und
- Figur 25: eine Präsenzinformation, die nach dem Herunterladen und der Kompatibilitätsherstellung der PräsenzinformationsparameterDefinitionen von der Präsenzinformationen verfügbar machenden Kommunikationseinheit von Figur 24 an die Präsenzinformationen abrufenden Kommunikationseinheit von Figur 24 übermittelt wird.

Elemente mit gleicher Funktion und Wirkungsweise sind in den Figuren 1 mit 25 jeweils mit denselben Bezugszeichen versehen.

Figur 1 zeigt in schematischer Darstellung die prinzipielle Vernetzung zwischen einer Kommunikationseinheit RP1 und einem Präsenzserver PS1 über eine Kommunikationsverbindung LI1 innerhalb der Netzstruktur eines Kommunikationsnetzes CN, um für diese Kommunikationseinheit RP1 eine Vielzahl von Präsenzinformationen in Form eines Präsenzinformationsprofils PI auf diesem Präsenzserver PS1 für ein oder mehrere andere Kommunikationseinheiten abrufbar und/oder weiterleitbar zu halten. Solche weiteren Kommunikationseinheiten, an die als Adressaten das Präsenzinformationsprofil PI der Kommunikationseinheit RP1 zum Abruf und/oder Weiterleiten gerichtet ist, sind in der Figur 1 mit WA1 bis WAn bezeichnet. Sie sind jeweils über spezifische Kommunikationsverbindungen wie z.B. CL11 mit CLn1 separat an den Präsenzserver PS1 angekoppelt. Von diesem können die Kommunikationseinheiten WA1 mit WAn das dort gespeicherte, aktuelle Präsenzinformationsprofil PI der individuell Präsenzinformationen verfügbar machenden Kommunikationseinheit RP1 bei Bedarf abfragen. Das Präsenzprofil PI für die Kommunikationseinheit RP1 enthält dabei eine Vielzahl von Präsenzinformations-Angaben bzw. - Parametern.

Unter Präsenzserver wird dabei im Rahmen der Erfindung vereinfacht ausgedrückt eine Speichereinrichtung verstanden, auf der Präsenzinformationsdaten einer Vielzahl von Kommunikationseinheiten abgespeichert und zum Abruf und/oder Weiterleiten an andere Kommunikationseinheiten bereitgehalten werden können. Dieser Präsenzserver kann dabei sowohl als eigenständige Baueinheit im Kommunikationsnetz vorgesehen als auch in einer bereits vorhandenen Netzwerkkomponente integriert sein.

Insbesondere kann das Kommunikationsnetz als Funkkommunikationsnetz wie z.B. nach dem GSM-(global system for mobile communcation) oder UMTS-Standard (universal mobile telecommuncations system) ausgebildet sein. Die jeweilige Kommunikationseinheit ist dann vorzugsweise durch ein Funkkommunikationsgerät, insbesondere mobiles Funkteilnehmergerät gebildet, das über eine Luftschnittstelle mit der Basisstation seiner momentanen Aufenthaltsfunkzelle mit den Infrastrukturkomponenten des Funkkommunikationsnetzes kommuniziert. Dabei umfasst die jeweilige Kommunikationsverbindung wie z.B. LI1 von der Präsenzinformationen verfügbar machenden Kommunikationseinheit wie z.B. RP1 zum Präsenzserver wie z.B. PS1 sowie die jeweilige Kommunikationsverbindung wie z.B. CL11 zur jeweiligen, diese Präsenzinformationen abrufenden Kommunikationseinheit wie z.B. WA11 eine Funkübertragungs- bzw. Luftschnittstelle.

Im Rahmen der Erfindung wird unter dem Begriff Kommunikationseinheit allgemein ausgedrückt zum einen ein Terminal bzw. Teilnehmergerät verstanden, dem eine eindeutige Adressierung zum Senden und/oder Empfangen zuordenbar ist. Zum anderen kann die jeweilige Kommunikationseinheit auch durch eine sonstige eindeutige Adresskennung oder spezifische Identifikation für einen Nutzer charakterisiert sein. Gegebenenfalls können somit ein oder mehrere Kommunikationseinheiten jeweils auch auf demselben Terminal bzw. Teilnehmergerät vorhanden sein. Das jeweilige Terminal bzw. Teilnehmergerät kann insbesondere durch ein Funkkommunikationsgerät, einen Computer mit Funknetz- und/oder Festnetzanschluss, oder durch eine sonstige Gerätekomponente mit Zugang zu einem Kommunikationsnetz gebildet sein.

Insbesondere kann das Präsenzinformationsprofil wie z.B. PI von Figur 2 der jeweiligen Kommunikationseinheit wie z.B. RP1 von Figur 1 durch folgendes Tableau von Präsenzinformations-Parametern gebildet sein:
- mögliche Kommunikationsarten, wie z.B. Festnetztelefon, E-Mail, Mobilfunktelefon, Fax, usw., über die die Präsenzinformationen bereitstellende Kommunikationseinheit erreichbar ist und/oder Nachrichten versenden kann;
- zugehörige Kommunikationsadressen wie z.B. in Form von Telefonnummern, Faxnummern, E-mail- Adressen, usw. zu diesen Kommunikationsarten;
- optional mindestens eine Prioritätsliste, die die Rangfolge der Kommunikationsarten zur Annahme und/oder zum Absenden von Nachrichten festlegt;
- optional mindestens eine Gruppen-Kategorieliste, durch die die Präsenzinformationen bereitstellende Kommunikationseinheit ihre Präsenzinformationen für alle Gruppen der selben Kategorie auf dem Präsenzserver bereitstellen und aktualisieren kann;
- mindestens eine Gruppenliste, durch die die Präsenzinformationen bereitstellende Kommunikationseinheit ihre Präsenzinformationen gruppenspezifisch auf dem Präsenzserver bereitstellen und aktualisieren kann;
- mindestens eine Statusliste mit Statuseintragungen, insbesondere über die Verfügbarkeit bzw. Erreichbarkeit sowie den Aufenthaltsort der Kommunikationseinheit.

Figur 2 veranschaulicht ein Beispiel für einen solchen Satz bzw. ein solches Profil PI von Präsenzinformationen für die Kommunikationseinheit RP1. Zur Identifikation, von welcher Kommunikationseinheit dieser Präsenzinformations-Satz PI stammt, weist dieser im Kopffeld, d.h. als Anfangsdaten, einen bestimmten Repräsentanten-Namen als Identifikationsmerkmal auf, wie hier z.B. in Form der E-Mail-Adresse "mark.beckmann@siemens.com". Damit lässt sich das Präsenzinformationsprofil eines bestimmten Teilnehmers im Kommunikationsnetz CN von den Präsenzprofilen anderer Teilnehmer unterscheiden. Dem Teilnehmer mit dem Repräsentanten-Namen "mark.beckmann@siemens.com" sind im Präsenzinformationsprofil PI von Figur 2 aktuell die Kommunikationsart Telefon (= "Tel"), die zugehörige Kommunikationsadresse in Form der Telefonnummer "+4953419061814", sowie in Form einer Gruppenliste gruppenspezifische Statusinformationen über die Verfügbarkeit sowie den Aufenthaltsort dieses Teilnehmers für die beiden Gruppen "Freunde" sowie "Feinde" zugeordnet. Im einzelnen ist hier für die erste Gruppe "Freunde" der Statuswert für die Verfügbarkeit des Teilnehmers "mark.beckmann@siemens.com" auf "erreichbar" sowie der Statuswert für dessen Aufenthaltsort auf "zu Hause" gesetzt. Demgegenüber ist für die zweite Gruppe "Feinde", d.h. für Kommunikationseinheiten von Teilnehmern, mit denen keine Kommunikation gewünscht ist, der Statuswert "nicht erreichbar" für die Statusinformation Verfügbarkeit, sowie der Statuswert "unterwegs" für den Aufenthaltsort des Teilnehmers "mark.beckmann@siemens.com" eingetragen.

Dieser Block von Präsenzinformationen PI mit bestimmten Anfangswerten für die Kommunikationseinheit des jeweiligen Netzteilnehmers kann dabei vom jeweiligen Dienstanbieter bzw. Provider zentralisiert auf dem Präsenzserver PS1 abgespeichert worden sein. Dafür können insbesondere Standard-Präsenzinformations-Parameter ausgewählt werden, deren Werte dem jeweiligen Dienstanbieter sowieso aufgrund der Netzanmeldung des jeweiligen Teilnehmers bekannt sind. Auch lässt sich ein Anfangstableau bzw. -Profil von Präsenzinformations-Parametern in vorteilhafter Weise mit Platzhalterwerten für die Kommunikationseinheit des jeweiligen Netzteilnehmers auf dem jeweilig zugeordneten Präsenzserver erzeugen, die auf Erfahrungswerte oder sonstige in der Praxis gewonnene Standardwerte zurückgehen.

Ist ein solcher Block von Anfangs-Präsenzinformationen für die Kommunikationseinheit des jeweiligen Netzteilnehmers noch nicht auf dessen zugeordnetem Präsenzserver angelegt, so kann ein Erstellungsvorgang dafür insbesondere auch von der Kommunikätionseinheit des jeweiligen Teilnehmers selbst durch mindesten ein Steuersignal an den zugeordneten Präsenzserver eigens initiiert werden. In der Figur 1 sendet die Kommunikationseinheit RP1 ein Steuersignal CS1 über die Kommunikationsverbindung LI1 an den zugeordneten Präsenzserver PS1. Aufgrund dieses Steuersignals CS1 wird das Profil PI von Präsenzinformations-Parametern in mindestens einem Speicher des Präsenzservers PS1 generiert und dort abgespeichert.

In gleicher Weise wird von der jeweiligen Kommunikationseinheit ein entsprechendes Steuersignal an den zugeordneten Präsenzserver gesendet, wenn zwar bereits ein ihr zugeordnetes Präsenzinformationsprofil vorliegt, jedoch ein "update" bzw. eine Aktualisierung in Form einer Modifikation bzw. Veränderung, Ergänzung, Löschung, oder sonstigen Korrektur von ein oder mehreren Präsenzinformationsdaten innerhalb des bereits vorliegenden Profils gewünscht ist.

Um zu erreichen, dass auf dem jeweiligen Präsenzserver wie z.B. PS1 Präsenzinformationsprofile wie z.B. PI einer Vielzahl von Kommunikationseinheiten, die auch Teilnehmern verschiedener Dienstanbieter bzw. Provider zugehörig sein können, in derselben Art und Weise mit netzeinheitlich kompatiblen Inhalten angelegt, laufend aktualisiert bzw. verwaltet, d.h. modifiziert, und/oder ggf. wieder gelöscht werden können, wird zur Generierung des jeweiligen Steuersignals wie z.B. CS1 ein netzeinheitlich festgelegter Anweisungssatz sowie ein zugehöriger, netzeinheitlich festgelegter Präsenzinformations-Parametersatz verwendet. Unter Anweisungssatz werden dabei diejenigen Steuergrößen im jeweiligen Steuersignal verstanden, die dem Präsenzserver wie z.B. PS1 den Hinweis geben, nunmehr einen Aktualisierungs- bzw. Verwaltungsvorgang für im Steuersignal mit übermittelte, zu ändernde Präsenzinformations-Parameter zu starten, und diesen Aktualisierungsvorgang nach seiner Durchführung zu beenden. Die Steuerbefehle eines solchen Anweisungssatzes sind beispielhaft für das Steuersignal CS1 in der Figur 4 mit den Bezugszeichen AS1 gekennzeichnet. Das dortige Steuersignal ist mit Hilfe eines sogenannten SOAP-Protokolls (Simple Object Access Protocol) realisiert, welches über das HTTP Protokoll (Hyper Text Transport Protocol) transportiert wird. Der Anweisungssatz AS1 beginnt dabei mit der Anfangs-Befehlszeile "<m:StatusÄndern xmlns:m="http://tempuri.org/message/">" und wird durch die Befehlszeile "</m:StatusÄndern>" am Ende abgeschlossen. Aufgrund dieser Anfangszeile des Anweisungssatzes AS1 des Steuersignals CS1 löst der Präsenzserver PS1 einen Administrationsvorgang aus, durch den die nach der Anfangszeile des Anweisungssatzes AS1 folgenden Informationselemente als Präsenzinformations-Parameter, wie z.B. PA1 mit PA4, erkannt und zum Anlegen, Aktualisieren, und/oder Löschen des für die Kommunikationseinheit RP1 spezifischen Profils von Präsenzinformationen PI auf dem Präsenzserver PS1 abgearbeitet werden. Der von den Steuerbefehlen des Anweisungssatzes AS1 umklammerte Block von Präsenzinformations-Parametern PA1 mit PA4 ist in der Figur 4 mit PR1 bezeichnet. In diesem Präsenzinformations-Block bzw. -Satz PR1 des Steuersignals CS1 werden dem Präsenzserver PS1 vorzugsweise folgende Parameter bzw. Eingabegrößen für den durch den Anweisungssatz AS1 aufgerufenen Bereitstellungsvorgang - hier im Ausführungsbeispiel insbesondere aufgerufenen Aktualisierungsvorgang - im Steuersignal CS1 mitgeliefert:

Der Präsenzinformations-Parameter PA1 bezeichnet die Kommunikationsart, der Präsenzinformations-Parameter PA2 die zu dieser Kommunikationsart zugehörige Kommunikationsadresse. Der Parameter PA3 ist durch eine Gruppenliste GL gebildet, die hier im Ausführungsbeispiel die Gruppe "Freunde" spezifisch anspricht bzw. auswählt. Im nachfolgenden, vierten Parameter PA4 ist für diese Gruppe "Freunde" durch eine Statusliste SL für den Statustyp ST (="Verfügbarkeit") der Statuswert SW mit "nicht erreichbar" eingetragen bzw. spezifiziert. Anstelle der Gruppenliste (PA3) kann außerdem ein Parameter enthalten sein, der angibt, für welche Gruppenkategorien die Statusinformationen geändert werden sollen. Falls dieser Parameter enthalten ist, gelten die nachfolgenden Parameter für alle Gruppen dieser Kategorie. Dieser ist in Figur 4 nicht dargestellt.

Im Parametersatz PR1 des übermittelten Steuersignals sind in vorteilhafter Weise lediglich solche Parameter vorgesehen, für die eine Bereitstellung, insbesondere Aktualisierung, von der jeweiligen Kommunikationseinheit wie z.B. RP1 tatsächlich gewünscht ist, weil diesbezüglich eine Änderung bzw. Modifikation des bestehenden Profils herbeigeführt werden soll. Überflüssige Transfers bzw. Übertragungen zwischen der jeweiligen Kommunikationseinheit und dem jeweilig zugeordneten Präsenzserver sind somit weitgehend vermieden, da unverändert gebliebene Präsenzinformationen nicht durch ein Steuersignal eigens übertragen werden. Dies spart Netzressourcen ein, was insbesondere dann von Vorteil ist, wenn die Kommunikationsverbindung wie z.B. LI1 zwischen der jeweiligen Kommunikationseinheit wie z.B. RP1 und dem zugeordneten Präsenzserver wie z.B. PS1 auch mindestens eine Luftschnittstelle eines Funkkommunikationsnetzes mit umfasst. Denn bei solchen Funkkommunikationssystemen ist die Anzahl der Funkkanäle sowie deren Bandbreite nur begrenzt verfügbar. Damit der Präsenzserver PS1 weiß, für welche am Präsenzservice teilnehmende Kommunikationseinheit die Präsenzinformationsänderungen durchgeführt werden sollen, ist in das jeweilige Steuersignal wie z.B. CS1 zweckmäßigerweise mindestens eine Angabe über die Identität ID der dieses Steuersignal sendenden Kommunikationseinheit wie z.B. RP1 mit aufgenommen. In der Figur 4 ist eine Steuerzeile mit der Angabe der Identität ID der die Präsenzinformationen absendenden Kommunikationseinheit dem Anweisungssatz AS1 vorausgestellt.

Nach diesem Aktualisierungsvorgang hat der Präsenzserver nunmehr das Präsenzinformations-Datenprofil für den Teilnehmer mark.beckmann@siemens.com dahingehend verändert, dass jetzt für die Gruppe "Freunde" der Statuswert für die Verfügbarkeit ebenfalls auf "nicht erreichbar" gesetzt worden ist. Diese modifizierte Tabelle von Präsenzinformationen ist in der Figur 3 mit PI* bezeichnet, wobei die Veränderungen gegenüber dem Präsenzinformationsprofil PI von Figur 2 durch Fettdruck hervorgehoben sind. Die Gruppe "Freunde", für die die Statusinformation "Verfügbarkeit" geändert worden ist, kann dabei beispielsweise durch die Gruppe G1 von Kommunikationseinheiten WA1 mit WAn in Figur 1 gebildet sein. Rufen nun Kommunikationseinheiten WA1 mit WAn dieser Gruppe G1 (= Gruppe "Freunde") Präsenzinformationen über die Kommunikationseinheit RP1 des Netzteilnehmers mark.beckmann@siemens.com vom Präsenzserver PS1 ab, so übermittelt dieser ihnen über ihre Kommunikationsverbindungen CL11 mit CLn1 die jetzt veränderte, aktualisierte Statusinformation über die Verfügbarkeit mit "nicht erreichbar" neben der unverändert gebliebenen Statusinformation über den Aufenthaltsort "zu Hause" zu der Kommunikationsart Telefon, die durch die zugehörige Kommunikationsadresse, nämlich der Telefonnummer "4953419061814" näher angegeben ist. Den Kommunikationseinheiten einer anderen, zweiten Gruppe mit dem Gruppennamen "Feinde" wird hingegen nach einem etwaigen Anfragesignal beim Präsenzserver die Statusinformationen "nicht erreichbar" für die Verfügbarkeit und "unterwegs" für den Aufenthaltsort zur Kommunikationsart Telefon mit der zugehörigen Kommunikationsadresse "4953419061814" des Teilnehmers "mark.beckmann@siemens.com" mitgeteilt. Diese zweite Gruppe G2 von Teilnehmergeräten ist in der Figur 1 der zeichnerischen Übersichtlichkeit halber lediglich durch ein strichpunktiertes Rechteck angedeutet. Ihre Kommunikationsverbindung zum Präsenzserver PS1 ist dabei mit CL12 bezeichnet. Gegebenenfalls kann es zweckmäßig sein, dass der Präsenzserver PS1 von sich aus, d.h. selbständig, Informationen über das geänderte bzw. aktualisierte Präsenzprofil einer Kommunikationseinheit an die jeweils von dieser Änderung betroffenen, ein oder mehreren Kommunikationseinheiten versendet. Dies können beispielsweise Kommunikationseinheiten sein, die zu einer bestimmten Gruppe eingeschrieben sind und Präsenzinformationen über einen Teilnehmer dieser Gruppe erhalten möchten. Das Verschicken von Präsenzinformationen kann insbesondere immer dann automatisch vom Präsenzserver durchgeführt werden, wenn dieser von einer Kommunikationseinheit ein Steuersignal wie z.B. CS1 zur Änderung deren Präsenzprofils empfangen hat.

Der jeweilige Präsenzserver wie z.B. PS1 von Figur 1 kann insbesondere an mindestens einer Kontrolleinheit eines Funkkommunikationsnetzes angekoppelt oder in dieser implementiert sein. Vorzugsweise kann eine erste Teilmenge von Kommunikationseinheiten, die jeweils einen Kommunikationszugang zu mindestens einem bestimmten Präsenzserver haben, an ein erstes Sub- bzw. Teilsystem des Kommunikationsnetzes CN (wie z.B. an ein Mobilfunknetz) angekoppelt sein, während mindestens eine zweite Teilmenge dieser, an denselben Präsenzserver angekoppelten Kommunikationseinheiten an ein zweites Subsystem anderen Typs (wie z.B. an ein Festnetz) angeschlossen ist. Beispielsweise kann die Kommunikationseinheit RP1 von Figur 1 in einem Funkkommunikationsgerät eingebaut sein, während die Kommunikationseinheiten WA1 mit WAn der Gruppe G1 in Internet-Computern eines Festnetzes implementiert sind. Da hier das jeweilige Steuersignal, mit dem das Präsenzinformationsprofil der jeweiligen Kommunikationseinheit auf dem jeweilig zugeordneten Präsenzserver erstellt, aktualisiert, und/oder gelöscht wird, mit Hilfe eines netzeinheitlich festgelegten, d.h. standardisierten Anweisungs- und/oder Parametersatzes generiert wird, können Präsenzinformationsprofile zwischen den Kommunikationseinheiten verschiedener Typen von Nachrichtensystemen und/oder verschiedenen Providern einwandfrei ausgetauscht und verwaltet werden. Durch dieses netzweit kompatible Präsenzinformationsmanagement sind Missverständnisse über Präsenzangaben weitgehend vermieden.

Dadurch, dass jede Kommunikationseinheit zum Aktualisieren, d.h. erstmaligem Anlegen, Ändern, und/oder Löschen ihres Präsenzinformationsprofils mindestens ein Steuersignal unter Verwendung desselben, einheitlich festgelegten Formats an den jeweilig zugeordneten Präsenzserver versendet, gehen bei diesem einheitliche bzw. harmonisierte Anweisungs- und Parametersätze zum Bereitstellen, insbesondere Aktualisieren, von Präsenzinformationsprofilen ein. Dies vereinfacht und erleichtert die Auswertung sowie Verwaltung (Management) der Präsenzinformationsprofile in vorteilhafter Weise. Insbesondere kann auf diese Weise ein einheitlicher Präsenzinformations-Service in einem Telekommunikationsnetz bereitgestellt werden, das auch verschiedene Typen von Subsystemen und/oder verschiedenartige Providerdienste in einem oder mehreren dieser Telekommunikationssysteme mit umfassen kann.

Ein solcher Präsenz-Service ist ein netzweiter Service, zu dem sich sowohl sogenannte Repräsentanten als auch sogenannte Beobachter einschreiben bzw. subskribieren können. Dabei stellt der jeweilige Repräsentant z.B. Informationen über seine Verfügbarkeit auf einem zugeordneten Präsenzserver zur Verfügung. Solche Präsenzinformationen sind zum Beispiel "online", d.h. der Nutzer ist momentan am Netz angemeldet, "offline", d.h. der Nutzer ist momentan am Netz abgemeldet, oder "Kaffeepause", d.h. der Nutzer ist zwar momentan am Netz angemeldet, aber nicht erreichbar. Zusätzlich sind Statusinformationen bezüglich dem momentanen Aufenthaltsort möglich, wie zum Beispiel "zu Hause" oder genaue Positionsangaben in Form von Koordinaten.

In der Figur 1 fungiert beispielsweise die Kommunikationseinheit RP1 als solcher Repräsentant, während die Kommunikationseinheiten WA1 mit WAn die Funktion von Beobachtern haben. Vorzugsweise können ein oder mehrere der Kommunikationseinheiten, die dem jeweiligen Präsenzserver zugeordnet sind und mit diesem jeweils eine Kommunikationsverbindung aufbauen können, in Funkkommunikationsgeräten, insbesondere Mobilstationen, eines Funkkommunikationsnetzes implementiert sein. Der jeweilige Präsenzserver bildet dazu zweckmäßiger Weise eine Art Netzknoten für Kommunikationseinheiten, die ihm in einem bestimmten Bereich des Kommunikationsnetzes zugeordnet sind. Vorzugsweise ist er Bestandteil des sogenannten "backbones", d.h. der Netzinfrastruktur, eines Funkkommunikationssystems oder Telefon-Festnetzsystems. Er weist vorzugsweise mindestens eine Speichervorrichtung auf, in der die Präsenzinformationsprofile der an ihm angemeldeten Kommunikationseinheiten angelegt und verwaltet werden.

Möchte sich nun ein Beobachter wie zum Beispiel die Kommunikationseinheit WA1 in der Figur 1 am zugeordneten Präsenzserver wie zum Beispiel PS1 zum Abruf von Präsenzinformationen mindestens eines Repräsentanten wie zum Beispiel RP1 einschreiben, so sendet er eine sogenannte Einschreibungsnachricht wie zum Beispiel EN11 an den Präsenzserver PS1 des Repräsentanten RP1. Je nach Konfiguration des Präsenzservices kann der Präsenzserver nun zunächst die Erlaubnis des Repräsentanten einholen, bevor er Präsenzinformationen an den Beobachter zurücksendet. Alternativ dazu kann er die Präsenzinformationen des Repräsentanten auch direkt, d.h. automatisch an den anfragenden Beobachter senden, ohne bei diesem extra nachzufragen.

Ein Präsenzinformationsprofil umfasst vorzugsweise eine Identitätsangabe des jeweiligen Repräsentanten sowie einen Satz von ein oder mehreren Präsenzinformations-Parametern. Dieser Satz bzw. dieses Set von Präsensinformations- Parametern hat innerhalb des jeweiligen Präsenzinformationsprofils wie zum Beispiel PI von Figur 2 einen eindeutigen Namen wie zum Beispiel TU1.

In dem Präsenzinformationsprofil PI von Figur 2 können auch noch weitere Sets wie zum Beispiel TU2 vorgesehen sein, was dort in Figur 2 durch Fortsetzungspunkte angedeutet ist. In jedem Set wie zum Beispiel TU1 sind weiterhin ein oder mehrere Statusinformationen sowie optional die Kommunikationsart, die zugehörige Kommunikationsadresse, und die Priorität, für welche die Statusinformationen gelten, enthalten. Ist keine Kommunikationsart und zugehörige Kommunikationsadresse enthalten, so bedeutet dies, dass die Statusinformationen allgemein ohne Einschränkungen wie zum Beispiel auf eine bestimmte Beobachtergruppe den Zustand des jeweiligen Repräsentanten beschreiben. Sind derartige Kontaktinformationen vorhanden, so gelten die Statusinformationen innerhalb dieses Sets lediglich für diese Kommunikationsart und deren zugehörige Kommunikationsadresse. Das Präsenzinformations-Datenformat für das jeweilige Set ist in 3GPP TR23.841 "Presence-Service Stage 2" und "Draft-ietf-impp-cpim-pidf-05" detailliert angegeben.

Ein derartig aufgebautes Präsenzinformationsprofil für den jeweiligen Repräsentanten wird nun nicht durch den Repräsentanten selbst, sondern erst durch den zugeordneten Präsenzserver vollständig erstellt, d.h. erst auf Grund des jeweilig übermittelten Steuersignals wird für den jeweiligen Repräsentanten mindestens ein Set mit einem Namen, Statusinformationen, Kommunikationsart und Kommunikationsadresse angelegt und verwaltet. Die Set-Zusammenstellung für den jeweiligen Repräsentanten erfolgt also erst im jeweiligen Präsenzserver, d.h. der Präsenzserver bestimmt den Namen des jeweiligen Sets, und welche Statusinformationen sowie Kontaktinformationen in dem ein oder mehreren Sets eines bestimmten Repräsentanten aufgenommen werden. Die Entscheidung für die Set-Erstellung fällt der jeweilige Präsenzserver auf Grund von Informationen, die er vom jeweiligen Repräsentanten zuvor durch mindestens ein Steuersignal erhalten hat. Dazu generiert der jeweilige Repräsentant mindestens ein Steuersignal, das Parameter über die Statusinformationen sowie optional Kontaktinformationen wie zum Beispiel über Kommunikationsart und zugehörige Kommunikationsadresse aufweist.

Zweckmäßigerweise kann der jeweilige Repräsentant Präsenzinformationsprofile für eine Vielzahl von Präsenzgruppen erstellen. Dies ist näher im technischen Report 3GPP TS 23.841, Version 1.1.0 spezifiziert. Jede Präsenzgruppe besteht aus einem oder mehreren Beobachtern. Jeder Präsenzgruppe wird dabei vorzugsweise mindestens eine Kategorie zugewiesen, wie zum Beispiel: persönliche Gruppen, öffentliche Gruppen, verbotene Gruppen.

Persönliche Gruppen beinhalten üblicherweise Beobachter wie Freunde, Bekannte und Verwandte, wobei jeder Beobachter vorzugsweise einzeln genannt ist. Öffentliche Gruppen umfassen Gruppen von Beobachtern, ohne diese im Einzelnen aufzulisten. Solche Gruppen können zum Beispiel alle Beobachter eines Netzwerks sein (zum Beispiel alle Beobachter mit der Endung "siemens.com"). Verbotene Gruppen beinhalten Beobachter, denen der jeweilige Repräsentant nicht erlauben möchte, von ihm Präsenzinformationen zu erhalten.

Insbesondere ist es vorteilhaft, wenn es ermöglicht ist, dass der jeweilige Repräsentant zur gleichen Zeit unterschiedliche Präsenzinformationen für unterschiedliche Gruppen zur Verfügung stellt. So kann zum Beispiel der jeweilige Repräsentant bestimmen, dass er für die Beobachter in der Gruppe "Freunde", welche von der Art "persönliche Gruppen" ist, erreichbar ist, während er für die Gruppe "allgemein", d.h. einer öffentlichen Gruppe mit allen anderen Beobachtern, nicht erreichbar sein will.

Erst durch die Übermittlung mindestens eines Steuersignals, das von der Kommunikationseinheit des jeweiligen Repräsentanten selbst aus ein oder mehreren expliziten Anweisungen eines netzeinheitlich festgelegten Anweisungssatzes sowie aus ein oder mehreren Parametern eines zugehörigen, netzeinheitlich festgelegten Präsenzinformations-Parametersatzes generiert wird, ist es ermöglicht, eine netzweit einheitliche Bereitstellung, d.h. Erstellung, Aktualisierung, und/oder Löschung, und damit Verwaltung einer Vielzahl von Präsenzinformationen des jeweiligen Repräsentanten auf dessen zugeordnetem Präsenzserver in einfacher Weise durchzuführen. Insbesondere kann der jeweilige Repräsentant auf diese Weise selbst, d.h. von sich aus, seine Präsenz-Statusinformationen auf dem zugeordneten Präsenzserver aktualisieren. Dabei kann er jetzt diese Statusinformationen einer bestimmten Kommunikationsadresse sowie Kommunikationsart zuweisen. Außerdem kann er zusätzlich die Statusinformationen sowie optional Kommunikationsadresse und Kommunikationsart unterschiedlichen Anfragegruppen zuordnen. So ist es für den jeweiligen Repräsentanten beispielsweise möglich, dass er seinem zugeordneten Präsenzserver mitteilen kann, dass er für eine Gruppe A momentan unter seiner E-Mail (=Kommunikationsart)-Adresse (= Kommunikationsdresse) erreichbar ist, jedoch für eine Gruppe B unter derselben Adresse nicht erreichbar ist.

Der netzeinheitlich festgelegte Anweisungssatz wie zum Beispiel AS1 und der netzeinheitlich festgelegte Präsenzinformations-Parametersatz wie zum Beispiel PR1 des jeweiligen Steuersignals wie zum Beispiel CS1 in Figur 4 wird zweckmäßigerweise mit Hilfe eines sogenannten SOAP-Protokolls (Simple Objekt Access Protocol) realisiert. Das jeweilige Steuersignal wie zum Beispiel CS1 selbst wird vorzugsweise mit Hilfe des HTTP(Hyper Text Transfer Protocol)- oder SIP(Session Initiation Protocol)-Protokolls zum Präsenz-Server wie zum Beispiel PS1 in der Figur 1 transportiert. HTTP dient in diesem Zusammenhang also als Transportprotokoll für die SOAP-Nachricht, das heißt die SOAP-Nachricht wird im sogenannten Body der HTTP-Nachricht gesendet. Mit Hilfe von SOAP-Nachrichten können Informationen zwischen Applikationen ausgetauscht oder Prozeduren aufgerufen werden.

Mit Hilfe des erfindungsgemäßen Steuersignals ist es insbesondere ermöglicht, für eine Vielzahl von Gruppen von Beobachtern Präsenzinformationsprofile gruppenspezifisch zu erstellen, zu ändern bzw. zu modifizieren, und/oder zu löschen. Da das jeweilige Steuersignal aus einer oder mehreren expliziten Anweisungen eines netzeinheitlich festgelegten Anweisungssatzes sowie aus einem oder mehreren, vorzugsweise zu ändernden, Parametern eines zugehörigen, netzeinheitlich festgelegten Präsenzinformations-Parametersatzes erzeugt wird, ist stets eine Kompatibilität zwischen den verschiedenen, beim jeweiligen Präsenzserver eingehenden Steuersignalen sichergestellt, so dass dort eine netzeinheitlich abgestimmte Bereitstellung wie z.B. Aktualisierung, d.h. Änderung bzw.

Modifizierung, Löschung, und/oder sonstige Verwaltung einer Vielzahl von Präsenzinformationen einer Vielzahl von Kommunikationseinheiten ermöglicht ist. Auf diese Weise ist stets eine Kompatibilität zwischen verschiedenen Präsenzanwendungen - selbst verschiedener Provider - - weitgehend sichergestellt. Eine Abstimmung oder Transformation zwischen der Aktualisierungsprozedur - wie z.B. in Form von Software - auf der Kommunikationseinheit des jeweiligen Repräsentanten und den Verwaltungsprozeduren auf dem jeweiligen Präsenzserver ist somit nicht mehr erforderlich, was zu einer Vereinfachung sowie vergrößerten Flexibilität bei der Bereitstellung und Verwaltung von Präsenzinformation einer Vielzahl von Kommunikationseinheiten führt. Insbesondere werden dadurch proprietäre Lösungen, d.h. provider-spezifische Einzellösungen, überflüssig, wo ein Repräsentant seine Präsenz (engl. Presence) - Informationen entweder über einen Web-Zugang ändert oder über eine Dienstanbieter-spezifische Prozedur (,insbesondere realisiert durch entsprechende Software,) Presence Informationen auf einem Presence Server aktualisiert.

Vorzugsweise weist der jeweilige Präsenzserver eine oder mehrere Prozeduren auf, mit deren Hilfe eine oder mehrere explizite Anweisungen sowie ein oder mehrere Präsenzinformations-Parameter im jeweilig empfangenen Steuersignal gelesen und ausgewertet werden können. Anders ausgedrückt kann der jeweilige Repräsentant von seiner Kommunikationseinheit aus diese Aktualisierungs- bzw. Verwaltungsprozeduren auf dem jeweilig zugeordneten Präsenzserver durch Versenden mindestens eines Steuersignals starten und dadurch insbesondere seinen jeweiligen Präsenzinformations-Satz aktualisieren bzw. modifizieren. Dabei kann die jeweilige Kommunikationseinheit insbesondere in einem Funkkommunikationsgerät wie zum Beispiel einem Mobilfunkgerät implementiert sein. Vorzugsweise lässt sich der Fernstart der Verwaltungsprozedur auf dem jeweiligen Präsenzserver über eine Bedienoberfläche auf einem Funkkommunikationsgerät vornehmen. So kann der Repräsentant einfach auf seinem Endgerät den gewünschten Status auswählen. Die Präsenzsoftware übernimmt dann automatisch den Aufruf der entsprechenden Prozeduren auf dem Präsenzserver.

Zweckmäßigerweise umfast die jeweilige Prozedur auf dem Präsenzserver folgende Funktionen zum Aktualisieren von Präsenzinformationen mindestens einer Kommunikationseinheit:
- Wenn im empfangenen Steuersignal eine Kommunikationsart und Kommunikationsadresse enthalten ist, sowie Statusinformationen für diese Kommunikationsart und Kommunikationsadresse für den dieses Steuersignal absendenden Repräsentanten bereits auf dem Präsenzserver gespeichert sind:
   - Ändern, Hinzufügen, und/oder Löschen der Statusinformationen bezüglich der angegebenen Kommunikationsart und -adresse des Repräsentanten, d.h. Speichern der Assoziation zwischen Kommunikationsart und -adresse des Repräsentanten, und der Listen von Statusinformationen, sowie der Kommunikationsart und - adresse sowie Speichern der Statusinformationen selbst bzw. Löschen der Statusinformationen.
- Wenn keine Kommunikationsinformationen im jeweilig empfangenen Steuersignal angegeben werden:
   - Ändern, Hinzufügen, und/oder Löschen der Statusinformationen für den das Steuersignal sendenden Repräsentanten, d.h. Speichern der Assoziation zwischen Repräsentanten und den Statusinformationen, sowie Speichern der Statusinformation selbst, bzw. Löschen der Statusinformationen.
- Zuweisung zu einer oder mehreren Präsenzinformations-Gruppen, für welche die Statusinformationen gültig sein sollen, d.h. die oben genannten Assoziationen werden zusätzlich mit einer oder mehreren Beobachtergruppen assoziiert, und diese Assoziationen auf dem Präsenzserver gespeichert.

Eine Änderung von Statusinformationen für den jeweiligen Repräsentanten wird auf dem jeweilig zugeordneten Präsenzserver vorzugsweise dann vollzogen, wenn bereits eine entsprechende Statusinformation, d.h. der Statustyp, existiert und der Wert der Statusinformation (Statuswert) ungleich einem bestimmten Wert wie zum Beispiel "nicht verfügbar" ist.

Statusinformationen werden aus einer der oben beschriebenen Assoziationen zwischen Gruppennamen, Kommunikations- und Statusinformationen zweckmäßigerweise gelöscht, wenn der Statustyp bereits vorhanden ist, der neue Wert jedoch auf einen bestimmten Wert gesetzt wurde (wie zum Beispiel "nicht verfügbar"), für den ein Löschvorgang vorab festgelegt bzw. vereinbart worden ist.

Statusinformationen werden in vorteilhafter Weise dann hinzugefügt, wenn ein entsprechender Statustyp überhaupt noch nicht auf dem Präsenzserver existiert.

Der Aufruf dieser Verwaltungsprozeduren auf dem Präsenzserver durch den jeweiligen Repräsentanten, wie zum Beispiel mit Hilfe einer Präsenz-Software auf einem Mobilfunkgerät des Repräsentanten, wird durch das Versenden mindestens eines Steuersignals bzw. einer Anfragenachricht an den Präsenzserver eingeleitet. Ob die jeweilige Verwaltungsprozedur, insbesondere Erstellungs-, Aktualisierungs-, und/oder Löschungsprozedur auf dem jeweiligen Präsenzserver auf dieses empfangene Steuersignal hin erfolgreich ausgeführt werden konnte, teilt der Präsenzserver der Kommunikationseinheit des jeweiligen Repräsentanten zweckmäßigerweise durch Zurücksenden mindestens eines Antwortsignals mit.

Zweckmäßig ist es also, nach Ablauf des Aktualisierungsvorgangs der spezifischen Präsenzinformationen der jeweiligen Kommunikationseinheit auf dem Präsenzserver von diesem mindestens ein Antwortsignal zu der die Präsenzinformationen verfügbar machenden Kommunikationseinheit zurückzusenden. Ein solches Antwortsignal ist in der Figur 1 zwischen der Kommunikationseinheit RP1 und dem Präsenzserver PS1 auf der Kommunikationsverbindung LI1 zusätzlich in umgekehrter Richtung zur Übertragungsrichtung des Steuersignals CS1 mit eingezeichnet und mit RS1 bezeichnet.

Um dem jeweiligen Präsenzserver mitzuteilen, dass mit der jeweilig empfangenen Anfragenachricht bzw. dem jeweilig empfangenen Steuersignal eine Bereitstellungs- bzw. Verwaltungsprozedur zum Bereitstellen, d.h. Erstellen, Modifizieren, und/oder Löschen (teilweise oder ganz), des Präsenzinformationsprofils eines bestimmten, das Steuersignal absendenden Repräsentanten aufgerufen werden soll, enthält das Steuersignal vorzugsweise eine spezifische Information zur Identifizierung dieser Verwaltungsprozedur. Dies kann insbesondere ein Name wie zum Beispiel die Anweisungszeile "<m:statusÄndern xmlns:m="http://tempuri.org/message/">" beim Steuersignal CS1 von Figur 4 sein. Um dem Präsenzserver zu ermöglichen, das bei ihm eingehende Steuersignal einem bestimmten Repräsentanten zuordnen zu können, weist das jeweilige Steuersignal zusätzlich eine Identität des Repräsentanten auf. Beim Steuersignal CS1 von Figur 4 ist die Identität ID durch eine eigene SOAP-Protokollzeile angegeben, die insbesondere die E-Mail-Adresse mark.beckmann@siemens.com des Repräsentanten enthält. Weiterhin ist der Name der Verwaltungsprozedur, also die Information, welche die Verwaltungsprozedur auf dem Präsenzserver identifiziert, sowohl in der das jeweilige Steuersignal absendenden Kommunikationseinheit, insbesondere Mobilfunkstation, als auch im jeweilig zugeordneten Präsenzserver bekannt. Auf dem Präsenzserver ist vorzugsweise diese Bereitstellungs- bzw. Verwaltungsprozedur softwaremäßig implementiert. Die Funktion der Verwaltungsprozedur wird zweckmäßigerweise jeder Kommunikationseinheit, die am Präsenzservice teilnehmen möchte, bekannt gemacht. Weiterhin sind im jeweiligen Steuersignal ein oder mehrere zu ändernde Parameter eines netzeinheitlich festgelegten Präsenzinformations-Parametersatzes enthalten, die beim Aufruf der Verwaltungsprozedur mit in den Bereitstellungsprozess, insbesondere Aktualisierungsprozess, aufgenommen werden. Dabei wird insbesondere das Format, wie und in welcher Reihenfolge die Parameter übertragen werden, der jeweilig teilnehmenden Kommunikationseinheit und dem jeweilig zugeordneten Präsenzserver ebenfalls bekannt gemacht.

Erst der Präsenzserver stellt also nach dem Empfang eines Steuersignals das Präsenzinformationsprofil bzw. den Präsenzinformations-Satz eines bestimmten Repräsentanten aktuell auf der Grundlage der in dem Steuersignal enthaltenen Anweisungen und Präsenzinformations-Parameter zusammen. Dafür sendet der jeweilige Repräsentant zum Aufruf der Verwaltungsprozedur "Status ändern" (vgl. Figur 4) vorzugsweise folgende Parameter mit:
- Die Kommunikationsart, zugehörige Kommunikationsadresse, sowie Priorität, für die eine Änderung vorgenommen werden soll. Diese Parameter sind optional, da Präsenz-Statusinformationen nicht direkt mit einer Kommunikationsart und -adresse zwingend verbunden sind.
- Eine Liste (vgl. GL im Steuersignal CS1 von Figur 4) von Gruppennamen, für welche die Statusinformationen geändert werden sollen.
- Alternativ kann auch eine Liste von Gruppenkategorien enthalten sein, die angibt, dass für alle Gruppen dieser Kategorien die Statusinformationen geändert werden sollen.
- Eine Liste (vgl. SL im Steuersignal CS1 von Figur 4) mit ein oder mehreren Statusinformationen, bestehend aus Statusinformationstyp wie z.B. ST und -wert wie z.B. SW (vgl. ST, SW im Steuersignal CS1 von Figur 4).

Nachdem der jeweilige Präsenzserver die Aktualisierungsprozedur auf Grund des empfangenen Steuersignals eines bestimmten Repräsentanten durchgeführt hat, sendet er vorzugsweise eine Antwortnachricht an den Repräsentanten zurück. In der Figur 1 bestätigt der Präsenzserver PS1 den Abschluss des Aktualisierungsvorgangs aufgrund des Steuersignals CS1, indem er das Antwortsignal RS1 über die Kommunikationsverbindung LI1 an den Repräsentanten RP1 zurück überträgt. Vorzugsweise ist dabei im Antwortsignal die Identität des das Steuersignal absendenden Repräsentanten enthalten. Dadurch kann der Repräsentant erkennen, dass das Antwortsignal für ihn bestimmt ist. Weiterhin umfasst das Antwortsignal zweckmäßigerweise Informationen darüber, dass es sich um eine Antwort zu einer vorher abgeschickten Anfrage handelt, mit der eine Aktualisierungsprozedur auf dem Präsenzserver gestartet worden ist. Vorteilhaft ist es, wenn das Antwortsignal auch Informationen darüber enthält, welche Prozedur auf dem Präsenzserver aufgerufen, und/oder ob diese erfolgreich abgearbeitet worden ist oder nicht. Für den Fall, dass der Aufruf einer Aktualisierungsprozedur nicht erfolgreich war, wird im Antwortsignal zweckmäßigerweise der Grund dafür angegeben. Die im jeweiligen Antwortsignal mitübertragenen Gründe für das Fehlschlagen einer Aktualisierungsprozedur auf dem Präsenzserver indizieren zweckmäßigerweise mindestens einen der folgenden Fehler:
Allgemeine Fehler, welche in allen Aktualisierungsprozeduren auf dem jeweiligen Präsenzserver vorkommen können:
   - Interner Fehler (zum Beispiel Prozessorfehler)
   - Fehlender Parameter mit Angabe des Parameternamens
   - Falscher Wertebereich eines Parameters mit Angabe des Parameternamens
   - Unbekannter Statustyp mit Angabe des Typs
   - Unbekannter Gruppenname mit Angabe des Gruppennamens.

Die Verwendung des HTTP-Protokolls (Hyper Text Transfer Protocol) Spezifikation in RFC 2616: Hyper Text Transfer Protocol 1.1.) oder des SIP-Protokolls (Session Initiation Protocol) (Spezifikation in RFC 3261:Session Initiation Protocol) für den Transport des jeweiligen Steuersignals wie zum Beispiel CS1 und/oder Antwortsignals wie zum Beispiel RS1 ist insbesondere deshalb zweckmäßig, weil diese Protokolle auf einem Anfrage/Antwort-Mechanismus basieren. Bei Verwendung des SIP-Protokolls kann zusätzlich bereits die Identität des Repräsentanten im jeweiligen Steuersignal und/oder Antwortsignal signalisiert werden. Ein weiterer Vorteil beider Protokolle ist, dass sie im sogenannten Nachrichtenkörper Daten transportieren können. Bei diesen Daten kann es sich insbesondere auch um Nachrichten des sogenannten SOAP(Simple Object Access Protocol)-Protokolls handeln (Spezifikation in http://www.w3.org/tr/soap/: Simple Object Access Protocol 1.1). Das SOAP-Protokoll hat den Vorteil, dass es eine Nachrichtenformatierung zur Verfügung stellt, mit der eine Prozedur aufgerufen und deren Parameter zur Übergabe angegeben werden können.

Wie ein Repräsentant mit der Kommunikationseinheit zum Beispiel seines Funkkommunikationsgerätes, insbesondere Mobilfunkgerätes, seine Verfügbarkeit und seinen momentanen Aufenthaltsort durch Aufruf einer Bereitstellungsprozedur auf dem ihm zugeordneten Präsenzserver ändern kann, wird nochmals anhand von nachfolgendem Ausführungsbeispiel erläutert. Dabei werden die Informationen über die Verfügbarkeit, also zum Beispiel, ob der Repräsentant "erreichbar" oder "nicht erreichbar" ist, und der Aufenthaltsort des Repräsentanten als Statusinformationen bezeichnet. Weiterhin wird der Kommunikationseinheit des Repräsentanten der Name der Bereitstellungsprozedur zum Ändern dieser Statusinformationen als auch Präsenzinformations-Parameter zur Übergabe an diese Bereitstellungsprozedur zur Verfügung gestellt. Im vorliegenden Ausführungsbeispiel hat die Änderungsprozedur zum Ändern bzw. Modifizieren von Statusinformationen den Namen "Status Ändern". Insbesondere können ein oder mehrere folgende Präsenzinformations-Parameter in das jeweilige Steuersignal mit aufgenommen werden, um beim Aktualisierungsvorgang auf dem Präsenzserver berücksichtigt zu werden (vgl. das Steuersignal CS1 von Figur 4) :
- Kommunikationsart: "Kommunikationsart"
- Kommunikationsadresse: "Kommunikationsadresse"
- Priorität: "Priorität"
- Liste von Gruppennamen: "Gruppenliste", wobei jeder Eintrag der Liste einen Gruppennamen: "Gruppenname" aufweist.
- Statusliste: "Statusliste", wobei jeder Eintrag der Liste umfasst:
   - Statustyp: "Status Type"
   - Statuswert: "Statuswert"

### (Die Liste von Gruppenkategorien wird in diesem Ausführungsbeispiel nicht verwendet.)

Statustypen sind hier im Ausführungsbeispiel "Verfügbarkeit" und "Aufenthaltsort". Zweckmäßige Werte für den Statustyp "Verfügbarkeit" sind dabei insbesondere "erreichbar" und "nicht erreichbar". Die Werte für den Aufenthaltsort können insbesondere zwischen den Alternativen "zu Hause" und "unterwegs" gewählt werden.

Zweckmäßigerweise wird der jeweilige Gruppenname als Text dargestellt. Die Statusliste wird vorzugsweise als eine Liste im Steuersignal abgebildet, wie zum Beispiel in Form eines Feldes (Array), wobei jeder Statustyp eindeutig gewählt ist.

In einem ersten Schritt setzt nun die Kommunikationseinheit RP1 von Figur 1 des Repräsentanten, insbesondere mit Hilfe des Man-Machine-Interfaces seines Funkkommunikationsgerätes, durch Übermittlung mindestens eines Steuersignals, wie zum Beispiel CS1, erstmalig sein Präsenzinformationsprofil PI entsprechend der Tabelle von Figur 2 fest, und zwar im Einzelnen für sein Telefon mit der Nummer "+4953419061814" den Statuswert des Typs "Verfügbarkeit" für die Gruppe "Freunde" momentan auf den Wert "erreichbar". Für die Gruppe "Feinde" ist momentan der Wert auf "nicht erreichbar" gesetzt. Weiterhin wird für den Statuswert des Typs "Aufenthaltsort" für die Gruppe mit dem Namen "Freunde" der Wert "zu Hause" und für die Gruppe mit dem Namen "Feinde" der Wert "unterwegs" eingetragen. Die Priorität wird der Einfachheit halber in diesem Ausführungsbeispiel nicht betrachtet.

In einem zweiten Schritt möchte nun der Repräsentant den Status für die genannte Telefonnummer für die Gruppe mit dem Namen "Freunde" dahingehend ändern, dass er jetzt nicht erreichbar ist.

Nachdem der Repräsentant diese Änderungen der Statuswerte insbesondere mit Hilfe einer Präsenzinformations-Veränderungsprozedur in der Kommunikationseinheit RP1 (z.B. auf seinem Funkkommunikationsgerät) durchgeführt und abgeschlossen hat, sendet diese Präsenzinformations-Veränderungsprozedur nun eine Anfragenachricht bzw. ein Steuersignal CS1 an den Präsenzserver PS1 (vgl. Figur 1). Vorteilhaft ist es, dieses Steuersignal und auch das dazu korrespondierende Antwortsignal durch HTTP-Nachrichtensignale zu realisieren. Die Anfragenachricht ist eine sogenannte PUT-Nachricht (PUT ist eine Anfrage, Informationen abzulegen)], welche dazu verwendet werden kann, Informationen von einer Netzwerkeinheit zu einer anderen Netzwerkeinheit zu transportieren. Dort wird sie unter der Adresse, welche in der sogenannten "Request-URI" (URI = Uniform Ressource Identifier = Identität des Anfragenden) enthalten ist, gespeichert. Die Anfragenachricht und/oder Antwortnachricht enthalten vorzugsweise einen SOAP-Nachrichtenkörper, dessen Anfang durch die Zeile "<SOAP-ENV:Envelope..." kenntlich gemacht ist. Die Identität des Repräsentanten wird dem Präsenzserver mit der Zeile "<id:Identität xmlns:m= http://tempuri.org/message>Mark.Beckmann@siemens.com</Iden tität>" mitgeteilt. Nach Empfang der jeweiligen Anfragenachricht wie z.B. CS1 erkennt der Präsenzserver PS1 anhand der Kopfzeile "content type", dass eine Nachricht im XML(Extensible Markup Language)-Format vorliegt. Das Vorhandensein der Kopfzeile "SOAP Action" teilt dem Präsenzserver mit, dass es sich um eine sogenannte SOAP-Nachricht handelt. Weiterhin erkennt der Präsenz-Server anhand der Information "<m:StatusÄndern xmlns:m=http://tempuri.org/message/"> in der SOAP-Nachricht, wie zum Beispiel CS1 von Figur 4, dass die Prozedur "Status ändern" aufgerufen werden soll. Der Teil "xmlns:m=http://tempuri.org/message/" im Steuersignal CS1 von Figur 4 identifiziert dabei eindeutig die Beschreibung der Nachrichten, wie sie zwischen der Zeile "<m:StatusÄndern xmlns:m=http://tempuri.org/message/''>'' und der Zeile "</m:StatusÄndern>" enthalten ist.

Die Zeile "xmlns:m="http://tempuri.org/message/" im jeweiligen Steuersignal, wie z.B. CS1, identifiziert eindeutig den Bereich, in dem die auf das "m:" nachfolgenden Befehle bzw. Anweisungen sowie die zugehörigen Verarbeitungsparameter definiert sind. Das heißt, die vorzunehmende Verwaltungsprozedur und wie die Nachricht zwischen der Anfangszeile "<m:StatusÄndern xmlns:m=http://tempuri.org/message/''>'' und der Endzeile "</m:StatusÄndern>" dargestellt sind, sind nur eindeutig in diesem Abschnitt des Steuersignals festgelegt. In einem anderen Bereich wie zum Beispiel "xmlns:xyz=http://beispielbereich.com" kann zwar ebenfalls der Prozedurname "Status ändern" vergeben worden sein. Er kann jedoch eine völlig andere Bedeutung haben. xmlns bedeutet dabei "extensible mark up language name space" und legt eben genau diesen Bereich eindeutig fest.

Mit Hilfe der Angaben zum gültigen Bereich (xmlns) und der Angabe der Prozedur weiß der jeweilige Präsenzserver nun eindeutig, welche Prozedur gemeint ist, und welche Parameter zum Abarbeiten der Prozedur erforderlich sind. Die Parameter lassen sich in eindeutiger Weise für den Präsenzserver aus dem jeweilig empfangenen Steuersignal dadurch identifizieren, dass sie zwischen den Formatzeilen "<m:StatusÄndern...>" und "</m:StatusÄndern>" abgelegt sind. Für den Aufruf der Prozedur verwendet der Präsenzserver die Parameterwerte, wie sie in den zwischen dieser Anfangsanweisungs- und Endanweisungszeile für die Kommunikationsart, Kommunikationsadresse, Gruppenliste, und Statusliste angegeben sind. Der Statustyp kann insbesondere wieder als xmlns angegeben werden, da dies im Präsenz-Datenformat (wie es verwendet wird, um die Informationen an den Beobachter zu senden) bereits verwendet wird. In diesem Fall bezeichnet der xmlns"http://beispiel.com/Präsenz/Verfügbarkeit den Statustyp "Verfügbarkeit" und der xmlns"http://beispiel.com/Präsenz/Aufenthaltsort den Statustyp "Aufenthaltsort". Der Präsenz-Server führt mit Hilfe dieser Daten die Aktualisierungsprozedur aus, wodurch sich der auf dem Präsenzserver gespeicherte Status des Repräsentanten ändert. Wie diese vorteilhafte Abänderungsprozedur zum Aktualisieren bzw. Modifizieren des Präsenzinformationsprofils der Kommunikationseinheit des jeweiligen Repräsentanten schrittweise auf dem Präsenzserver abläuft, wird beispielhaft anhand eines Flussdiagramms in der Figur 6 dargestellt:
Im Schritt 1 werden in der Kommunikationseinheit des jeweiligen Repräsentanten Präsenzinformations-Parameter eingelesen, und die erste Gruppe in der Liste vom Gruppennamen behandelt.

Im Entscheidungsschritt 2 sieht der Präsenzserver zunächst in der empfangenen SOAP-Nachricht, wie zum Beispiel CS1, nach, ob Kommunikationsinformationen überhaupt vorhanden sind. Dies erkennt er daran, ob die Elemente "<Kommunikationsart>" und "<Kommunikationsadresse>" als Parameter der Prozedur "<StatusÄndern>" enthalten sind.

Da dies hier im Ausführungsbeispiel der Fall ist, sucht sich der Präsenzserver nun im nachfolgenden Schritt 3 aus seiner fortlaufend geführten Verwaltungstabelle für den Repräsentanten mark.beckmann@siemens.com die Einträge für die entsprechende Kommunikationsart und -adresse heraus.

Würde der Präsenzserver keine Kommunikationsinformationen in seiner Verwaltungstabelle vorfinden, so würde er alle diejenigen Einträge heraussuchen, für die keine Kommunikationsart und -adresse angegeben sind (= Schritt 4).

In Schritt 5 wird nun ein Statustyp aus der Liste der Statusinformationen des empfangenen Steuersignals entnommen.

Im Entscheidungsschritt 6 schaut der Präsenzserver für die in Schritt 1 ausgesuchte Gruppe in mindestens einer von ihm fortlaufend verwalteten Datenbank nach, ob bereits ein Eintrag für den in Schritt 5 ausgesuchten Statustyp besteht.

Im Entscheidungsschritt 7 wird vom Präsenzserver ermittelt, ob der neue Wert des Statustyps auf "nicht erreichbar" gesetzt ist.

Ist dies der Fall, wird der Statustyp und Statuswert gelöscht (Schritt 8).

Im vorliegenden Ausführungsbeispiel ist dies nicht der Fall, weshalb der Statuswert lediglich modifiziert bzw. aktualisiert wird (Schritt 9).

Ist noch gar kein Eintrag dieses Statustyps für die Gruppe vorhanden, so wird in Schritt 10 ein neuer Eintrag für die Gruppe getätigt und die Statusinformationen eingetragen.

Im Entscheidungsschritt 11 wird ermittelt, ob alle Statusinformationen in der Liste abgearbeitet sind.

Ist dies nicht der Fall, so springt die Verwaltungsprozedur zurück zum Schritt 5 und beginnt von vorne.

In diesem Ausführungsbeispiel für das Steuersignal CS1 von Figur 4 sind alle Statusinformation abgearbeitet, und daher wird im Entscheidungsschritt 12 nachgeschaut, ob alle Gruppen in der entsprechenden Liste abgearbeitet wurden.

Da dies hier der Fall ist, endet die Verwaltungsprozedur (Schritt 13). Wäre dies nicht der Fall, so springt die Verwaltungsprozedur zum Schritt 1 zurück und beginnt von vorne.

Der neue Zustand des Präsenzinformations-Profils für die Kommunikationseinheit RP1 des Repräsentanten nach Auswertung des Steuersignals CS1 auf dem Präsenzserver ist in der Tabelle von Figur 3 wiedergegeben. Dort ist das modifizierte PräsenzInformations-Profil mit PI* bezeichnet. So oder in ähnlicher Form werden die Statusinformationen dann zusammen mit der Identität des Repräsentanten auf dem Präsenzserver PS1 von Figur 1 abgespeichert.

Die Antwortnachricht RS1 mit einer "http/1.1 200 OK"-Zeile ist in der Figur 5 schematisch dargestellt. Anhand der Zeile AW1 "<m:AntwortStatusÄndern xmlns:m="http://tempuri.org/message/"> und der darauffolgenden Zeile "<Ergebnis>OK</Ergebnis>" erkennt die Präsenz-Informations-Verwaltungsprozedur des Repräsentanten, dass die Erstellung der Gruppe geglückt ist. Für den Fall, dass die Bereitstellungs-, insbesondere Änderungsprozedur, auf dem Präsenz-Server fehlgeschlagen ist, kann innerhalb des "<Ergebnis>"-Elements auch eine Fehlermeldung (zum Beispiel interner Fehler), wie bereits oben erläutert, angegeben werden.

Zusammenfassend betrachtet ist somit ein Präsenzservice- bzw. Präsenzinformations-Managementverfahren mit Prozeduren zum Bereitstellen, Ändern, und/oder Löschen von Statusinformationen einer Vielzahl von Kommunikationseinheiten für eine oder mehrere bestimmte Beobachtergruppen auf Basis eines netzeinheitlich festgelegten Anweisungs- und Präsenzinformations-Parameter- Satzes ermöglicht. Dabei können die Parameter, welche bei Aufruf der entsprechenden Erstellungs-, Aktualisierungs-, und/oder Löschprozedur auf dem Präsenzserver in einer Anfragenachricht bzw. in einem Steuersignal enthalten sind, vom jeweiligen Repräsentanten selbst ausgewählt bzw. festgelegt werden und zwar mit hoher Granularität, d.h. mehrfach abgestuft nach verschiedenen Kommunikationsarten, - adressen, Statusinformationen, ... usw.. In dem jeweiligen Steuersignal werden vorzugsweise nur diejenigen Parameter übertragen, für die eine Änderung in der Datenbasis des Präsenzservers gewünscht ist. Vorteilhaft ist auch, dass im Antwortsignal, das vom Präsenzserver zur Kommunikationseinheit des jeweiligen Repräsentanten geschickt wird, etwaige Fehlergründe mitgeliefert werden, falls eine der Prozeduren Neuanlegen, Ändern, Löschen von Präsenz-Informationen auf dem Präsenzserver nicht ausgeführt werden konnte.

Durch die Übermittlung mindestens eines Steuersignals mit einem einheitlich festgelegten und damit kompatiblen Formats vom jeweiligen Repräsentanten zu dessen zugeordnetem Präsenzserver ist es somit zum einen in vorteilhafter Weise ermöglicht, dass der Präsenzserver selbst mindestens ein Präsenzinformations-Profil in Form von ein oder mehreren Sets für den jeweiligen Repräsentanten zusammenstellt. Das heißt, der Präsenzserver bestimmt den Namen der Sets und welche Statusinformationen sowie Kommunikationsinformationen in dem jeweiligen Set aufgenommen werden, welches an einen bestimmten Beobachter durch Abruf oder automatische Serverweiterleitung gesendet wird. Die Entscheidung dafür fällt der Präsenzserver wiederum aufgrund von Informationen, die er vom jeweiligen Repräsentanten zuvor mit Hilfe mindestens eines Steuersignals empfangen hat. Dazu bringt der jeweilige Repräsentant in das an den Präsenzserver zu sendende Steuersignal Statusinformationen sowie optional eine Kommunikationsart und Adresse ein.

Eine weitere Möglichkeit zum Bereitstellen, d.h. Erstellen, Aktualisieren, und/oder Löschen, mindestens eines Präsenzinformations-Profils mindestens einer Kommunikationseinheit auf mindestens einem Präsenzserver kann zum anderen in vorteilhafter Weise dadurch ermöglicht werden, dass der jeweilige Repräsentant selber ein oder mehrere sogenannte Tupel von Präsenzinformationen erstellt, d.h. der jeweilige Repräsentant weist einen eindeutigen Namen dem jeweiligen Tupel zu, und bestimmt, welche Statusinformationen, sowie ob, und gegebenenfalls welche Kommunikationsart sowie Kommunikationsadresse in diesem Tupel enthalten sind. Der jeweilige Repräsentant selbst erhält also bei dieser Ausführungsvariante die Möglichkeit, ein oder mehrere Tupel mit Hilfe seiner Kommunikationseinheit selbst zu erstellen. Insbesondere wird ihm die Möglichkeit gegeben, jedes Tupel einer oder mehreren Präsenzgruppen von Beobachtern zuzuordnen. Dasjenige Tupel, das einer bestimmten Gruppe zugeordnet worden ist, kann dann auch vom Präsenzserver verwendet werden, um diese Beobachtergruppe über den Zustand des Repräsentanten zu informieren.

Zu diesem Zweck sind auf dem jeweiligen Präsenzserver zweckmäßigerweise Prozeduren implementiert, welche dem jeweiligen Repräsentanten ein Erstellen, Löschen und/oder Modifizieren von Präsenztupeln ermöglichen. Dabei kann jedes Tupel einer Präsenzgruppe oder mehreren Präsenzgruppen zugewiesen werden. Sind später ein oder mehrere Beobachter der entsprechenden Präsenzgruppen daran interessiert, über den Zustand des jeweiligen Repräsentanten mit Hilfe des Präsenzservers informiert zu werden, so werden die dort abgespeicherten Tupel mit den Assoziationen zu diesen Präsenzgruppen aus dem Präsenzinformationsprofil des jeweiligen Repräsentanten verwendet.

Zweckmäßig kann es sein, wenn der jeweilige Repräsentant diese Prozeduren zum Erstellen, Löschen und/oder Modifizieren von mindestens einem Präsenztupel z.B. von seinem Funkkommunikationsgerät, insbesondere Mobilfunkgerät, aus starten und somit seinen Status modifizieren kann. Dies kann in vorteilhafter Weise über eine Bedienoberfläche auf dem jeweiligen Teilnehmergerät, insbesondere Funkkommunikationsgerät, des jeweiligen Repräsentanten erfolgen. So kann der jeweilige Repräsentant einfach auf seinem Teilnehmergerät den individuell gewünschten Status für jede Präsenzgruppe auswählen. Eine zugehörige Präsenzprozedur übernimmt dann in vorteilhafter Weise automatisch den Aufruf der jeweiligen Prozedur zum Erstellen, Modifizieren, und/oder Löschen von ein oder mehreren Präsenztupeln innerhalb des Präsenzinformationsprofils des jeweiligen Repräsentanten auf dem zugeordneten Präsenzserver.

Vorzugsweise sind in der Kommunikationseinheit des jeweiligen Repräsentanten drei verschiedene Prozeduren bzw. Steuerungsabläufe zur Aktivierung bzw. zum Aufruf durch den Repräsentanten vorgesehen, um ein oder mehrere Tupel dessen Präsenzinformationsprofils zu erstellen, zu ändern, und/oder zu löschen. Ein Präsenztupel setzt sich dabei insbesondere aus folgenden Informationen bzw. Angaben zusammen:
- Tupelname,
- Kommunikationsart und Kommunikationsadresse (optional),
- ein oder mehrere Statusinformationen mit jeweils einem Statustyp und zugehörigem Statuswert.

Die Prozedur zum Erstellen von Präsenztupeln beinhaltet vorzugsweise folgende Funktionen:
- Speichern des jeweiligen Präsenztupels,
- wenn eine Liste von Beobachtergruppen oder eine Liste von Beobachter-Gruppenkategorien für den Aufruf der Erstellungsprozedur enthalten ist:
   Zuweisen des jeweiligen Präsenztupels zu den entsprechenden Gruppen und Speichern dieser Assoziation.

Die Prozedur zum Löschen von Präsenztupeln weist zweckmäßigerweise folgende Funktionen auf:
- Löschen des jeweiligen Präsenztupels,
- Löschen der Assoziation zwischen Gruppennamen und dem jeweilig zu löschenden Präsenztupel.

Die Prozedur zum Ändern von Präsenztupeln weist vorzugsweise folgende Funktionen auf:
- wenn eine Kommunikationsart und Kommunikationsadresse im Aufruf dieser Prozedur enthalten ist und diese von der bisher unter dem angegebenen Tupelnamen gespeicherten Kommunikationsinformation abweicht:
   Ändern der Kommunikationsart und Kommunikationsadresse des jeweiligen Repräsentanten für dieses Tupel
- wenn eine Kommunikationsart und Kommunikationsadresse im Aufruf der Änderungsprozedur enthalten ist, und bisher unter dem angegebenen Tupelnamen keine Kommunikationsinformationen gespeichert sind:
   Hinzufügen der Kommunikationsart und Kommunikationsadresse des jeweiligen Repräsentanten für dieses Tupel
- wenn eine Liste von zu ändernden Statusinformationen enthalten ist:
   Ändern der Statusinformationen aus diesem Tupel
- wenn eine Liste von hinzuzufügenden Statusinformationen enthalten ist:
   Hinzufügen der Statusinformationen aus diesem Tupel
- wenn eine Liste von zu entfernenden Statusinformationen enthalten ist:
   Löschen der Statusinformationen aus diesem Tupel

Alternativ dazu kann das Ändern, Hinzufügen, und/oder Löschen von Statusinformationen auch unter Zuhilfenahme ein oder mehrerer Gruppenlisten realisiert werden. Zum Ändern und Hinzufügen von Statusinformationen ermittelt dazu der Präsenzserver, ob der angegebene Statustyp für die entsprechende Gruppe bereits existiert. Wenn dies der Fall ist, führt er entsprechende Änderungen oder Hinzufügungen aus. Dass das Löschen eines bestimmten Statustyps gewünscht ist, kann der Präsenzserver zweckmäßigerweise daran erkennen, dass der Statuswert des zu entfernenden Statustyps auf einen festgelegten Wert, wie z.B. nicht verfügbar, gesetzt worden ist.
- Wenn eine Liste von hinzuzufügenden Gruppen oder Gruppenkategorien im Aufruf der jeweiligen Prozedur enthalten ist:
   Assoziieren des Präsenztupels mit den angegebenen Gruppen bzw. mit allen Gruppen der entsprechenden Kategorie zusätzlich zu den Gruppen, welche eventuell schon mit dem jeweiligen Präsenztupel assoziiert sind.
- Wenn eine Liste von zu entfernenden Gruppen oder Gruppenkategorien im Aufruf der jeweiligen Prozedur enthalten ist:
   Löschen der Assoziation des jeweiligen Präsenztupels mit den angegebenen Gruppen bzw. mit allen Gruppen der entsprechenden Kategorie.
- Wenn eine Liste von zu ändernden Gruppen oder Gruppenkategorien im Aufruf der jeweiligen Prozedur enthalten ist:
   Modifizieren der Assoziation des jeweiligen Präsenztupels mit den angegebenen Gruppen bzw. mit allen Gruppen der entsprechenden Kategorie zusätzlich zu den Gruppen, welche eventuell schon mit dem Präsenztupel assoziiert sind.

Der Aufruf dieser Prozeduren durch den Repräsentanten bzw. durch die Ablaufsteuerung dessen Kommunikationseinheit, die z.B. in einem Funkkommunikationsgerät implementiert sein kann, erfolgt zweckmäßigerweise durch das Absenden einer Anfragenachricht in Form mindestens eines Steuersignals vom jeweiligen Repräsentanten an den zugeordneten Präsenzserver. Ob dort die jeweilige Prozedur erfolgreich ausgeführt werden konnte, teilt der Präsenzserver zweckmäßigerweise der Kommunikationseinheit des jeweiligen Repräsentanten, insbesondere dessen Funkkommunikationsgerät, durch das Rücksenden mindestens eines Antwortsignals mit.

Um dem Präsenzserver mitzuteilen, dass mit der jeweiligen Anfragenachricht des Repräsentanten die jeweilige spezifische Prozedur zum Hinzufügen, Ändern, und/oder Löschen aktiviert bzw. aufgerufen werden soll, enthält die Anfragenachricht eine Identifikationsinformation zur eindeutigen Kennzeichnung dieser Prozedur. Weiterhin ist es zweckmäßig, auch eine Identitätsinformation zur eindeutigen Kennzeichnung des Repräsentanten in dieser Anfragenachricht aufzunehmen, um dem Präsenzserver zu ermöglichen, die Anfrage einem bestimmten Repräsentanten zuzuordnen.

Allgemein betrachtet ist also mindestens eine Prozedur bzw. Ablaufsteuerung zum Bereitstellen, d.h. Erstellen, Ändern und/oder Löschen, von einem Tupel oder mehreren Tupeln für ein Präsenzinformationsprofil mindestens einer Kommunikationseinheit mindestens eines Repräsentanten auf dem zugeordneten Präsenzserver vorgesehen. Die Funktion und Wirkungsweise dieser Prozedur ist der Kommunikationseinheit des jeweiligen Repräsentanten vorzugsweise vorab bekannt gemacht. Auf diese Weise kann der jeweilige Repräsentant unter Zuhilfenahme mindestens einer Kommunikationseinheit mindestens ein Steuersignal an den ihm zugeordneten Präsenzserver senden, das ein oder mehrere explizite Anweisungen eines netzeinheitlich festgelegten Anweisungssatzes sowie ein oder mehrere Parameter eines zugehörigen, netzeinheitlich festgelegten Präsenzinformations-Parametersatzes enthält. Auf diese Weise kann die jeweilige spezifische Prozedur zum Anlegen, Ändern und/oder Löschen mindestens eines Tupels innerhalb des Präsenzinformationsprofils des jeweiligen Repräsentanten auf dem Präsenzserver aufgerufen bzw. aktiviert werden. Das Format, wie und in welcher Reihenfolge die Präsenzinformations-Parameter übertragen werden, sind dabei sowohl in der Kommunikationseinheit des jeweiligen Repräsentanten, als auch im Präsenzserver vorab bekannt gemacht.

Im Folgenden sind für die einzelnen Prozeduren zum Erstellen, Hinzufügen, Ändern und/oder Löschen von Präsenzinformationen zweckmäßige Parameter aufgelistet, welche für den Aufruf der jeweiligen Prozedur durch die Kommunikationseinheit des jeweiligen Repräsentanten an dessen zugeordneten Präsenzserver gesendet werden können:
zweckmäßige Parameter für die Prozedur zum Erstellen eines Präsenztupels:
   - Tupelname; dieser wird vorzugsweise so gewählt, dass er eindeutig unter allen Tupeln ist, die der jeweilige Repräsentant erstellt hat, also die dem jeweiligen Repräsentanten zugeordnet sind.
   - Kommunikationsart, Kommunikationsadresse, sowie zugehörige Priorität. Diese Parameter sind vorzugsweise optional.
   - Eine Liste von Statusinformationen, wobei für die jeweilige Statusinformation ein Statustyp und ein Statuswert angegeben sind. Diese Liste ist vorzugsweise optional.
   - Eine Liste von Gruppennamen, für welche ein bestimmtes Tupel verwendet wird, um Beobachter dieser Gruppen über den Status des jeweiligen Repräsentanten zu informieren. Auch diese Liste ist vorzugsweise optional.
   - Alternativ, eine Liste von Gruppenkategorien, die angibt dass ein bestimmtes Tupel für alle Gruppen dieser Kategorie verwendet wird, um Beobachter dieser Gruppen über den Status des jeweiligen Repräsentanten zu informieren. Auch diese Liste ist vorzugsweise optional.

Parameter für die Prozedur zum Löschen eines Präsenztupels:
- Tupelname zweckmäßige Parameter für die Prozedur zum Ändern eines Präsenztupels:
- Tupelname des zu ändernden Tupels.
- Kommunikationsart, Kommunikationsadresse, sowie Priorität. Diese Parameter sind vorzugweise optional.
- Eine Liste von zu ändernden Statusinformationen, wobei für die jeweilige Statusinformation ein Statustyp und ein Statuswert angegeben sind. Diese Liste ist vorzugsweise optional.
- Eine Liste von hinzuzufügenden Statusinformationen, wobei die jeweilige Statusinformation einen Statustyp und einen Statuswert angibt. Auch diese Liste ist vorzugsweise optional.
- Eine Liste von zu löschenden Statusinformationen, wobei die jeweilige Statusinformation einen Statustyp und einen zugehörigen Statuswert angibt. Diese Liste ist ebenfalls vorzugsweise optional.
- Eine Liste von hinzuzufügenden Gruppennamen, für welche das jeweilig spezifisch vorliegende Tupel verwendet wird, um Beobachter dieser Gruppen über den Status des jeweiligen Repräsentanten zu informieren. Diese Liste ist vorzugsweise optional.
- Eine Liste von hinzuzufügenden Gruppenkategorien, welche somit alle Gruppen dieser Kategorie angeben, für welche das jeweilig spezifisch vorliegende Tupel verwendet wird, um Beobachter dieser Gruppen über den Status des jeweiligen Repräsentanten zu informieren. Diese Liste ist vorzugsweise optional.
- Eine Liste von zu löschenden Gruppennamen, für welche das jeweilig spezifisch vorliegende Tupel nicht mehr verwendet wird. Auch diese Liste ist vorzugsweise optional.
- Eine Liste von zu löschenden Gruppenkategorien, welche somit alle Gruppen dieser Kategorie angeben, für welche das jeweilig spezifisch vorliegende Tupel nicht mehr verwendet wird. Auch diese Liste ist vorzugsweise optional.

Nachdem der Präsenzserver die jeweilige Prozedur durchgeführt hat, sendet er zweckmäßigerweise mindestens eine Antwortnachricht an die Kommunikationseinheit des Präsenzinformationen zur Verfügung stellenden Repräsentanten zurück. In dieser Antwortnachricht ist dabei vorzugsweise eine Identität des die Bereitstellungsprozedur auslösenden Repräsentanten enthalten, so dass der Repräsentant erkennen kann, dass das Antwortsignal für ihn bestimmt ist. Weiterhin ist es zweckmäßig, dass das jeweilige Antwortsignal eine Information mit einem Hinweis darauf enthält, dass es sich um eine Antwort zu demjenigen Anfragesignal handelt, mit der eine der Prozeduren auf dem Präsenzserver gestartet worden ist. Weiterhin kann es zweckmäßig sein, dass das jeweilige Antwortsignal auch eine Information darüber enthält, welche Prozedur auf dem Präsenzserver aufgerufen worden ist, und ob diese erfolgreich durchgeführt worden ist oder nicht. Für den Fall, dass der Aufruf einer bestimmten Prozedur nicht erfolgreich war, ist es zweckmäßig, in dem jeweiligen Antwortsignal mindestens einen Grund dafür anzugeben.

Nachfolgend werden Fehlergründe aufgelistet, welche vom Präsenzserver an die Kommunikationseinheit des jeweiligen Repräsentanten zweckmäßigerweise signalisiert werden können:
Fehlergründe für das Fehlschlagen der Prozedur zum Erstellen von Präsenztupeln:
   - interner Fehler (z.B. Prozessorfehler)
   - Tupelname existiert bereits
   - fehlender Parameter mit Angabe des Parameternamens
   - falscher Wertebereich eines Parameters mit Angabe des Parameternamens (z.B. angegebener Statustyp oder Gruppenname ist unbekannt)
Fehlergründe für das Fehlschlagen der Prozedur zum Löschen von Präsenztupeln:
   - interner Fehler (z.B. Prozessorfehler)
   - Tupelname existiert nicht
Fehlergründe für das Fehlschlagen der Prozedur zum Ändern von Präsenztupeln:interner Fehler (z.B. Prozessorfehler)
   - Tupelname existiert nicht
   - fehlender Parameter mit Angabe des Parameternamens
   - falscher Wertebereich eines Parameters mit Angabe des Parameternamens

Für den Nachrichtenaustausch der Präsenzinformationen zwischen der Kommunikationseinheit des jeweiligen Repräsentanten und dessen jeweilig zugeordnetem Präsenzserver unter Zuhilfenahme mindestens eines Steuersignals und gegebenenfalls mindestens eines zugehörigen Antwortsignals wird vorzugsweise das sogenannte Hypertexttransferprotokoll (HTTP) entsprechend der Spezifikation RFC 2616: "Hypertext Transfer Protocol 1.1" oder das sogenannte Session Initiation Protocol (SIP) entsprechend der Spezifikation in RFC 3261: "Session Initiation Protocol" verwendet. Diese Protokolle basieren in vorteilhafter Weise auf einem Anfrage-/Antwortmechanismus. Bei Verwendung des SIP-Protokolls kann in vorteilhafter Weise zusätzlich bereits eine Identität des jeweiligen Repräsentanten in der Anfragenachricht bzw. dem Steuersignal signalisiert werden, dass zum Erstellen, Ändern und/oder Löschen von Präsenztupeln des jeweiligen Repräsentanten von dessen Kommunikationseinheit zum jeweilig zugeordneten Präsenzserver übermittelt wird.

Ein weiterer Vorteil beider Protokolle ist, dass sie im sogenannten Nachrichtenkörper Daten transportieren können. Bei diesen Daten kann es sich insbesondere auch um Nachrichten des sogenannten SOAP (Simple Object Access Protocol)-Protokolls handeln, wie es in http:www.w3.org/TR/SOAP/: "Simple Object Access Protocol 1.1" spezifiziert ist. Das SOAP-Protokoll hat weiterhin den Vorteil, dass es für das jeweilige Steuersignal, das von der Kommunikationseinheit des jeweiligen Repräsentanten zu dessen zugeordneten Präsenzserver übermittelt wird, eine kompatible Nachrichtenformatierung netzweit zur Verfügung stellt. Mit Hilfe dieser Nachrichtenformatierung ist es zugleich ermöglicht, dass die jeweilige Prozedur zum Erstellen, Ändern und/oder Löschen von ein oder mehreren Präsenztupeln des jeweiligen Repräsentanten auf dessen zugehörigem Präsenzserver aufgerufen und dabei entsprechende Parameter für die Präsenzinformationen angegeben werden können.

Mit Hilfe der Figuren 7 mit 15 wird nun erläutert, wie ein Repräsentant wie z.B. RP1 von Figur 1 mit Hilfe einer Steuerungsabfolge bzw. Prozedur mindestens ein Präsenztupel auf seinem Teilnehmergerät, insbesondere Funkkommunikationsgerät wie z.B. Mobilfunkgerät, erstellen, ändern, und/oder löschen kann. Dadurch kann insbesondere die Präsenzinformation des jeweiligen Repräsentanten über dessen Verfügbarkeit und über dessen momentanen Aufenthaltsort durch Aufruf der entsprechenden Prozedur für unterschiedliche Gruppen von Beobachtern auf dem Präsenzserver aktualisiert werden. In diesem Ausführungsbeispiel wird dabei der Einfachheit halber lediglich der Parameter für die Gruppenliste verwendet. Der Parameter für die Gruppenkategorie wird in diesem Beispiel nicht genutzt. Die im jeweiligen Steuersignal übermittelten Informationen über die Verfügbarkeit, also z.B. ob der jeweilige Repräsentant "erreichbar" oder "nicht erreichbar" ist, und den Aufenthaltsort des jeweiligen Repräsentanten legen dabei dessen Statusinformationen fest. Die Angaben "Verfügbarkeit" sowie "Aufenthaltsort" stellen den jeweiligen Statustyp dar, während die Informationen "erreichbar" sowie "nicht erreichbar" Statuswerte bezeichnen.

Bei diesem zweiten Ausführungsbeispiel erkennt die Präsenzprozedur auf dem Teilnehmergerät, insbesondere Funkkommunikationsgerät, des Repräsentanten vorzugsweise die Namen der Steuerabläufe bzw. Aktualisierungsprozeduren zum Erstellen, Ändern, und/oder Löschen von Präsenztupeln als auch die Präsenzinformations-Parameter zur Übergabe an diese Ablaufprozeduren auf dem Präsenzserver. Im vorliegenden Ausführungsbeispiel hat die Prozedur zum Erstellen von Präsenztupeln den Namen "TupelErstellen", die Prozedur zum Ändern eines Tupels den Namen "TupelAendern" und die Prozedur zum Löschen eines Tupels den Namen "TupelLoeschen".

Die Parameter für den Aufruf der Prozedur zum Erstellen von ein oder mehreren Präsenztupeln umfassen insbesondere folgende Angaben:
- Name des Tupels: "TupelName"
- Kommunikationsart: "KommunikationsArt"
- Kommunikationsadresse: "KommunikationsAdresse"
- Priorität: "Prioritaet"
- Statusliste: "StatusListe", wobei jeder Eintrag der Liste folgende Informationen aufweist:
   - Statustyp: "StatusType"
   - Statuswert: "StatusWert"
- Liste von Gruppenamen: "GruppenListe", wobei jeder Eintrag der Liste folgende Informationen aufweist:
   - Gruppenname: "GruppenName"

Die Parameter für den Aufruf der Prozedur zum Ändern von ein oder mehreren Präsenztupeln auf dem Präsenzserver umfasst für die vorliegende, zweite vorteilhafte Ausführungsvariante insbesondere folgende Angaben:
- Name des Tupels: "TupelName"
- Kommunikationsart: "KommunikationsArt"
- Kommunikationsadresse: "KommunikationsAdresse"
- Priorität: "Prioritaet"
- Statusliste der hinzuzufügenden Statusinformation: "Liste-StatusNeu", wobei jeder Eintrag der Liste folgende Informationen aufweist:
   - Statustyp: "StatusType"
   - Statuswert: "StatusWert"
- Statusliste der zu ändernden Statusinformaton: "ListeStatusAendern", wobei jeder Eintrag der Liste folgende Informationen aufweist:
   - Statustyp: "StatusType"
   - Statuswert: "StatusWert"
- Statusliste der zu löschenden Statusinformation: "ListeStatusLoeschen", wobei jeder Eintrag der Liste folgende Informationen aufweist:
   - Statustyp: "StatusType"
   - Statuswert: "StatusWert"
- Liste mit dem Namen der jeweilig zu löschenden Gruppe: "ListeGruppenLoeschen", wobei jeder Eintrag dieser Liste enthält:
   - Gruppenname: "GruppenName"
- Liste mit dem Namen der jeweilig hinzuzufügenden Gruppe:"ListeGruppenNeu", wobei jeder Eintrag dieser Liste enthält:
   - Gruppenname: "GruppenName"

Die Übergabeparameter für den Aufruf der Prozedur zum Löschen von ein oder mehreren Präsenztupeln lauten in diesem Ausführungsbeispiel:
- Name des Tupels: "TupelName"

Werden ein oder mehrere Listen für den jeweiligen Parametersatz der Prozedur zum Erstellen, Ändern, und/oder Löschen von Präsenztupeln verwendet, so ist es zweckmäßig, diese jeweils als Feld bzw. Array zu strukturieren. Innerhalb der jeweiligen Liste wird der jeweilige Gruppenname sowie Statustyp vorzugsweise eindeutig gewählt, damit der Präsenzserver eindeutig erkennen kann, welche Angabe wie zu ändern ist.

Figur 10 veranschaulicht schematisch den Nachrichtenfluss zwischen der Kommunikationseinheit des Repräsentanten RP1 und dem zugeordneten Präsenzserver PS1 z.B. zum Erstellen und Aktualisieren von ein oder mehreren Präsenzinformationen des Repräsentanten RP1 auf dem Präsenzserver PS1. In diesem Ausführungsbeispiel wünscht sich der Repräsentant RP1, dass er für die Gruppe "Freunde" unter der Telefonnummer "+4953419061814" erreichbar, für die Gruppe "Feinde" jedoch nicht erreichbar ist. Dabei ist der Repräsentant RP1 vorzugsweise über seine E-Mail-Adresse wie z.B. Mark.Beckmann@siemens.com in eindeutiger Weise identifizierbar. Weiterhin wird hier angenommen, dass der Repräsentant RP1 bereits die Beobachtergruppen "Freunde" und "Feinde" definiert hat, so dass die Zugehörigkeit von Beobachtern zu diesen Gruppen dem Präsenzserver bereits bekannt ist.

Der Repräsentant RP1 gibt nun in der Eingabeprozedur der Kommunikationseinheit seines Teilnehmergeräts an, dass er für die Beobachtergruppe "Freunde" den Statustyp "Verfügbarkeit" für sein Telefon mit der Nummer "+4953419061814" auf den Statuswert "erreichbar", und für die Beobachtergruppe "Feinde" den Statustyp "Verfügbarkeit" auf den Statuswert "nicht erreichbar" setzen möchte. Diese Eingabeprozedur ist dabei vorzugsweise als Menüsystem ausgebildet, aus der der jeweilige Repräsentant in einfacher Weise bereits voreingestellte Präsenzinformations-Parameter auswählen kann.

Die Eingabeprozedur der Kommunikationseinheit des Repräsentanten RP1 generiert aufgrund der vorgegebenen Präsenzinformationen nun ein erstes Anfragesignal bzw. Steuersignal AF1, das entsprechend Figur 10 vom Repräsentanten RP1 an den Präsenzserver PS1 gesendet wird. Figur 11 zeigt beispielhaft den Aufbau und den Inhalt des Steuersignals AF1, wenn dieses als sogenannte HTTP PUT-Nachricht ausgebildet ist (HTTP = Hyper Text Transfer Protocol; PUT = Anfrage, Informationen abzulesen). Mit Hilfe einer solchen HTTP PUT-Nachricht können Informationen von einer Netzwerkeinheit zu einer anderen Netzwerkeinheit transportiert werden, die mit der Adresse identifiziert werden, welche im sogenannten "Request-URI"-Parameter (URI = Uniform Resource Identifier; Request = Anfrage bzw. Anforderung) enthalten ist. Im Nachrichtenkörper der PUT-Nachricht ist entsprechend Figur 11 eine sogenannte SOAP-Nachricht (Simple Object Access Protocol) enthalten, welche die Prozeduraufrufe ATUP1, ATUP2 zum Erstellen von zwei Tupeln umfasst. Der Anfang der SOAP-Nachricht ist im Steuersignal AF1 von Figur 11 durch die Zeile "<SOAP-ENV:Envelope...>" kenntlich gemacht, so dass die Bereitstellungsprozedur auf dem Präsenzserver diese Erstellungsaufrufe ebenfalls identifizieren kann. Die Identität des Repräsentanten RP1 wird dem Präsenzserver PS1 mit Hilfe der Steuerzeile "<id:Identität xmlns:m=http://tempuri.org/message>Mark.Beckmann@siemens.com< /Identität>" mitgeteilt. In der nachfolgenden Sektion des Steuersignals AF1 von Figur 11 sind dann zwei Aufrufe der Prozedur zum Erstellen eines neuen Tupels enthalten, wobei die Tupel mit den Namen "Tupel1" und "Tupel2" bezeichnet sind.

Nach Empfang dieser Anfragenachricht AF1 erkennt der Präsenzserver PS1 anhand der Kopfzeile "ContentType", dass es sich um eine Nachricht im XML-Format (XML = Extensible Markup Language) handelt. Das Vorhandensein der Kopfzeile "SOAPAction" teilt dem Präsenzserver PS1 mit, dass das Steuersignal eine SOAP-Nachricht ist. Weiterhin erkennt der Präsenzserver PS1 anhand der Information "<m:TupelErstellen xmlns:m=http://tempuri.org/message/"> in der SOAP-Nachricht, dass die Prozedur "TupelErstellen" aufgerufen werden soll. Die Steuerzeile "xmlns:m=http://tempuri.org/message/" identifiziert eindeutig die Beschreibung der Nachrichten, insbesondere Präsenzinformations-Parameter, wie sie im Sektionsabschnitt zwischen den Zeilen "<m:TupelErstellen xmlns:m=http://tempuri.org/message/">" und "</m:TupelErstellen>" enthalten ist. Aufgrund der beiden Aufrufe ATUP1, ATUP2 im Steuersignal AF1 von Figur 11 legt der Präsenzserver mit Hilfe einer Erstellungsprozedur das Tupel TUP1 von Figur 7 mit dem Tupelnamen "Tupel1", sowie das Tupel TUP2 von Figur 8 mit dem Tupelnamen "Tupel2" in seiner Datenbasis an. Im Einzelnen werden die mit Hilfe des Steuersignals AF1 übermittelten Präsenzinformationen des Repräsentanten RP1 nach Aufruf der Erstellungsprozedur im Teilnehmergerät des Repräsentanten RP1 und nach Aufruf der Erstellungsprozedur in der Kommunikationseinheit des Präsenzservers pro Tupel in Form von je zwei Tabellen gespeichert. Entsprechend der Figur 7 teilt sich das Tupel TUP1 in die beiden Tabellen bzw. Felder TA1 und TA2 auf. In der Tabelle TA1 sind dabei der Tupelname "Tupell", die gewünschte Kommunikationsart "Tel" für Telefon, die zugehörige Kommunikationsadresse in Form der Telefonnummer "+4953419061814" sowie die Statusinformation über die Verfügbarkeit mit dem Wert "erreichbar" eingetragen. Diese Tabelle TA1 ist mit der Tabelle TA2 assoziiert bzw. verknüpft. In der Tabelle TA2 ist für das Tupel "Tupel1" die Beobachtergruppe mit dem Namen "Freunde" eingetragen, für die bei einem etwaigen Abruf von Präsenzinformationen über den Repräsentanten RP1 der Status für die Verfügbarkeit mit "erreichbar" angegeben werden soll. In entsprechender Weise ist das zweite Tupel TUP2 in die beiden Tabellen TA3, TA4 aufgeteilt, die datentechnisch miteinander verknüpft sind. In der ersten Tabelle bzw. im ersten Feld TA3 sind für das zweite Tupel die Parameter Tupelname "Tupel2", Kommunikationsart "Tel" für Telefon, die zugehörige Kommunikationsadresse, wie hier z.B. die Telefonnummer "+4953419061814", sowie als Statusinformation die Angabe über die Verfügbarkeit mit dem Wert "nicht erreichbar" eingetragen. In der der Tabelle TA3 zugeordneten Tabelle TA4 ist für dieses Tupel "Tupel2" TUP2 die Beobachtergruppe mit dem Namen "Feinde" abgelegt, für die die Präsenzinformationen der Parameter in der Tabelle TA3 gelten sollen. Alternativ dazu kann es ggf. zweckmäßig sein, die Präsenzinformations-Parameter mit ihren zugehörigen Werten in einer einzigen Tabelle pro Tupel abzulegen.

Bei dem im XML-Format erstellten Steuersignal AF1 von Figur 11 legt ein sogenannter XML-Namensbereich wie z.B. "xmlns:m="http://tempuri.org/message/" eindeutig den Bereich fest, in dem die auf diese Steuerzeile folgenden Befehle bzw. Anweisungen sowie zugehörigen Präsenzinformations-Parameter definiert sind. Mit anderen Worten heißt das, dass die Angabe, welcher Prozeduraufruf gewünscht ist, sowie welche Steueranweisungen und Präsenzinformations-Parameter für die Erstellungsprozedur bereitgestellt werden, in der Sektion des Steuersignals AF1 zwischen den Zeilen <"m:TupelErstellen xmlns:m="http://tempuri.org/message">" und "</m:TupelErstellen> nur eindeutig in diesem Bereich mitgeliefert wird. In einem anderen Bereich, wie z.B. "xmlns:xyz=http://Beispielbereich.com" kann ebenfalls der Prozedurname "TupelErstellen" vergeben worden sein, welcher jedoch eine völlig andere Bedeutung haben kann. XMLNS bedeutet dabei "Extensible Markup Language Name Space".

Mit Hilfe der Angaben in diesem gültigen Bereich und der Angabe der gewünschten, aufzurufenden Prozedur weiß der Präsenzserver PS1 nun eindeutig, welche Prozedur gemeint ist und welche Präsenzinformations-Parameter zur Abarbeitung dieser Steuerungsprozedur übernommen werden sollen. Im vorliegenden Ausführungsbeispiel sind dies z.B. bei der Erstellungsprozedur für das Tupel TUP1 mit dem Namen "Tupel1" die Präsenzinformations-Parameter Kommunikationsart mit dem Wert "Tel", die zugehörige Kommunikationsadresse mit dem Wert "+4953419061814", sowie die Statusliste mit dem Statustyp "Verfügbarkeit", der den Statuswert "erreichbar" hat, wobei noch die Gruppenliste mit dem Gruppennamen "Freunde" zugeordnet ist. Auf diese Weise verwendet also die Erstellungsprozedur bei ihrem Aufruf zur Verarbeitung die Informations-Parameter Kommunikationsart, Kommunikationsadresse, Gruppenliste, sowie Statusliste. Der Statustyp kann insbesondere wiederum im xmlns-Format angegeben werden. Dies hat den Vorteil, dass diese Information über den Statustyp auch so als Information an den jeweiligen Beobachter versendet werden kann. In diesem Fall bezeichnet die xmlns-Anweisungszeile "http://Beispiel.com/presence/Verfügbarkeit" den Statustyp "Verfügbarkeit".

Der Präsenzserver PS1 führt nun mit Hilfe dieser durch das Steuersignal AF1 übermittelten Daten die gewünschte Erstellungsprozedur aus, wodurch sich der auf dem Präsenzserver gespeicherte Status des jeweiligen Repräsentanten wie z.B. RP1 ändert. Das Ausführen dieser Erstellungsprozedur ist im Signalisierungsdiagramm von Figur 10 durch das Rechteck mit dem Bezugszeichen P1 gekennzeichnet. Den detaillierten Steuerungsablauf der Erstellungsprozedur zum zweckmäßigen Erstellen der beiden Tupel TUP1 und TUP2 auf dem Präsenzserver wird anhand des Ablaufdiagramms von Figur 12 näher erläutert:

Im ersten Schritt S1 werden die Präsenz-Informationsparameter aus dem empfangenen Steuersignal, wie z.B. AF1, eingelesen; dann wird die erste Gruppe, wie z.B. "Freunde", in der Liste von Gruppennamen abgearbeitet.

Im zweiten Schritt S2 speichert der Präsenzserver, wie z.B. PS1, zunächst den Tupelnamen, die zugehörige Kommunikationsart, Kommunikationsadresse, sowie Statusinformationen für den Repräsentanten, wie hier z.B. Mark.Beckmann@siemens.com.

Im dritten Entscheidungsschritt S3 sucht der Präsenzserver PS1 in den Präsenzinformations-Parametern, ob dort eine Liste von Gruppennamen enthalten ist, was er am Vorhandensein einer Gruppenliste und der entsprechenden Anweisungszeile "<Gruppenlisten>" erkennt.

Falls eine solche Gruppenliste vorhanden ist, was für vorliegendes Ausführungsbeispiel zutrifft, so speichert er im nachfolgenden vierten Schritt S4 zusätzlich eine Assoziation zwischen dem Tupelnamen und den in der Liste enthaltenen Gruppen.

Falls eine Gruppenliste nicht vorhanden ist, so endet die Erstellungsprozedur nach Durchführung des Schrittes S3 unmittelbar mit dem Schritt S5.

Nachdem für das vorliegende Ausführungsbeispiel die Erstellungsprozedur von Figur 12 zweimal durchlaufen worden ist, und somit die beiden Tupel TUP1, TUP2 entsprechend den Figuren 7, 8 auf dem Präsenzserver TS1 erstellt worden sind, sendet dieser eine Antwortnachricht AN1 an die Kommunikationseinheit RP1 des Repräsentanten zurück, was im Signalisierungsschema von Figur 10 dargestellt ist. Die Antwortnachricht AN1 mit der Namenszeile "HTTP/1.1 200 OK ist in der Figur 13 mit ihren Steuer- und Antwortparametern im Detail aufgelistet. Anhand der Zeile "<m:TupelErstellen xmlns:m=http://tempuri.org/message>" und der darauffolgenden Zeile "<Ergebnis>OK</Ergebnis>" erkennt die Präsenzinformations-Bearbeitungsprozedur der Kommunikationseinheit RP1 des Repräsentanten, dass die Erstellung der Tupel TUP1, TUP2 für die beiden Gruppen "Freunde" sowie "Feinde" auf dem Präsenzserver PS1 geglückt, d.h. erfolgreich durchgeführt worden ist. Im Fall, dass die Erstellungsprozedur auf dem Präsenzserver fehlschlagen würde, kann innerhalb des "<Ergebnis>"-Elements des jeweiligen Antwortsignals auch mindestens eine Fehlermeldung wie z.B. "interner Fehler" dem jeweilig Präsenzinformationen bereitstellenden Repräsentanten zur Kontrolle zurückgesandt werden.

Im vorliegendem Ausführungsbeispiel möchte nun nach einer Weile der Repräsentant der Kommunikationseinheit RP1 auch für die Beobachter der Gruppe "Freunde" nicht mehr erreichbar sein. Dazu nimmt der Repräsentant in der Datenbasis seiner Kommunikationseinheit RP1 mit Hilfe einer Präsenzinformations-Bearbeitungsprozedur entsprechende Statusänderungen vor. Die Bearbeitungsprozedur hat dabei mehrere Möglichkeiten, dem Wunsch des Repräsentanten nachzukommen. Sie kann entweder das erste Tupel TUP1 von Figur 7 löschen und das zweite Tupel TUP2 von Figur 8 so ändern, dass mit ihm beide Beobachtergruppen "Freunde" sowie "Feinde" assoziiert sind, oder lediglich den Statuswert für den Statustyp "Verfügbarkeit" im Tupel TUP1 auf "nicht erreichbar" ändern und somit beide Tupel TUP1, TUP2 erhalten.

Hier im Ausführungsbeispiel wird lediglich der Statuswert des Statustyps "Verfügbarkeit" des Tupels TUP1 von Figur 7 geändert bzw. modifiziert. Das derart veränderte erste Tupel ist in der Figur 9 mit TUP1* gekennzeichnet. Es weist einen gegenüber Figur 7 abgeänderten Statuswert "nicht erreichbar" für den Statustyp "Verfügbarkeit" auf. Um diese Aktualisierung bzw. Modifizierung des Präsenzinformationsprofils zu erreichen, sendet die Kommunikationseinheit RP1 im Teilnehmergerät des Repräsentanten ein Steuer- bzw. Anfragesignal AF2 entsprechend dem Signalisierungsschema von Figur 10 an den Präsenzserver PS1. Auch hierbei wird wiederum eine HTTP PUT-Nachricht verwendet. Dieses Steuersignal AF2 ist in der Figur 14 mit seinen Steueranweisungen und Übergabeparametern detailliert aufgelistet. Im Nachrichtenkörper befindet sich wiederum eine SOAP-Nachricht. In diesem Fall wird mit deren Hilfe jetzt die Prozedur zum Ändern von Tupeln aktiviert bzw. aufgerufen, wobei das zu ändernde Tupel in der Steuerzeile "<TupelName>" mit "Tupel1" und die zu ändernden Statusinformationen nach der Steuerzeile "<ListeStatusAendern>" in Form einer Liste angegeben sind. Beim Steuersignal AF2 von Figur 14 wird in der Anweisungszeile "<StatusType>" der Statustyp "Verfügbarkeit" auf den neuen Wert "<StatusWert>" "nicht erreichbar" gesetzt.

Nach Empfang dieses Steuersignals AF2 erkennt der Präsenzserver PS1 wiederum anhand der Kopfzeile "Content-Type", dass es sich um eine Nachricht im xml (Extensible Markup Language) Format handelt. Das Vorhandensein der Kopfzeile "SOAP-Action" teilt dem Präsenzserver PS1 mit, dass das Steuersignal AF2 im SOAP-Format realisiert ist. Weiterhin liest der Präsenzserver PS1 aus der Informationszeile "<m:TupelAendern xmlns:m="http://tempuri.org/message" >" in der SOAP-Nachricht ab, dass die Prozedur "TupelAendern" aufgerufen bzw. aktiviert werden soll, welche unter demselben Datenbereich "xmlns:m=http://tempuri.org/message/" definiert worden ist. In der Figur 10 ist die Aktivierung dieser Prozedur zum Ändern bzw. Modifizieren der Präsenzinformationen anhand eines Rechtecks mit dem Bezugszeichen P2 angedeutet.

Der Ablauf dieser zweckmäßigen Änderungs- bzw. Aktualisierungsprozedur auf dem Präsenzserver PS1 ist beispielhaft im Ablaufprogramm von Figur 15 schematisch dargestellt:

In Schritt I1 werden die Steueranweisungen und Präsenzinformations-Parameter aus dem Steuersignal AF2 ausgelesen und zur Auswertung bereitgestellt. Insbesondere wird aus der Datenbasis des Präsenzservers PS1 der Datensatz desjenigen Tupels bereitgestellt, das im empfangenen Steuersignal für die Modifikation benannt ist. Hier im Ausführungsbeispiel ist in der Parameterzeile "<TupelName>" des Steuersignals AF2 das Tupel TUP1 mit dem Namen "Tupel1" zur Modifikation benannt, das dem Repräsentanten "Mark.Beckmann@siemens.com" entsprechend der Parameterzeile "xmlns:m=http://tempuri.org/message..." zugeordnet ist.

Im Entscheidungsschritt I2 ermittelt der Präsenserver PS1, ob Kommunikationsinformationen im Steuersignal AF2 vorhanden sind. Dies erkennt er daran, ob die Elemente "<KommunikationsArt>", "<KommunikationsAdresse>" oder "<Priorität>" vorhanden sind.

Ist dies der Fall, so prüft der Präsenzserver PS1 in einem weiteren Entscheidungsschritt I3, ob in dem momentan bereits abgespeicherten Tupel - wie hier TUP1 - schon Kommunikationsinformationen vorhanden sind.

Wäre dies der Fall, so würden diese Kommunikationsinformationen in einem Schritt I4 geändert.

Andernfalls würden die Kommunikationsinformationen in einem Schritt I5 hinzugefügt.

Im vorliegenden Fall sind keine Kommunikationsinformationen im Steuersignal AF2 vorhanden. Deshalb springt die Aktualisierungsprozedur im Präsenzserver PS1 zu Schritt I6, in dem die Statusinformationen der Liste "<ListeStatusAendern>" geändert werden, sowie die Statusinformationen in den Listen "<ListeStatusNeu>" und "<ListeStatusLöschen>" hinzugefügt bzw. gelöscht werden. Im vorliegenden Fall wird somit der Statuswert des Statustyps "Verfügbarkeit" auf den Wert "nicht erreichbar" gesetzt.

Im letzten Schritt I7 werden schließlich die Beobachtergruppen, welche mit dem Tupel, wie z.B. hier TUP1 assoziiert sind, hinzugefügt ("<ListeGruppenNeu>") bzw. entfernt ("<ListeGruppeLoeschen>").

Nach Ablauf der Aktualisierungsprozedur hat für das vorliegende Ausführungsbeispiel sowohl das Teilnehmergerät des Repräsentanten als auch der Präsenzserver in mindestens einer Speichervorrichtung den veränderten Tupelsatz TUP1* entsprechend Figur 9 mit den Tabellen TA5 und TA6 abgespeichert. Dem Tupel mit dem Tupelnamen "Tupel1" ist dabei jetzt für die Kommunikationsart "Tel" die Kommunikationsadresse "+4953419061814", für die Statusinformation "Verfügbarkeit" der Wert "nicht erreichbar" für die Gruppe "Freunde" zugeordnet. Die Tabelle TA6 ist dabei mit der Tabelle TA5 durch eine Assoziation bzw. einen Link (Verkettung) datentechnisch verknüpft. Alternativ dazu kann es ggf. zweckmäßig sein, die Präsenzinformations-Parameter mit ihren zugehörigen Werten in einer einzigen Tabelle pro Tupel abzulegen.

Nachdem die Aktualisierungsprozedur P2 entsprechend der Figur 10 ausgeführt worden ist, sendet der Präsenzserver PS1 wiederum ein Antwortsignal AN2 an das Teilnehmergerät, insbesondere an das Funkkommunikationsgerät, des Repräsentanten mit der Kommunikationseinheit RP1 zurück. Für dieses Antwortsignal gelten die Angaben und Erläuterungen zum Antwortsignal AN1 in entsprechender Weise mit dem Unterschied, dass anstatt des Elements "<AntwortTupelErstellen>" das Element "<Antwort-TupelAendern>" in der SOAP-Nachricht enthalten ist.

Schließlich können mit einem ähnlichen Ablauf wie für das Erstellen und Ändern von Präsenzinformations-Tupeln auch Tupel gelöscht werden.

Weiterhin kann es zweckmäßig sein, für den jeweiligen Anweisungssatz und Präsenzinformations-Parametersatz des jeweiligen Steuer- und/oder Antwortsignals das sogenannte SIP-Protokoll (Session Initiation Protocol) anstelle des HTTP-Protokolls zu verwenden.

Auf diese Weise ist es insbesondere ermöglicht, einen Präsenzservice in einem Kommunikationsnetz, insbesondere Mobilfunknetz, bereitzustellen, bei dem eine Vielzahl von Präsenzinformationen für den jeweiligen Teilnehmer zentralisiert auf mindestens einem Präsenzserver abrufbar und/oder weiterleitbar abgelegt werden kann. Dabei kann in einfacher Weise eine Aktualisierung, d.h. das Erstellen, Ändern und/oder Löschen von Präsenzinformations-Tupeln durchgeführt werden.

Wenn eine Einschreibungs-Nachricht der Kommunikationseinheit eines Beobachters am Präsenzserver eintrifft, kann der Präsenzserver insbesondere mit Hilfe der Gruppen, die ein Repräsentant in vorteilhafter Weise erstellt hat, prüfen, ob der Beobachter einer dieser Gruppen zugehört - und wenn ja - welcher. Falls der Beobachter einer vom Repräsentanten festgelegten Gruppe angehört, sendet der Präsenzserver die entsprechende Präsenzinformation dem Beobachter vorzugsweise automatisch oder auf explizitem Abruf hin zu. Gehört der Beobachter z.B. der Gruppe "Freunde" an, wird dem Beobachter der momentane Statuswert mitgeteilt, wie z.B., dass der Repräsentant "erreichbar" ist.

Das nachfolgende, weitere Ausführungsbeispiel zeigt eine zweckmäßige Variante auf, wie der jeweilige Repräsentant ein oder mehrere Gruppen von Kommunikationseinheiten erstellen, modifizieren, und/oder löschen kann. Der Repräsentant kann also eine neue Gruppe erstellen und ihr eine Gruppen-Kategorie sowie eine Liste von Beobachtern zuweisen. Weiterhin kann er eine Gruppe modifizieren oder löschen, d.h. insbesondere deren Kategorie ändern, oder Beobachter hinzufügen oder entfernen. Dabei ist es dem Repräsentanten in vorteilhafter Weise ermöglicht, diese Prozeduren auf dem Präsenzserver von seinem Funkkommunikationsgerät aus zu starten und somit Gruppen zu erstellen, zu löschen, und/oder zu modifizieren. Dies kann auch über eine Bedienoberfläche auf dem Funkkommunikationsgerät erfolgen. So kann der Repräsentant einfach auf seinem Endgerät die Gruppen erstellen, modifizieren, und/oder löschen. Eine dort installierte Präsenzinformationsprozedur übernimmt dann automatisch den Aufruf der entsprechenden Steuerprozeduren auf dem Präsenzserver.

Gemäß diesem Ausführungsbeispiel umfasst die Prozedur zur Erstellung von Präsenzgruppen vorzugsweise ein oder mehrere der folgenden Funktionen:
- Anlegen einer Gruppe und Festlegen des Gruppennamens;
- Zuweisen einer Gruppen-Kategorie als übergeordnete Ordnung zur jeweiligen Gruppe, wobei die Gruppen-Kategorien sich insbesondere in "persönliche", "öffentliche" und "verbotene" differenziert unterteilen lassen;
- Zuweisen einer Liste von Beobachtern, die der jeweiligen Gruppe zugeordnet werden sollen;

Diese gruppenspezifischen Informationen werden dann zusammen mit der Identität des Repräsentanten im Präsenzserver gespeichert, welche ebenfalls dem Präsenzserver mitgeteilt wird.

Gemäß diesem Ausführungsbeispiel umfasst die Prozedur zum Löschen von Präsenzgruppen vorzugsweise folgende Funktion:
- Löschen einer Gruppe und Liste von Beobachtern, die dieser Liste zugeordnet wurden;

Weiterhin kann die Prozedur zum Modifizieren von Präsenzgruppen insbesondere ein oder mehrere der folgenden Funktionen enthalten:
- Ändern des Gruppennamens;
- Ändern der Gruppenkategorie;
- Löschen von Beobachtern aus der Liste der Beobachter, die dieser Gruppe zugeordnet sind;
- Hinzufügen von Beobachtern zu der Liste der Beobachter, die dieser Gruppe zugeordnet sind;

Der Aufruf der Prozeduren durch den Repräsentanten bzw. durch die Präsenzsoftware auf dem Funkkommunikationsgerät, insbesondere Mobilfunkgerät, des Repräsentanten wird hier im Ausführungsbeispiel wie bei den vorhergehenden Ausführungsvarianten durch das Senden einer eigenen Anfrage-Nachricht bzw. ein Gruppensteuersignal an den Server bewirkt. Ob die Prozedur erfolgreich ausgeführt werden konnte, teilt der Präsenzserver dem Repräsentanten bzw. dessen Mobilfunkgerät durch das Senden eines Antwortsignals in entsprechender Weise mit.

Um dem Präsenzserver mitzuteilen, dass mit der Anfrage-Nachricht eine Präsenzinformations- Verwaltungsprozedur aufgerufen werden soll, enthält die Anfrage-Nachricht eine Information, welche dies dem Präsenzserver mitteilt. Um es dem Präsenzserver zu ermöglichen, die Anfrage einem bestimmten Repräsentanten zuzuordnen, ist zweckmäßigerweise eine Identität des Repräsentanten in der Nachricht enthalten. Weiterhin ist der Name dieser Prozedur im jeweiligen Funkkommunikationsgerät des Repräsentanten und dem zugeordneten Präsenzserver bekannt gemacht. Der entsprechende Prozedurname wird der jeweiligen Anfrage-Nachricht beigefügt. In dieser werden darüber hinaus die notwendigen Parameter für den Aufruf der Prozedur mitgesendet.

Die Parameter für die Erstellung von Gruppen beinhalten dabei vorzugsweise:
- den Gruppennamen,
- die Gruppen-Kategorie, die der jeweiligen Gruppe zugewiesen werden soll, und
- eine Liste von Beobachtern, die dieser Gruppe angehören sollen.

Die Parameter für das Löschen von Gruppen bestehen insbesondere aus
- dem Gruppennamen.

Die Parameter für die Modifizierung von Gruppen umfassen vorzugsweise:
- den alten und neuen Gruppennamen. Falls der Gruppenname nicht modifiziert werden soll, braucht der neue Gruppenname nicht vorhanden sein. Einige Protokolle zur Beschreibung der Prozeduren lassen allerdings optionale Parameter nicht zu. Für diesen Fall sind zweckmäßigerweise beide Parameter (alter und neuer Gruppenname) vorhanden.
- die Gruppenkategorie. Falls die Gruppen-Kategorie nicht modifiziert werden soll, braucht dieser Parameter nicht vorhanden sein. Einige Protokolle zur Beschreibung der Prozeduren lassen allerdings optionale Parameter nicht zu. Für diesen Fall ist dieser Parameter zweckmäßigerweise immer vorhanden.
- die Liste von zu löschenden Beobachtern.
- die Liste von hinzuzufügenden Beobachtern.

Nachdem der Präsenzserver die Prozedur durchgeführt hat, sendet der Präsenzserver eine Antwort-Nachricht an das Funkkommunikationsgerät des Repräsentanten, in dem eine Identität des Repräsentanten enthalten ist, so dass der Repräsentant bzw. dessen Funkkommunikationsgerät, insbesondere Mobilfunkstation, erkennen kann, dass die Antwort für ihn bestimmt ist. Weiterhin kann die Antwortnachricht ggf. eine Information enthalten, die darauf hinweist, dass es sich um eine Antwort zu der Anfrage handelt, mit der die Verwaltungsprozedur auf dem Präsenzserver gestartet wurde. Letztendlich kann die Antwortnachricht auch eine Information darüber beinhalten, welche Prozedur aufgerufen wurde, und ob sie erfolgreich war oder nicht. Für den Fall, dass der Aufruf einer Prozedur nicht erfolgreich war, gibt die Antwortnachricht einen Grund dafür an. Die Gründe können dabei vorzugsweise mindestens folgende Fehler indizieren:
- Interner Fehler (z.B. Prozessorfehler)
- fehlender Parameter mit Angabe des betroffenen Parameternamens
- Falscher Wertebereich eines Parameters mit Angabe des betroffenen Parameternamens.

Für diesen wechselseitigen Nachrichtenaustausch zwischen jeweiligem Repräsentanten und zugeordnetem Präsenzserver wird vorzugsweise das sogenannte Hyper Text Transfer Protocol (HTTP) (RFC 2616: Hyper Text Transfer Protocol 1.1) oder das Session Initiation Protocol (SIP) (RFC 3261: Session Initiation Protocol) verwendet. Diese Protokolle basieren auf dem oben beschriebenen Anfrage-/Antwort- Mechanismus. Bei Verwendung des SIP Protokolls wird in vorteilhafter Weise zusätzlich bereits die Identität des Repräsentanten in den Nachrichten signalisiert.

Ein weiterer Vorteil beider Protokolle ist, dass sie im sogenannten Nachrichten-Körper Daten transportieren können. Bei diesen Daten kann es sich insbesondere auch um Nachrichten des sogenannten SOAP (Simple Object Access Protocol) Protokolls handeln, wie es in http://www.w3.org/TR/SOAP/ : Simple Object Access Protocol 1.1 spezifiziert ist. Das SOAP Protokoll hat insbesondere den Vorteil, dass es eine Nachrichtenformatierung zur Verfügung stellt, mit der eine Prozedur aufgerufen und deren Parameter angegeben werden können.

Im nachfolgenden wird nochmals detaillierter anhand der Figuren 16 mit 20 erläutert, wie ein Repräsentant mit Hilfe einer Präsenzinformations-Verwaltungsprozedur und eines Kommunikationsgeräts, insbesondere Funkkommunikationsgeräts in einem Funkkommunikationssystem, eine neue, gewünschte Präsenzgruppe durch Aufruf einer Prozedur auf dem Präsenzserver erstellen kann. Dabei kennt die Präsenzinformations-Verwaltungsprozedur bzw. -Software auf dem Kommunikationsgerät wie z.B. Mobilfunkgerät sowohl den Namen der Prozeduren zum Erstellen, Löschen und Modifizieren von Präsenzgruppen als auch die Parameter zu den jeweiligen Prozeduren. In diesem Ausführungsbeispiel lautet die Prozedur zum Erstellen von Presence-Gruppen "ErstellePresenceGruppe". Die Namen der anderen Prozeduren sind für dieses Ausführungsbeispiel nicht relevant, da lediglich das Erstellen einer Präsenz-Gruppe beschrieben wird. Weiterhin sind die Parameter beispielhaft folgendermaßen bezeichnet:
- Gruppenname: "GruppenName"
- Gruppenkategorie: "GruppenKategorie"
- Benutzerliste: "BenutzerListe"

Gruppenname und -kategorie werden dabei als Text dargestellt. Die Beobachterliste wird als eine Liste dargestellt (z.B. einem "array"), in der jeder Beobachtername in eindeutiger Weise niederlegt ist.

Ein Repräsentant erstellt auf seinem Terminal bzw. Kommunikationsgerät TE (siehe Figur 16) mit Hilfe seiner Präsenzinformations-Software eine neue Präsenzgruppe mit dem Namen "Freunde" und weist dieser Liste die Kategorie "persönlich" zu. Außerdem legt er fest, dass die Beobachter mit den Adressen Freundl@eintracht.com, Freund2@eintracht.com und Freund3@eintracht.com dieser Gruppe angehören sollen.

Nachdem der Repräsentant die Erstellung der neuen Gruppe mit der Presence-Software auf seinem Kommunikationsendgerät bzw. Terminal TE abgeschlossen hat, sendet diese Presence -Software nun eine Anfrage-Nachricht bzw. ein Gruppensteuersignal RQ an den Präsenzserver PS. Dieses Gruppensteuersignal RQ ist schematisch in Figur 16 dargestellt. Dort überträgt das Endgerät TE (Terminal) das Gruppensteuersignal RQ (Request) an den Präsenzserver PS. Dabei enthält das Anfragesignal RQ einen Hinweis bzw. ein Kommando, mit dem die Verwaltungs-Prozedur auf dem Präsenzserver aufgerufen wird, sowie entsprechende Parameter zum Erstellen der gewünschten Gruppe enthalten sind. Nach Abarbeitung der Prozedur, sendet der Präsenzserver PS die Antwort-Nachricht RS (Response) an das Terminal TE zurück, was als Bestätigung für den Empfang der Anfrage-Nachricht RQ gilt und das Ergebnis des Prozedurdurchlaufs enthält. Vorzugsweise sind die Anfrage- und Antwort- Nachrichten durch HTTP Nachrichten realisiert. Die Anfrage- Nachricht ist eine sogenannte PUT Nachricht, welche dazu verwendet werden kann, Informationen von einer Netzwerkeinheit zu einer anderen Netzwerkeinheit zu transportieren, wo sie unter der Adresse, welche in der sogenannten "Request-URI" enthalten ist, gespeichert wird. Die Nachrichten enthalten eine SOAP Nachrichten-Körper, dessen Anfang durch die Zeile <SOAP-ENV:Envelope.... kenntlich gemacht ist. Die Identität des Repräsentanten wird dem Präsenzserver mit der Zeile <id:Identität xmlns:m=http://tempuri.org/message>Repraesentant@example.com< /Identität> in der Anfrage-Nachricht RQ mitgeteilt (siehe Figur 19).

Nach Empfang der Anfrage-Nachricht RQ, erkennt der Präsenzserver an Hand der Kopfzeile "Content-Type" (siehe Figur 19), dass es sich um eine Nachricht im XML (Extensible Markup Language) Format handelt. Das Vorhandensein der Kopfzeile "SOAPAction" teilt dem Präsenzserver mit, dass es sich um eine SOAP Nachricht handelt. Weiterhin erkennt der Presence Server an Hand der Information <m:ErstellePresenceGruppe xmlns:m="http://tempuri.org/message/"> in der SOAP Nachricht, dass die Prozedur "ErstellePresenceGruppe" aufgerufen werden soll. Der Teil "xmlns:m=http://tempuri.org/message/" identifiziert in eindeutiger Weise die Beschreibung der Nachrichten, wie sie zwischen den Zeilen <m:ErstellePresenceGruppe xmlns:m="http://tempuri.org/message/"> und </m:ErstellePresenceGruppe> zur Erstellung der gewünschten Gruppe enthalten sind.

Die Anweisungszeile "xmlns:m="http://tempuri.org/message/"" identifiziert eindeutig den Bereich, in dem die auf das "m:" folgenden Befehle definiert sind. Das heißt, die Prozedur und wie die Nachricht zwischen <m:ErstellePresenceGruppe xmlns:m="http://tempuri.org/message/"> und </m:ErstellePresenceGruppe> dargestellt ist, ist nur eindeutig in diesem Bereich festgelegt. In einem anderen Bereich, z.B. "xmlns:xyz=http://Beispielbereich.com"" kann ebenfalls der Prozedurname "ErstellePresenceGruppe" vergeben worden sein, welcher jedoch eine völlig andere Bedeutung haben kann. xmlns bedeutet "Extensible Markup Language Name Space" und legt eben genau den relevanten Anweisungs- und Parameterbereich fest.

Mit Hilfe der Angaben zum gültigen Bereich und der Angabe der Prozedur weiß der Präsenzserver nun eindeutig, welche Verwaltungsprozedur gemeint ist, und welche Parameter zur Abarbeitung dieser Gruppenerstellungsprozedur zweckmäßig sind (das heißt das Format zwischen den Zeilen
<m:ErstellePresenceGruppen...> und </m:ErstellePresenceGruppenAntwort>). Für den Aufruf der Prozedur verwendet der Präsenzserver die Parameterwerte, wie sie in den darauf folgenden Zeilen von Figur 19 für den GruppenNamen, Gruppen-Kategorie und die Beobachterliste angegeben sind. Der Präsenzserver generiert mit diesen Daten die neue Gruppe und speichert sie mit der Identität des Repräsentanten ab. Anschließend sendet der Präsenzserver die Antwort-Nachricht RS an das Terminal TE zurück.

Die Antwort-Nachricht RS (2000K) ist in Figur 20 dargestellt. An Hand der Zeile <m:ErstellePresenceGruppeAntwort xmlns:m="http://tempuri.org/message/"> und der darauf folgenden Zeile <Ergebnis>OK</Ergebnis> erkennt die Presence-Software des Repräsentanten, dass die Erstellung der gewünschten Gruppe "Freunde" geglückt ist. Für den Fall, dass die Prozedur fehlgeschlagen wäre, kann innerhalb des <Ergebnis> Elements auch die Fehlermeldung (z.B. interner Fehler) angegeben werden.

Figur 17 veranschaulicht schematisch diesen Anfrage-/AntwortMechanismus speziell zwischen einem Mobilfunkgerät TE, insbesondere Mobilfunktelefon, und einem Präsenzserver PS in einem zellularen Mobilfunknetz. Dabei ist der Präsenzserver Bestandteil der Funknetzwerkinfrastruktur. Der Kommunikationsverkehr zwischen dem Mobilfunkgerät TE und dem Präsenzserver PS erfolgt über eine Luftschnittstelle LS unter Zwischenschaltung einer Basisstation BS in der aktuellen Aufenthaltsfunkzelle des Mobilfunkgeräts. Diese Basisstation BS setzt das über die Luftschnittstelle LS ankommende Funk- Gruppensteuersignal RQ in eine leitungsgebundes Anfragesignal zum Weiterleiten an den Präsenzserver um, und transferiert umgekehrt das vom Präsenzserver PS zurückgesandte, netzwerkseitige Antwortsignal RS in ein Funksignal zum Abstrahlen an das Mobilfunkgerät TE.

Das Ablaufdiagramm von Figur 18 verdeutlicht schließlich die zeitlich aufeinanderfolgenden Schritte, die vom Präsenzserver nach Eingehen einer Gruppensteuernachricht sukzessive abgearbeitet werden, um eine Gruppe in vorteilhafter Weise zu Erstellen, zu Modifizieren, und/oder zu Löschen:
- Schritt P1:: Einlesen des Prozedur Namens aus der Anfragenachricht;
- Schritt P2:: Festellen, ob die Prozedur zum Erstellen von Gruppen aufgerufen werden soll;
- Schritt P3:: falls eine Gruppe erstellt werden soll, Auslesen der Parameter aus der Nachricht;
- Schritt P4:: Speichern von Gruppen- Name, Gruppen-Kategorie und Beobachtern unter der Identität des Repräsentanten;
- Schritt P5:: falls nicht die Prozedur zum Erstellen von Gruppen aufgerufen werden soll, wird festgestellt, ob stattdessen eine Gruppe modifiziert werden soll;
- Schritt P6:: falls eine Gruppe modifiziert werden soll, werden die Parameter aus der Nachricht ausgelesen;
- Schritt P7:: Festellen, ob einer der Parameter einen neuen Gruppenname enthält. Falls dies nicht der Fall ist, wird Schritt P8 übergangen;
- Schritt P8:: falls ein neuer Gruppenname enthalten ist, wird der Gruppenname geändert;
- Schritt P9:: Feststellen, ob einer der Parameter die Gruppenkategorie enthält; falls dies nicht der Fall ist, wird Schritt P10 übersprungen;
- Schritt P10:: falls eine Gruppenkategorie enthalten ist, wird diese für die Gruppe aktualisiert;
- Schritt 11:: die in den Parametern der Nachricht enthaltenen Beobachter zum Löschen, werden von der auf dem Präsenzserver gespeicherten Beobachter-Liste gelöscht, und die in den Parametern der Nachricht enthaltene Beobachter zum Hinzufügen, werden hinzugefügt;
- Schritt P12:: falls in Schritt P5 festgestellt wird, dass keine Gruppen modifiziert werden sollen, wird die Prozedur zum Löschen einer Gruppe aufgerufen; dazu wird der Parameter, welcher den Gruppennamen der zu löschenden Gruppe enthält, ausgelesen und die Informationen bzgl. der Gruppe gelöscht;

Vorteilhaft bei der vorstehenden Ausführungsvariante ist somit zusammenfassend betrachtet insbesondere:
- Festlegung der Funktionalitäten der Prozeduren;
- Festlegung der Parameter, welche bei Aufruf der Prozeduren in einer Anfrage-Nachricht enthalten sind;
- Festlegung der Informationen, welche in der Anfrage- und Antwort-Nachricht vorhanden sind;
- Festlegung der Fehler-Gründe, welche ggf. in der Antwort-Nachricht enthalten sind, falls eine Prozedur nicht ausgeführt werden kann;
- spezielle Verwendung der Protokolle HTTP/SOAP bzw. SIP/SOAP.

Der Präsenzservice ist ein Dienst bei dem sich sogenannte Beobachter über die Erreichbarkeit eines Repräsentanten informieren können. Dafür schreibt sich der Beobachter bei einem Präsenzserver zu den Präsenzdaten des Repräsentanten ein. Nach Einschreibung zu den Präsenzdaten wird der aktuelle Status des Repräsentanten von dessen Präsenzserver an den Beobachter gesendet. Sobald sich der Status des Repräsentanten ändert, wird wiederum der neue Status an den Beobachter gesendet. Ein Beschreibung eines solchen Präsenzservice's ist beispielsweise in RFC 2778 A Model for Presence and Instant Messaging angegeben. In der Spezifikation draft-ietf-cpim-pidf-02.txt CPIM Presence Information Data Format ist das Datenformat definiert, welches verwendet wird, um den Beobachter über den Status des Repräsentanten zu informieren. Ein einfaches Beispiel dafür ist in Figur 21 zu sehen. Das Präsenzdaten- Format besteht aus einer Präsenzeinheit bzw. einem Präsenzmodul. Der Anfang der Präsenzeinheit ist mit "<Presence xmlns.....>" gekennzeichnet. xmlns steht für "eXtensible Markup Language Name Space" und wird in diesem Zusammenhang dafür verwendet, das Datenformat eindeutig zu identifizieren. Das Ende des Präsenzmoduls wird mit der Zeile "</Presence>" gekennzeichnet. Eine Präsenzeinheit umfasst mindestens eine Identität des Repräsentanten (<Presentity-ID>) und einen oder mehrere sogenannte Tupel. Die Tupel innerhalb einer Präsenzeinheit haben zweckmäßigerweise unterschiedliche Identitäten (Tuple ID). Jedes Tupel weist mindestens ein <Status> Element auf, welches wiederum mindestens ein <Value> Element enthält.

In der Spezifikation draft-ietf-cpim-pidf-02.txt, CPIM Presence Information Data Format werden bisher bzgl. des <Value> Elements lediglich die Werte "Open" und "Closed" definiert. Das heißt, es können lediglich zwei Zustände angezeigt werden. Die Bedeutung der Werte ist in der Spezifikation RFC 2778, A Model for Presence and Instant Messaging insbesondere im Zusammenhang mit dem sogenannten Instant Messaging Service beschrieben, kann aber auch auf andere Kommunikationswege übertragen werden. "Closed" steht im Zusammenhang mit Instant Messaging dabei für eine geschlossenen Posteingang, das heißt es können keine Nachrichten empfangen werden. Im Zustand "O-pen" hingegen ist der Posteingang geöffnet, und Nachrichten können empfangen werden. Präsenzservices werden über verschiedene nationale und internationale Anbieter bzw. Provider angeboten.

Wünschenswert ist es insbesondere, dem jeweiligen Repräsentanten mehr als zwei Möglichkeiten zu geben, seinen Status zu beschreiben. So ist zum Beispiel zweckmäßig, den Status des jeweiligen Repräsentanten mit den Werten "Online", "Beschäftigt", "Bin gleich zurück", "Abwesend", "am Telefon" etc. zu kennzeichnen. Wird zum Beispiel der Status auf den Wert "am Telefon" gesetzt, ist der Repräsentant nicht über Telefon zu erreichen, aber ein Beobachter kann ihm immer noch Nachrichten senden.

Eine weitere Aufgabe ist es deshalb insbesondere, einen Weg aufzuzeigen, wie die Kompatibilität zwischen einer Vielzahl von, vorzugsweise mehr als zwei, Definitionen von Präsenzstatuswerten (Presence Status) in der Präsenzinformationen bereitstellenden Kommunikationseinheit des jeweiligen Repräsentanten, in einem ersten Präsenzserver, an dem der Repräsentant momentan angekoppelt ist, und /oder in ein oder mehreren Präsenzinformationen abrufenden bzw. empfangenden Beobachter-Kommunikationseinheiten hergestellt werden kann, die ggf. an einen zweiten Präsenzserver angekoppelt sind - und zwar selbst dann, wenn unterschiedliche Definitionen für die Präsenzstatuswerte im ersten, im ggf. zweiten Präsenzserver, und/oder in der jeweiligen, Präsenzinformationen bereitstellenden und/oder abrufenden Kommunikationseinheit verwendet sind.

Dazu werden in vorteilhafter Weise an die Präsenzinformationen abrufende bzw. empfangende Kommunikationseinheit Präsenzinformationsprofil-Definitionen desjenigen Präsenzservers heruntergeladen, auf dem das Präsenzinformationsprofil der Präsenzinformationen verfügbar machenden Kommunikationseinheit gespeichert wird. Von der Präsenzinformationen abrufenden Kommunikationseinheit werden dann in vorteilhafter Weise die heruntergeladenen Präsenzinformationsprofil-Definitionen der Präsenzinformationen verfügbar machenden Kommunikationseinheit mit den Präsenzinformationsprofil-Definitionen auf dem zugeordneten, eigenen Präsenzserver abgeglichen. Zusätzlich oder unabhängig hiervon kann es ggf. auch zweckmäßig sein, an die Präsenzinformationen verfügbar machenden Kommunikationseinheit selbst Präsenzinformationsprofil-Definitionen desjenigen Präsenzservers herunterzuladen, auf dem das Präsenzinformationsprofil der Präsenzinformationen abrufenden Kommunikationseinheit gespeichert wird. Von der Präsenzinformationen verfügbar machenden Kommunikationseinheit werden dann die heruntergeladenen Präsenzinformationsprofil-Definitionen der Präsenzinformationen abrufenden bzw. empfangenden Kommunikationseinheit mit den Präsenzinformationsprofil-Definitionen auf dem zugeordneten, eigenen Präsenzserver abgeglichen. Dieses Grundprinzip wird anhand der Figuren 22 mit 25 näher erläutert:

Entsprechend der Figur 24 hat sich ein erster Nutzer mit Hilfe einer ersten Präsenzinformations- Anwendung bzw.- Prozedur, welche auf der Kommunikationseinheit UE1 seines Mobilfunkgeräts installiert ist, an einem ersten Präsenzserver PS1 eingeschrieben. Diese Ankopplung ist durch einen Doppelpfeil HD1 angedeutet. Die Kommunikationseinheit UE1 will ihre Präsenzinformationen auf dem Präsenzserver PS1 für eine Gruppe von beobachtenden Kommunikationseinheiten wie z.B. UE2 in Figur 24 bereitstellen, d.h. erstellen, modifizieren, und/oder löschen, und fungiert somit im vorliegenden Fall als Repräsentant. Während der Einschreibung wurden der ersten Kommunikationseinheit UE1 Definitionen der vom ersten Präsenzserver PS1 verwendeten Statuswerte zugesandt. Diese werden an die Präsenzanwendung der Kommunikationseinheit UE1 weitergeleitet. Die Definitionen der Statuswerte können beispielsweise über die "Extensibel Markup Language (XML)" formatiert sein. Zweckmäßigerweise wird ein festes Format netzeinheitlich im Funknetzwerk verwendet, so dass unterschiedliche Anwendungen die Definitionen der Statuswerte interpretieren können. Beispielhafte Definitionen dafür sind in der Figur 22 dargestellt. Dort legen die Definitionen, die jeweils über eine global eindeutige xmlns in Form einer URI (<StatusValueDef xmlns="http://ps1.example.com/presence/ext">) identifizierbar sind, drei verschiedene Statuswerte "online", "offline" und "on the phone" (URI=uniform resource identifier) fest. Die Identität des Präsenzserver's, welcher die Definitionen verwaltet, ist in der Zeile "<PresenceServer>PS1.example.com</PresenceServer>" mit PS1 angegeben. Der Name des jeweiligen Statuswertes ist jeweils mit "<StatusValue name="..."> kennzeichnet - z.B. im Falle des Statuszustands "online" eben mit "<StatusValue name="online">". Zusätzlich ist für jeden Statuswert eine Beschreibung angegeben, welche mit "<Description>Beschreibung</Description>" gekennzeichnet ist. Weiterhin ist für jeden Statuswert ein Link bzw. ein Verweis oder Zeiger zu einer Adresse vorgesehen, wo ein entsprechendes Bildchen heruntergeladen werden kann ("<Icon>http://www.PS1.com/online-icon.jpg</Icon>").

Im einzelnen ist die Präsenzinformationen zur Verfügung stellende Kommunikationseinheit UE1 von Figur 24 nach dem Tableau von Figur 22 im Statuszustand "online" über Telefon (Audio-Call), Video-Telefon (VideoCall), Chat oder Instant Messaging (Chat), sowie Nachrichten wie SMS oder MMS (Messaging) erreichbar. Außerdem steht sie für Spiele (Gaming) und Whiteboard Sitzungen zur Verfügung.

Der Vollständigkeit halber ist in der Figur 22 gezeigt, wie für den Wert <Messaging> im Statuszustand "online" angezeigt werden kann, dass der Nutzer über das Eintreffen einer Nachricht notifiziert bzw. benachrichtigt wird. Dies wird in diesem Beispiel dadurch erreicht, dass das Element <Messaging> in zwei Unterelemente <Availability> und <Notification> unterteilt wird. Mit <Availability> wird dabei angegeben, ob der Nutzer unter Messaging erreichbar ist. Mit <Notification> wird angegeben, ob er über eintreffende Nachrichten unterrichtet wird.

Gemäß dem Beispiel in der Figur 22 definiert der Präsenzserver PS1, an dem die Kommunikationseinheit UE1 des Repräsentanten angekoppelt ist, weiterhin den Status Wert "offline". In diesem Zustand ist der Nutzer bzw. User überhaupt nicht zu erreichen, und alle Werte für Telefon, Video-Telefon etc. werden auf "Off", d.h. "Aus" gesetzt (z.B. <Audio-Calls>On</AudioCalls>).

Als dritter Status Wert wird gemäß diesem Beispiel ein Wert "on the Phone" definiert. In diesem Statuszustand ist der Nutzer bzw. dessen Terminal lediglich bereit, Nachrichten zu empfangen oder an einer Whiteboard -Sitzung teilzunehmen (<Messaging> und <Whiteboard> sind auf "On" gesetzt).

Die Kommunikationseinheit UE1 hat die Definitionen dieser Statuswerte vom ersten Präsenzserver PS1 heruntergeladen und gespeichert, nachdem sie sich bei diesem angemeldet hat. Weiterhin lädt die Präsenzinformations- Anwendung auf der Kommunikationseinheit UE1 entweder selber oder über eine andere Anwendung wie z.B. einen Browser die unter den Links angegebenen Bilder (Icons) vom ersten Präsenzserver oder von einem anderen Server herunter.

In der Figur 24 meldet sich nun eine zweite Kommunikationseinheit UE2 für den Präsenzinformationsservice eines zweiten Präsenzservers PS2 an, wobei ihr die Definitionen der von diesem Präsenzserver PS2 verwendeten Statuswerte zugesandt werden. Dieser Transfer der Statuswert-Definitionen des zweiten Präsenzservers PS2 an die Kommunikationseinheit UE2 ist in der Figur 24 mit einem Doppelpfeil HD2 angedeutet. Die Definitionen werden dann an die entsprechende Präsenzinformations-Anwendung weitergegeben, welche die Informationen speichert. Die Definitionen der Statuswerte des Präsenzservers PS2 sind in der Figur 23 beispielhaft dargestellt. Diese werden ebenfalls über einen global eindeutigen xmlns in Form einer URI, hier http://ps2.example.com/presence/ext, identifiziert. Der zweite Präsenzserver PS2 hat in diesem Ausführungsbeispiel ebenfalls drei Status-Werte definiert. Der Statuswert mit dem Namen "connected" entspricht dem von ersten Präsenzserver PS1 definierten Statuswert mit dem Namen "online". Der Statuswert "offline" existiert in beiden Definitionen- Lexika des ersten und zweiten Präsenzservers. Auch die Beschreibung der Erreichbarkeit, dass heißt die Werte der einzelnen Parameter für Telefon, Video-Telefon etc. sind für die beiden Statuswert- Definitionen "online"/"connected" und "offline" gleichgesetzt. Der Statuswert "chat only" definiert, dass in diesem Zustand lediglich Chat- Sitzungen möglich sind. Ansonsten ist der Nutzer in diesem Zustand nicht erreichbar.

Nun soll sich der Nutzer der zweiten Kommunikationseinheit UE2 über seine Präsenzanwendung zu den Präsenzinformationen des Nutzers der ersten Kommunikationseinheit UE1 bei dessen erstem Präsenzserver PS1 einschreiben. Der erste Präsenzserver PS1 sendet dabei während der Einschreibungsphase die Definitionen gemäß Figur 22 an das Terminal UE2 des zweiten Nutzers bzw. Beobachters, welches die Daten an seine Präsenzinformationsanwendung weiterleitet. Dieser "Überkreuz"-Austausch der Statuswert-Definitionen vom ersten zum zweiten Präsenzserver ist in der Figur 24 durch den Doppelpfeil HD21 angedeutet. Die zweite Kommunikationseinheit UE2, die an den zweiten Präsenzserver PS2 angekoppelt ist, ruft also auch Definitionen zu den Präsenzstatuswerten ab, die auf dem ersten Präsenzserver PS1 spezifisch für die daran angekoppelte, Präsenzinformationen bereitstellende, erste Kommunikationseinheit UE1 definiert sind.

Daraufhin vergleicht die zweite Kommunikationseinheit UE2 die Statuswert-Definitionen der beiden Präsenzserver PS1, PS2. Dabei stellt sie im vorliegenden Ausführungsbeispiel fest, dass die Statuswerte mit dem Namen "offline" sowohl vom Namen her als auch von der Definition bzgl. der Beschreibung des Terminalverhaltens her vollständig übereinstimmen. Die zweite Kommunikationseinheit UE2 verwirft zweckmäßigerweise die vom ersten Präsenzserver PS1 empfangene Definition des Statuswertes "offline", da diese redundant vorhanden ist. Weiterhin stellt die zweite Kommunikationseinheit UE2 fest, dass die Definitionen des vom ersten Präsenzserver PS1 definierten Statuswertes "online" und des vom zweiten Präsenzserver PS2 definierten Wertes "connected" bzgl. des Terminalverhaltens übereinstimmen. Sie verwirft daher ebenfalls die Definition des Statuswertes "connected", speichert jedoch eine Abbildung des Namens "online" auf den Namen "connected", so dass sie weiß, wenn sie eine Präsenzinformation über die erste Kommunikationseinheit UE1 vom ersten Server PS1 erhält und der Statuswert auf "online" gesetzt ist, dass dies ihrem spezifischen Statuswert "connected" entspricht. Dadurch ist es nicht erforderlich, eine weitere Definition des Statuswertes "online" abzuspeichern und die Darstellung auf dem Display für den Nutzer zu verändern.

Die Definition des Statuswertes "on the phone ", welcher vom zweiten Server PS2 empfangen wurde, entspricht weder bzgl. des Namens noch bzgl. der Beschreibung des Terminalverhaltens einem der Statuswerte, wie sie vom zweiten Server PS2 ursprünglich verwendet werden. Die zweite Kommunikationseinheit UE2 kann nun diesen Statuswert zu ihren bereits existierenden Statuswerten hinzuzufügen und ein neues Icon zur Beschreibung des Status- Zustandes der ersten Kommunikationseinheit UE1 auf deren Display zeigen. Dies kann ggf. auch erst nach Bestätigung des Nutzers der zweiten Kommunikationseinheit erfolgen. Alternativ kann die zweite Kommunikationseinheit UE2 entscheiden, die Definition des Statuswertes "on the phone" komplett zu verwerfen oder sie auf eine ähnlichen, bereits existierenden Statuswert abzubilden. Im vorliegenden Ausführungsbeispiel speichert die zweite Kommunikationseinheit UE2 den neuen, ihr bisher unbekannten Statuswert "on the phone" und dessen Definition des ersten Terminals UE1 ab. Nach diesem Abgleich der Statuswert - Definitionen zwischen dem ersten Server PS1 und dem zweiten Server PS2 in der zweiten Kommunikationseinheit UE2, sendet der erste Präsenzserver PS1 erst nun eine erste Präsenzinformation der ersten Kommunikationseinheit an das zweite Terminal UE2. Diese Präsenzinformation ist in der Figur 25 dargestellt. Der erste Präsenzserver PS1 teilt damit dem Nutzer der beobachtenden zweiten Kommunikationseinheit UE2 mit, dass sich der Nutzer (user2@ps1.example.com) der ersten Kommunikationseinheit UE1 in dem Zustand "on the phone" befindet. Anhand der Identität der Erweiterung, welche im "type" Parameter des <Value> Elements übertragen wird, vergleicht die Anwendung in der zweiten Kommunikationseinheit UE2 die Erweiterung mit den vom ersten und zweiten Präsenzserver PS1, PS2 empfangenen Definitionen von Statuswerten und erkennt daran, welche Erweiterung gemeint ist. Der "type" Parameter in diesem Beispiel entspricht dabei dem xmlns, der in der Definition enthalten war, welche vom ersten Server PS1 an die zweite Kommunikationseinheit UE2 versandt wurde. Diese weiß somit, dass der Statuswert "on the phone" über diese Definition beschrieben ist, und erkennt daraus, dass der Nutzer der ersten Kommunikationseinheit UE1 lediglich Mitteilungen per E-mail empfangen kann, weil er selbst seine Telefonleitung gerade für ein Gespräch nutzt. Würde die zweite Kommunikationseinheit UE2 nun versuchen, die erste Kommunikationseinheit UE1 über Telefon zu erreichen, könnte diese der zweiten Kommunikationseinheit UE2 mitteilen, dass sie momentan nur über E-mail erreichbar ist.

Zusammenfassend betrachtet sind somit insbesondere folgende Maßnahmen vorteilhaft:
- Definition mindestens eines Statuswertes durch Beschreibung des Verhaltens von Terminal-Funktionalitäten und Zuweisung eines Präsenzstatuswert- Namens zum beschriebenen Verhalten in einem festgelegten Format;
- die jeweilige Definition kann dabei folgende Informationen enthalten:
   - eine Identität des Präsenzservers, dem die Definitionen der Statuswerte zugeordnet sind, um zu ermöglichen, die Definitionen unterschiedlicher Präsenzserver auseinander zu halten. Wenn ein Beobachter bereits die Definitionen eines bestimmten Präsenzservers gespeichert hat, ist es nicht erforderlich, diese dann noch einmal an den Beobachter zu senden, wenn er den entsprechenden Präsenzserver erneut kontaktiert;
   - ein eindeutiger xmlns, der die Definition global eindeutig identifiziert und der später in der eigentlichen Präsenzinformation verwendet wird, um die Erweiterung der Statuswerte zu identifizieren;
   - eine Versions-Information über die Definition der Statuswerte, so dass ein Beobachter oder auch Repräsentant erkennen kann, wenn sich etwas an den Definitionen der Statusinformationen geändert hat;
   - eine textuelle Beschreibung pro Status-Wert, der dem user dargestellt werden kann;
   - ein Name pro Status Wert, der den Statuswert innerhalb der Definitionen eines Präsenzservers identifiziert;
   - ein Icon (kleines Bildchen) oder einen Link, wo man das Icon finden kann (pro Status Wert), welches auf dem Display eines Terminals dargestellt werden kann;
   - Beschreibung des Terminal-Verhaltens pro Statuswert;
- Das Verhalten eines Terminals wird für jeden Statuswert vorzugsweise mindestens bzgl. der folgenden Funktionalitäten beschrieben:
   - Verfügbarkeit für Sprachanrufe:
      Wenn der Parameter dafür gesetzt ist, nimmt das Terminal ankommende Sprach-Anrufe nicht an. Außerdem lässt das Terminal keine abgehenden Sprach-Anrufe zu.
   - Verfügbarkeit für Video-Anrufe:
      Wenn der Parameter dafür gesetzt ist, nimmt das Terminal ankommende Video- Anrufe nicht an. Außerdem lässt das Terminal keine abgehenden Sprach-Anrufe zu.
   - Verfügbarkeit für Chat:
      Wenn der Parameter dafür gesetzt ist, lehnt das Terminal Einladungen zu Chat Sitzungen ab. Weiterhin lässt das Terminal keine user initierte Chat-Teilnahme zu.
   - Verfügbarkeit für Nachrichten (SMS/MMS):
      Wenn der Paramtere dafür gesetzt ist, lässt das Terminal keine ankommenden Nachrichten (SMS/MMS etc.) zu. Weiterhin sendet das Terminal keine Nachrichten.
   - Verfügbarkeit für Spiele:
      Wenn der Parameter dafür gesetzt ist, nimmt das Terminal keine Einladung zu Spiele- Sitzungen an und sendet selber auch keine Einladungen.
   - Whiteboard application:
      Wenn der Parameter dafür gesetzt ist, nimmt das Terminal keine Einladung zu einer Whiteboard Session an und initiiert auch selber keine Whiteboard Session.
   - Erweiterungsmechanismus um zukünftige Funtionalitäten einbinden zu können.
   - Benachrichtigungs-Funktionen bzgl. jeder der oben genannten Funktionen, falls die entsprechende Funktion aktiviert ist, d.h. Informationen darüber, ob der Nutzer darüber informiert wird, wenn eine neue Nachricht eintrifft oder ein Anruf eingeht. Diese Benachrichtigungs-Funktion kann z.B. durch Töne oder erscheinende Fenster realisiert werden.
- Austausch der Beschreibung bzw. Definitionen für Präsenzinformationen zwischen Präsenzserver und dem jeweiligen Beobachter:
   Wenn ein Beobachter sich zu den Präsenzinformationen eines Repräsentanten einschreibt, welcher zu einem anderem Service Anbieter als der Beobachter selber eingeschrieben ist, werden vorab die Definitionen der Statuswerte des Repräsentanten von dessen zugeordnetem Präsenzserver an den Präsenzserver des Beobachters gesendet, so dass dieser anschließend die übermittelten Statuswerte des Repräsentanten interpretieren kann.
- Austausch der Beschreibung zwischen Präsenzserver und Presentity:
   Wenn ein Repräsentant sich an einem Präsenzserver bzw. einem Service Anbieter anmeldet, werden die Definitionen der Statuswerte an den neuen Repräsentanten gesendet, so dass dieser anschließend die Statuswerte interpretieren, und der Repräsentant seinen Status entsprechend setzen kann.
   - Erhält ein Beobachter nach der Einschreibung zu den Präsenzinformationen eines Repräsentanten Definitionen von Status-Werten zugesandt, so vergleicht die Kommunikationseinheit des jeweiligen Beobachters die Definitionen der empfangenen Statuswerte mit den Definitionen der Statuswerte seines eigenen Präsenzservers.
      - Sie bildet bei Übereinstimmungen entweder
         - den Präsenzstatuswert des externen, fremden Präsenzservers auf den entsprechenden Statuswert des eigenen Präsenzservers ab und speichert die Abbildung der Statuswerte aufeinander, oder
         - fügt alternativ den neuen Statuswert in ihre bisherige Statusliste ein (eventuell nach Rückfrage mit dem user), speichert diesen und die Beschreibung des Statuswertes und die Identität des fremden Präsenzservers sowie die Version der Beschreibung oder verweist auf die bereits bestehende Beschreibung.
      - Wenn die Beschreibung eines Statuswertes des externen Präsenzservers mit keinem der vom eigenen Präsenzserver vorgegebenen Status Wert übereinstimmt, kann der Beobachter entweder:
         - den Präsenzstatuswert des externen Präsenzservers in seine Liste der Statuswerte aufnehmen, oder
         - den Status Wert auf den am ehesten dem Statuswert entsprechenden Wert des eigenen Servers abbilden und die Abbildung der Status Werte speichern, oder
         - den Statuswert verwerfen und alle empfangen Präsenz-Informationen, welche den Statuswert verwenden, ignorieren.

Während der Nachteil bestehender Präsenzinformationssysteme ist, dass ein Beobachter lediglich Präsenzinformationen über Repräsentanten bekommen kann, die sich beim selben Dienstanbieter wie er selbst eingeschrieben haben, ermöglicht das erfinderische Abgleichprinzip die providerübergreifende, kompatible Signalisierung von Präsenzinformationsdaten zwischen der Kommunikationseinheit des jeweiligen Repräsentanten und ein oder mehreren Kommunikationseinheiten von Beobachtern, die die Präsenzinformationen dieses Repräsentanten empfangen oder abrufen. Selbst wenn die Kommunikationseinheit des Repräsentanten an einen ersten Präsenzserver eines ersten Providers angekoppelt ist, und die Kommunikationseinheit des jeweiligen Beobachters mit einem zweiten, vom ersten verschiedenen Präsenzserver eines zweiten Providers, wird durch den wechselseitigen Vorab-Abgleich der verwendeten Definitionen für die Präsenzinformations-Statuswerte und deren Parameter auf dem ersten und zweiten Präsenzserver eine Interpretation der Präsenzinformationen für die angekoppelten Kommunikationseinheiten des Repräsentanten und der Beobachter möglich. Denn nunmehr werden die providerspezifischen, proprietären Statuswerte, welcher jeder Anbieter eigens für seinen Service verwendet, auch für die Anwendungen anderer Anbieter interpretierbar, da die Definitionen für die Stauswerte und deren Parameter zur jeweiligen Kommunikationseinheit mittransferiert werden. Neben den einzigen beiden Statuswerten, die momentan von allen Anbietern verstanden werden - das sind die beiden Zustände "open" (offen=erreichbar) und "closed" (geschlossen=unerreichbar), was einem "online"/"offline" entspricht - können somit eine Vielzahl von weiteren Statuswerten und zugehörige Parameter auf dem jeweiligen Präsenzserver und/oder in der Kommunikationseinheit des jeweiligen Repräsentanten und/oder Beobachters frei festgelegt werden, d.h. der Fundus von Statuswert-Definitionen und deren Parameter erweitert werden. Da die Definition für einen solchen Statuswert stets vorab zwischen dem Präsenzserver, der der Kommunikationseinheit des jeweiligen Repräsentanten zugeordnet ist, und dem Präsenzserver, der der Kommunikationseinheit des jeweiligen Beobachters zugeordnet ist, ausgetauscht und ein Abgleich in der internen Datenbasis des jeweiligen Präsenzservers hinsichtlich dieser Definition durchgeführt wird, wird die Definition auf dem jeweiligen Präsenzserver und damit auch den daran angekoppelten Kommunikationseinheiten bekannt gemacht und damit für diese auswertbar. Werden nachfolgend Präsenzinformationen von der Kommunikationseinheit des am ersten Präsenzserver angekoppelten Repräsentanten auf diesem ersten Präsenzserver zum Abruf oder Weiterleiten an die Kommunikationseinheiten von ein oder mehreren Beobachtern bereitgestellt, die an dem zweiten Präsenzserver angekoppelt sind, so werden diese nunmehr für die beobachtenden Kommunikationseinheiten aufgrund der vorab abgeglichenen Definitionen auswertbar und verständlich. Dieses Abgleichprinzip lässt sich auch auf Kommunikationsverkettungen zwischen mehr als zwei Präsenzservern in analoger Weise erweitern.

Es können auf diese Weise individuell Erweiterungen dieser Status-Werte definiert werden. Dies können zum Beispiel Informationen sein wie "nur im chat erreichbar" oder "komme gleich wieder" bei dem der Repräsentant zwar Nachrichten (wie z.B. SMS) empfangen, aber keine Telefonanrufe annehmen kann. Durch den Definitionen-Abgleich hat die Kommunikationseinheit des jeweiligen Beobachters, welcher sich z.B. über den Erreichbarkeits-Zustand des Repräsentanten informieren möchte, d.h. wie und ob der Repräsentant erreichbar ist, stets Kenntnis über die Bedeutungen dieser individuellen Erweiterungen. Jedem Präsenzservice- Anbieter ist es somit ermöglicht, seine eigenen Statuswerte zu definieren, und es anderen Beobachtern, welche zunächst keine Kenntnisse über diese Erweiterungen und deren Bedeutung haben, zu ermöglichen, die Bedeutung dieser zunächst individuell festgelegten Statuswerte zu lernen. Außerdem ermöglicht dieses Abgleichprinzip die unabhängige Entwicklung von Präsenzinformations-Applikationen für jeden Dienst-Anbieter, da die individuellen Definitionen im Kommunikationsnetz verteilt und damit netzweit verfügbar werden, wodurch automatisch Kompatibilität sichergestellt ist.

## Patentansprüche

1. Verfahren zum Bereitstellen mindestens eines Präsenzinformationsprofils (PI*) aus einer Vielzahl von Präsenzinformationen mindestens einer Kommunikationseinheit (RP1) auf mindestens einem Präsenzserver (PS1) eines Kommunikationsnetzes (CN), von dem aus dieses Präsenzinformationsprofil (PI) für eine oder mehrere andere Kommunikationseinheiten (WA1 mit WAn) abruf- und/oder weiterleitbar ist, indem von der jeweiligen, Präsenzinformationen verfügbar machenden Kommunikationseinheit (RP1) an den Präsenzserver (PS1) zum dortigen Bereitstellen ihres Präsenzinformationsprofils (PI*) mindestens ein Steuersignal (CS1) gesendet wird, das von dieser Kommunikationseinheit (RP1) selbst aus einer oder mehreren expliziten Anweisungen eines netzeinheitlich festgelegten Anweisungssatzes (AS1) sowie aus einem oder mehreren Parametern (PA1 mit PA4) eines zugehörigen, netzeinheitlich festgelegten Präsenzinformations-Parametersatzes (PR1) generiert wird,
**dadurch gekennzeichnet,**
**dass** in den Präsenzinformations-Parametersatz (PR1) des jeweiligen Steuersignals (CS1) mindestens eine Liste (GL) von ein oder mehreren Gruppen (G1) von Kommunikationseinheiten (WA1 mit WAn) aufgenommen wird, für die die im Steuersignal (CS1) übermittelten Parameter (PA1 mit PA4) auf dem Präsenzserver (PS1) mittels der ein oder mehreren im Steuersignal (CS1) übermittelten Anweisungen gruppenspezifisch erstellt, geändert, und/oder gelöscht werden.

2. Verfahren nach Anspruch 1,
**dadurch gekennzeichnet,**
**dass** mit dem jeweiligen Steuersignal (CS1) lediglich solche Präsenzinformations-Parameter (PA1 mit PA4) zum Präsenzserver (PS1) mitübertragen werden, die zu aktualisieren sind.

3. Verfahren nach einem der vorhergehenden Ansprüche,
**dadurch gekennzeichnet,**
**dass** aufgrund des Anweisungssatzes (AS1) im jeweilig übermittelten Steuersignal (CS1) ein Bereitstellungsvorgang für das spezifische Präsenzinformationsprofil (PI) auf dem Präsenzserver (PS1) der dieses Steuersignal sendenden Kommunikationseinheit (RP1) gestartet wird.

4. Verfahren nach einem der vorhergehenden Ansprüche,
**dadurch gekennzeichnet,**
**dass** in das jeweilige Steuersignal (CS1) mindestens eine Angabe über die Identität (ID) der dieses Steuersignal sendenden Kommunikationseinheit (RP1) aufgenommen wird.

5. Verfahren nach einem der vorhergehenden Ansprüche,
**dadurch gekennzeichnet,**
**dass** in den Präsenzinformations-Parametersatz (PR1) des jeweiligen Steuersignals (CS1) mindestens eine Liste (GL) von Gruppenkategorien aufgenommen wird, welche diejenigen Gruppen von Kommunikationseinheiten (WA1 mit WAn) enthält, für die die im Steuersignal (CS1) übermittelten Parameter (PA1 mit PA4) auf dem Präsenzserver (PS1) gruppenspezifisch erstellt, geändert, und/oder gelöscht werden.

6. Verfahren nach einem der vorhergehenden Ansprüche,
**dadurch gekennzeichnet,**
**dass** in den Präsenzinformations-Parametersatz (PR1) des jeweiligen Steuersignals (CS1) mindestens eine Liste (SL) von Statusinformationen (ST, SW) über die Verfügbarkeit und/oder den Aufenthaltsort der das Steuersignal (CS1) sendenden Kommunikationseinheit (RP1) aufgenommen wird.

7. Verfahren nach einem der vorhergehenden Ansprüche,
**dadurch gekennzeichnet,**
**dass** in den Präsenzinformations-Parametersatz (PR1) des jeweiligen Steuersignals (CS1) die Kommunikationsart (PA1) und/oder die Kommunikationsadresse (PA2) der das Steuersignal sendenden Kommunikationseinheit (RP1) aufgenommen wird.

8. Verfahren nach einem der vorhergehenden Ansprüche,
**dadurch gekennzeichnet,**
**dass** von der Präsenzinformationen verfügbar machenden Kommunikationseinheit (RP1) mit dem jeweiligen Steuersignal (AF1) ein oder mehrere vollständige Tupel (TUP1, TUP2) zum Erstellen, Modifizieren, und/oder Löschen eines Teils oder der Gesamtheit ihres Präsenzinformationsprofils zum Präsenzserver (PS1) übertragen werden.

9. Verfahren nach Anspruch 8,
**dadurch gekennzeichnet,**
**dass** das jeweilige Tupel (TUP1, TUP2) aus einem Tupelnamen, ein oder mehreren Präsenzinformations-Parametern mit hinzuzufügenden, zu ändernden, und/oder zu löschenden Status-Werten, und/oder ein oder mehreren hinzuzufügenden, zu ändernden, und/oder zu löschenden Gruppenlisten von Kommunikationseinheiten zusammengesetzt wird.

10. Verfahren nach einem der vorhergehenden Ansprüche,
**dadurch gekennzeichnet,**
**dass** der netzeinheitlich festgelegte Anweisungssatz (AS1) und Präsenzinformations-Parametersatz (PR1) des jeweiligen Steuersignals (CS1) mit Hilfe eines SOAP-Protokolls (Simple Object Access Protocol) realisiert wird.

11. Verfahren nach einem der vorhergehenden Ansprüche,
**dadurch gekennzeichnet,**
**dass** der Anweisungssatz (AS1) und Präsenzinformations-Parametersatz (PR1) des jeweiligen Steuersignals (CS1) mit Hilfe des HTTP (Hypertext Transfer Protocol)- oder SIP (Session Initiation Protocol)-Protokolls zum Präsenzserver (PS1) transportiert wird.

12. Verfahren nach einem der vorhergehenden Ansprüche,
**dadurch gekennzeichnet,**
**dass** nach Ablauf des Bereitstellungsvorgangs für das spezifische Präsenzinformationsprofil (PI*) der jeweiligen Kommunikationseinheit (RP1) auf dem Präsenzserver (PS1) von diesem mindestens ein Antwortsignal (RS1) zu der die Präsenzinformationen verfügbar machenden Kommunikationseinheit (RP1) zurückgesandt wird.

13. Verfahren nach Anspruch 12,
**dadurch gekennzeichnet,**
**dass** in dem Antwortsignal (RS1) das Ergebnis des vom Steuersignal (CS1) initiierten Bereitstellungsvorgangs für das Präsenzinformationsprofil (PI*) der das Steuersignal (CS1) sendenden Kommunikationseinheit (RP1) und/oder etwaige Fehlerparameter über den Bereitstellungsvorgang übermittelt werden.

14. Verfahren nach einem der vorhergehenden Ansprüche,
**dadurch gekennzeichnet,**
**dass** für ein oder mehrere der an den jeweiligen Präsenzserver (PS1) ankoppelbaren Kommunikationseinheiten (RP1) Funkkommunikationsgeräte eines Funkkommunikationsnetzes verwendet werden.

15. Verfahren nach einem der vorhergehenden Ansprüche,
**dadurch gekennzeichnet,**
**dass** die jeweilige, Präsenzinformationen verfügbar machende Kommunikationseinheit (UE1) an mindestens einen ersten Präsenzserver (PS1) mit ersten Präsenzinformationsprofil-Definitionen, und die jeweilige, Präsenzinformationen abrufende Kommunikationseinheit (UE2) an mindestens einen zweiten Präsenzserver (PS2) mit zweiten Präsenzinformationsprofil-Definitionen angekoppelt wird, der vom ersten Präsenzserver (PS1) verschieden ist.

16. Verfahren nach Anspruch 15,
**dadurch gekennzeichnet,**
**dass** an die Präsenzinformationen abrufende Kommunikationseinheit (UE2) Präsenzinformationsprofil-Definitionen (HD21) desjenigen Präsenzservers (PS1) heruntergeladen werden, auf dem das Präsenzinformationsprofil (PI*) der Präsenzinformationen verfügbar machenden Kommunikationseinheit (UE1) gespeichert wird.

17. Verfahren nach Anspruch 16,
**dadurch gekennzeichnet,**
**dass** von der Präsenzinformationen abrufenden Kommunikationseinheit (UE2) die heruntergeladenen Präsenzinformationsprofil-Definitionen (HD21) der Präsenzinformationen verfügbar machenden Kommunikationseinheit (UE1) mit den Präsenzinformationsprofil-Definitionen (HD2) auf dem zugeordneten, eigenen Präsenzserver (PS2) abgeglichen werden.

18. Verfahren nach einem der Ansprüche 15 bis 17,
**dadurch gekennzeichnet,**
**dass** an die Präsenzinformationen verfügbar machenden Kommunikationseinheit (UE1) Präsenzinformationsprofil-Definitionen (HD12) desjenigen Präsenzservers (PS2) heruntergeladen werden, auf dem das Präsenzinformationsprofil der Präsenzinformationen abrufenden Kommunikationseinheit (UE2) gespeichert wird.

19. Verfahren nach Anspruch 18,
**dadurch gekennzeichnet,**
**dass** von der Präsenzinformationen verfügbar machenden Kommunikationseinheit (UE1) die heruntergeladenen Präsenzinformationsprofil-Definitionen (HD12) der Präsenzinformationen abrufenden Kommunikationseinheit (UE2) mit den Präsenzinformationsprofil-Definitionen (HD1) auf dem zugeordneten, eigenen Präsenzserver (PS1) abgeglichen werden.

20. Verfahren nach einem der vorhergehenden Ansprüche,
**dadurch gekennzeichnet,**
**dass** auf dem Präsenzserver (PS1) ein oder mehrere Gruppen (G1, G2) von Kommunikationseinheiten erstellt, modifiziert, und/oder gelöscht werden, indem mindestens ein Gruppenststeuersignal (RQ) von der Präsenzinformationen verfügbar machenden Kommunikationseinheit (RP1) an den zugeordneten Präsenzserver (PS1) übermittelt wird.

21. Verfahren nach Anspruch 20,
**dadurch gekennzeichnet,**
**dass** in das Gruppensteuersignal (RQ) mindestens eine Angabe über die Identität der dieses Gruppensteuersignal sendenden Kommunikationseinheit (RP1) aufgenommen wird.

22. Verfahren nach einem der Ansprüche 20 oder 21,
**dadurch gekennzeichnet,**
**dass** zum Erstellen der jeweiligen Gruppe (G1) in dem Gruppensteuersignal (RQ) ein Gruppenname, eine Gruppenkategorie, und mindestens eine Liste von Kommunikationseinheiten (WA1 - WAn) übermittelt werden, die dieser Gruppe (G1) angehören.

23. Verfahren nach einem der Ansprüche 20 bis 22,
**dadurch gekennzeichnet,**
**dass** zum Löschen der jeweiligen Gruppe (G1) im Gruppensteuersignal (RQ) der Gruppenname der zu löschenden Gruppe als Parameter an den zugeordneten Präsenzserver (PS1) übermittelt wird.

24. Verfahren nach einem der Ansprüche 20 bis 23,
**dadurch gekennzeichnet,**
**dass** zum Modifizieren der jeweiligen Gruppe (G1) im Gruppensteuersignal (RQ) der Gruppenname der zu modifizierenden Gruppe, ein gewünschter neuer Gruppenname, eine Gruppenkategorie, mindestens eine Liste von zu löschenden Kommunikationseinheiten, und/oder mindestens eine Liste von hinzuzufügenden Kommunikationseinheiten übermittelt werden.

25. Kommunikationseinheit (RP1) zur Durchführung des Verfahrens nach einem der Ansprüche 1 bis 24.

26. Kommunikationseinheit nach Anspruch 25,
**gekennzeichnet durch** den Einbau in einem Funkkommunikationsgerät.

27. Präsenzserver (PS1) zur Durchführung des Verfahrens nach einem der Ansprüche 1 bis 24.

28. Kommunikationsnetz (CN) zur Durchführung des Verfahrens nach einem der Ansprüche 1 bis 24.

## Claims

1. Method for providing at least one presence information profile (PI*) from a multiplicity of presence information elements of at least one communications unit (RP1) on at least one presence server (PS1) of a communications network (CN), from which this presence information profile (PI) can be retrieved and/or forwarded for one or more other communications units (WA1 with WAn) in that at least one control signal (CS1) is transmitted from the respective communications unit (RP1) which provides presence information to the presence server (PS1) for the provision therein of its presence information profile (PI*), said control signal being generated by this communications unit (RP1) itself from one or more explicit instructions of a set of instructions (AS1) defined as standard instructions for the network, and from one or more parameters (PA1 with PA4) of an associated set of presence information parameters (PR1) defined as standard parameters for the network,
**characterized in that**
at least one list (GL) of one or more groups (G1) of communications units (WA1 with WAn) is incorporated into the set of presence information parameters (PR1) of the respective control signal (CS1), for which the parameters (PA1 with PA4) transferred in the control signal (CS1) are created, modified and/or deleted in a group-specific manner on the presence server (PS1) by means of the one or more instructions transferred in the control signal (CS1).

2. Method according to Claim 1,
**characterized in that**
only those presence information parameters (PA1 with PA4) which are to be updated are transmitted to the presence server (PS1) along with the respective control signal (CS1).

3. Method according to one of the preceding claims,
**characterized in that**
a provision process is started up on the basis of the set of instructions (AS1) in the respective transmitted control signal (CS1) for the specific presence information profile (PI) on the presence server (PS1) of the communications unit (RP1) transmitting this control signal.

4. Method according to one of the preceding claims,
**characterized in that**
at least one indication of the identity (ID) of the communications unit (RP1) transmitting this control signal is incorporated into the respective control signal (CS1).

5. Method according to one of the preceding claims,
**characterized in that**
at least one list (GL) of group categories is incorporated into the set of presence information parameters (PR1) of the respective control signal (CS1), said list containing those groups of communications units (WA1 with WAn) for which the parameters (PA1 with PA4) transferred in the control signal (CS1) are created, modified and/or deleted in a group-specific manner on the presence server (PS1).

6. Method according to one of the preceding claims,
**characterized in that**
at least one list (SL) of status information elements (ST, SW) relating to the availability and/or the location of the communications unit (RP1) transmitting the control signal (CS1) is incorporated into the set of presence information parameters (PR1) of the respective control signal (CS1).

7. Method according to one of the preceding claims,
**characterized in that**
the communications type (PA1) and/or the communications address (PA2) of the communications unit (RP1) transmitting the control signal is incorporated into the set of presence information parameters (PR1) of the respective control signal (CS1).

8. Method according to one of the preceding claims,
**characterized in that**
one or more complete tuples (TUP1, TUP2) are transmitted from the communications unit (RP1) which makes presence information available with the respective control signal (AF1) to the presence server (PS1) to create, modify and/or delete a part or all of its presence information profile.

9. Method according to Claim 8,
**characterized in that**
the respective tuple (TUP1, TUP2) is composed of a tuple name, one or more presence information parameters with status values which are to be added, modified and/or deleted, and/or one or more group lists of communications units which are to be added, modified and/or deleted.

10. Method according to one of the preceding claims,
**characterized in that**
the set of instructions (AS1) defined as standard instructions for the network and the set of presence information parameters (PR1) of the respective control signal (CS1) are implemented with the aid of a SOAP protocol (Simple Object Access Protocol).

11. Method according to one of the preceding claims,
**characterized in that**
the set of instructions (AS1) and the set of presence information parameters (PR1) of the respective control signal (CS1) are transported to the presence server (PS1) with the aid of the HTTP protocol (Hypertext Transfer Protocol) or SIP protocol (Session Initiation Protocol).

12. Method according to one of the preceding claims,
**characterized in that**,
at the end of the provision process for the specific presence information profile (PI*) of the respective communications unit (RP1) on the presence server (PS1), a response signal (RS1) is sent back from said presence server to the communications unit (RP1) which makes the presence information available.

13. Method according to Claim 12,
**characterized in that**
the result of the provision process initiated by the control signal (CS1) for the presence information profile (PI*) of the communications unit (RP1) which transmits the control signal (CS1) and/or any error parameters relating to the provision process are transferred in the response signal (RS1).

14. Method according to one of the preceding claims,
**characterized in that**
radiocommunications devices of a radiocommunications network are used for one or more of the communications units (RP1) which can be connected to the respective presence server (PS1).

15. Method according to one of the preceding claims,
**characterized in that**
the respective communications unit (UE1) which makes presence information available is connected to at least a first presence server (PS1) with first presence information profile definitions, and the respective communications unit (UE2) which retrieves presence information is connected to at least a second presence server (PS2) with second presence information profile definitions which is different from the first presence server (PS1).

16. Method according to Claim 15,
**characterized in that**
presence information profile definitions (HD21) of the presence server (PS1) on which the presence information profile (PI*) of the communications unit (UE1) which makes the presence information available are downloaded onto the communications unit (UE2) which retrieves presence information.

17. Method according to Claim 16,
**characterized in that**
the downloaded presence information profile definitions (HD21) of the communications unit (UE1) which makes presence information available are synchronized by the communications unit (UE2) which retrieves presence information with the presence information profile definitions (HD2) on the assigned, dedicated presence server (PS2).

18. Method according to one of Claims 15 to 17,
**characterized in that**
presence information profile definitions (HD12) of the presence server (PS2) on which the presence information profile of the communications unit (UE2) which retrieves presence information is stored are downloaded onto the communications unit (UE1) which makes presence information available.

19. Method according to Claim 18,
**characterized in that**
the downloaded presence information profile definitions (HD12) of the communications unit (UE2) which retrieves presence information are synchronized by the communications unit (UE1) which makes presence information available with the presence information profile definitions (HD1) on the assigned, dedicated presence server (PS1).

20. Method according to one of the preceding claims,
**characterized in that**
one or more groups (G1, G2) of communications units are created, modified and/or deleted on the presence server (PS1) in that at least one group control signal (RQ) is transferred from the communications unit (RP1) which makes presence information available to the assigned presence server (PS1).

21. Method according to Claim 20,
**characterized in that**
at least one indication of the identity of the communications unit (RP1) which transmits the group control signal (RQ) is incorporated into this group control signal.

22. Method according to one of Claims 20 or 21,
**characterized in that**,
in order to create the respective group (G1), a group name, group category and at least one list of communications units (WA1 - WAn) belonging to this group (G1) are transferred in the group control signal (RQ).

23. Method according to one of Claims 20 to 22,
**characterized in that**,
in order to delete the respective group (G1), the group name of the group to be deleted is transferred as a parameter in the group control signal (RQ) to the assigned presence server (PS1).

24. Method according to one of Claims 20 to 23,
**characterized in that**,
in order to modify the respective group (G1), the group name of the group to be modified, a required new group name, a group category, at least one list of communications units to be deleted, and/or at least one list of communications units to be added are transferred in the group control signal (RQ).

25. Communications unit (RP1) to carry out the method according to one of Claims 1 to 24.

26. Communications unit according to Claim 25,
**characterized by** the installation in a radiocommunications device.

27. Presence server (PS1) to carry out the method according to one of Claims 1 to 24.

28. Communications network (CN) to carry out the method according to one of Claims 1 to 24.

## Revendications

1. Procédé de préparation d'au moins un profil d'information de présence (PI*) à partir d'une pluralité d'informations de présence d'au moins une unité de communication (RP1) sur au moins un serveur de présence (PS1) d'un réseau de communication (CN), depuis lequel l'on peut demander et/ou transmettre ce profil d'information de présence (PI) pour une ou plusieurs autres unités de communication (WA1 à WAn), procédé dans lequel l'unité de communication respective (RP1) rendant disponible des informations de présence envoie au moins un signal de commande (CS1) au serveur de présence (PS1) afin d'y préparer son profil d'information de présence (PI*), lequel signal de commande est généré par cette unité de communication (RP1) elle-même à partir d'une ou plusieurs indications explicites d'un ensemble d'indications (AS1) déterminé de façon unique pour le réseau ainsi qu'à partir d'un ou plusieurs paramètres (PA1 à PA4) d'un ensemble de paramètres d'information de présence (PR1) associé et déterminé de façon uniforme pour le réseau,
**caractérisé en ce que**
au moins une liste (GL) d'un ou plusieurs groupes (G1) d'unités de communication (WA1 à WAn) est enregistré dans l'ensemble de paramètres d'information de présence (PR1) du signal de commande respectif (CS1), liste pour laquelle les paramètres (PA1 à PA4), transmis dans le signal de commande (CS1), sont établis, modifiés et/ou effacés de façon spécifique aux groupes sur le serveur de présence (PS1) au moyen de l'une ou de plusieurs des indications transmises dans le signal de commande (CS1).

2. Procédé selon la revendication 1, **caractérisé en ce que** seuls les paramètres d'information de présence (PA1 à PA4), qui doivent être actualisés, sont transmis conjointement avec le signal de commande respective (CSA1).

3. Procédé selon l'une des revendications précédentes, **caractérisé en ce que** sur la base de l'ensemble d'indications (AS1) dans le signal de commande (CS1) transmis respectivement, un processus de préparation du profil d'information de présence spécifique (PI) est lancé sur le serveur de présence (PS1) de l'unité de communication (RP1), envoyant ce signal de commande.

4. Procédé selon l'une des revendications précédent, **caractérisé en ce que** au moins une donnée sur l'identité (ID) de l'unité de communication (RP1) envoyant le signal de commande est enregistrée dans ce signal de commande respectif (CS1).

5. Procédé selon l'une des revendications précédentes, **caractérisé en ce que** au moins une liste (GL) de catégories de groupes est enregistrée dans l'ensemble de paramètres d'information de présence (PR1) du signal de commande respectif (CS1), laquelle liste contient les groupes d'unités de communication (WA1 à WAn) pour lesquels les paramètres (PA1 à Pan) transmis dans le signal de commande (CS1) sont établis, modifiés et/ou effacés de façon spécifique aux groupes sur le serveur de présence.

6. Procédé selon l'une des revendications précédentes, **caractérisé en ce que** au moins une liste (SL) d'informations d'état (ST, SW) sur la disponibilité et/ou le lieu de séjour de l'unité de communication envoyant le signal de commande (CS1) est enregistrée dans l'ensemble de paramètres d'information de présence (PR1) du signal de commande respectif (CS1).

7. Procédé selon l'une des revendications précédentes, **caractérisé en ce que** le type de communication (PA1) et/ou l'adresse communication (PA2) de l'unité de communication (RP1) envoyant le signal de commande est enregistré dans l'ensemble de paramètres d'information de présence (PR1) du signal de commande respectif (CS1).

8. Procédé selon l'une des revendications précédentes, **caractérisé en ce que** un ou plusieurs Uplets complets (TUP1, TUP2) sont transmis au serveur de présence (PS1) par l'unité de communication (RP1), rendant disponible les informations de présence, avec le signal de commande respectif (AF1) afin d'établir, de modifier et/ou d'effacer une partie ou la totalité de son profil d'information de présence.

9. Procédé selon la revendication 8, **caractérisé en ce que** le Uplet respectif (TUP1, TUP2) est constitué d'un nom de Uplet, d'un ou plusieurs paramètres d'information de présence comportant des valeurs d'état à ajouter, modifier et/ou effacer, et d'une ou de plusieurs liste de groupe d'unités de communication à ajouter, modifier et/ou effacer.

10. Procédé selon l'une des revendications précédentes, **caractérisé en ce que** l'ensemble d'indications (AS1) déterminé de façon unique au réseau et l'ensemble de paramètres d'information de présence (PR1) du signal de commande respectif (CS1) sont réalisés avec un protocole SOAP (Simple Object Access Protocol).

11. Procédé selon l'une des revendications précédentes, **caractérisé en ce que** l'ensemble d'indications (AS1) et l'ensemble de paramètres d'information de présence (PR1) du signal de commande respectif (CS1) est transporté vers le serveur de présence (PS1) à l'aide du protocole http (Hypertext Transfer Protocol) du protocole SIP (Session Initiation Protocol).

12. Procédé selon l'une des revendications précédentes, **caractérisé en ce que**, à la fin du processus de préparation du profil d'information de présence spécifique (PI*) de l'unité de communication respective (RPI) sur le serveur de présence (PS1), au moins un signal de réponse (RS1) est renvoyé par ce serveur de présence à l'unité de communication (RP1) rendant disponible les informations de présence.

13. Procédé selon la revendication 12, **caractérisé en ce que** le résultat du processus, amorcé par le signal de commande, de préparation du profil d'information de présence (PI*) de l'unité de communication (RP1) envoyant le signal de commande et/ou d'autres paramètres d'erreur relatifs au processus de préparation sont transmis dans le signal de réponse (RS1).

14. Procédé selon l'une des revendications précédentes, **caractérisé en ce que** des appareils de communication radioélectriques d'un réseau de communication radioélectrique sont utilisés pour une ou plusieurs des unités de communication (RP1) pouvant être couplées au serveur de présence respectif (PS1).

15. Procédé selon l'une des revendications précédentes, **caractérisé en ce que** l'unité de communication respective (UE1) rendant disponibles des informations de présence est couplée à au moins un premier serveur de présence (PS1) comportant des premières définitions de profil d'information de présence, et l'unité de communication respective (UE2) demandant des informations de présence est couplée à au moins un deuxième serveur de présence (PS2) comportant des deuxièmes définitions de profil d'information de présence, le deuxième serveur de présence (PS2) étant différent du premier serveur de présence (PS1).

16. Procédé selon la revendication 15, **caractérisé en ce que** des définitions de profil d'information de présence (HD21) du serveur de présence (PS1), sur lequel est mémorisé le profil information de présence (PI*) de l'unité de communication (UE1) rendant disponibles des informations de présence, sont téléchargées sur l'unité de communication (UE2) demandant des informations de présence.

17. Procédé selon la revendication 16, **caractérisé en ce que** les définitions de profil d'information de présence téléchargées (HD21) de l'unité de communication (UE1) délivrant des informations de présence sont adaptées, par l'unité de communication (UE2) demandant des informations de présence, aux définitions de profil d'information de présence (HD2) sur son serveur de présence associé (PS2).

18. Procédé selon l'une des revendications 15 à 17, **caractérisé en ce que** des définitions de profil d'information de présence (HD12) du serveur de présence (PS2), sur lequel est mémorisé le profil d'information de présence de l'unité de communication (UE2) demandant des informations de présence, sont téléchargées dans l'unité de communication (UE1) rendant disponibles des informations de présence.

19. Procédé selon la revendication 18, **caractérisé en ce que** les définitions de profil d'information de présence téléchargées (HD12) de l'unité de communication (UE2) demandant des informations de présence sont adaptées, par l'unité de communication (UE1) rendant disponibles des informations de présence, aux définitions de profil d'information de présence (HD1) sur son serveur de présence associé (PS1).

20. Procédé selon l'une des revendications précédentes, **caractérisé en ce qu'**un ou plusieurs groupes (G1, G2) d'unités de communication sont établis, modifiés et/ou effacés sur le serveur de présence (PS1) en transmettant au moins un signal de commande de groupe (RQ) de l'unité de communication (RP1), rendant disponibles des informations de présence, au serveur de présence associé (PS1).

21. Procédé selon la revendication 20, **caractérisé en ce que** au moins une donnée relative à l'identité de l'unité de communication (RP1), envoyant le signal de commande de groupe, est enregistrée dans ce signal de commande de groupe (RQ).

22. Procédé selon l'une des revendications 20 ou 21, **caractérisé en ce que**, pour établir le groupe respectif (G1), un nom de groupe, une catégorie de groupe, et au moins une liste d'unités de communication (WA1 à WAn), qui appartiennent à ce groupe (G1), sont transmis dans le signal de commande de groupe (RQ).

23. Procédé selon l'une des revendications 20 à 22, **caractérisé en ce que**, pour effacer le groupe respectif (G1), le nom de groupe du groupe à effacer est transmis comme paramètre dans le signal de commande de groupe (RQ) au serveur de présence associé (PS1).

24. Procédé selon l'une des revendications 20 à 23, **caractérisé en ce que**, pour modifier le groupe respectif (G1), le nom de groupe du groupe à modifier, un nouveau nom de groupe souhaité, une catégorie de groupe, au moins une liste d'unités de communication à effacer, et/ou au moins une liste d'unités de communication à ajouter sont transmis dans le signal de commande de groupe (RQ).

25. Unité de communication (RP1) destinée à mettre en oeuvre le procédé selon l'une des revendications 1 à 24.

26. Unité de communication selon la revendication 25, **caractérisée en ce qu'**elle est incorporée dans un appareil de communication radioélectrique.

27. Serveur de présence (PS1) destiné à mettre en oeuvre le procédé selon l'une des revendications 1 à 24.

28. Réseau de communication (CN) destiné à mettre en oeuvre le procédé selon l'une des revendications 1 à 24.
